(19) Europäisches Patentamt
European Patent Office
Office européen des brevets

(11) **EP 4 159 041 A1**

(12) **EUROPEAN PATENT APPLICATION**
published in accordance with Art. 153(4) EPC

(43) Date of publication:
**05.04.2023 Bulletin 2023/14**

(21) Application number: **21818714.4**

(22) Date of filing: **28.05.2021**

(51) International Patent Classification (IPC):
*A22C 17/00* (2006.01)       *B26D 3/28* (2006.01)
*B26D 7/32* (2006.01)        *B65B 5/06* (2006.01)
*B65G 47/30* (2006.01)       *B65G 47/34* (2006.01)
*B65G 47/53* (2006.01)

(52) Cooperative Patent Classification (CPC):
**A22C 17/00; B26D 3/28; B26D 7/32; B65B 5/06;
B65G 47/30; B65G 47/34; B65G 47/53**

(86) International application number:
**PCT/JP2021/020329**

(87) International publication number:
**WO 2021/246300 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2020   JP 2020096421
22.06.2020   JP 2020107336**

(71) Applicant: **Nippon Career Industry Co., Ltd.
Matsuyama-shi, Ehime 791-8043 (JP)**

(72) Inventors:
• **OCHI Hitoshi**
  **Matsuyama-shi, Ehime 791-8043 (JP)**
• **ASAI Yuji**
  **Matsuyama-shi, Ehime 791-8043 (JP)**
• **MAKINO Shinji**
  **Matsuyama-shi, Ehime 791-8043 (JP)**

(74) Representative: **Müller Schupfner & Partner
Patent- und Rechtsanwaltspartnerschaft mbB
Bavariaring 11
80336 München (DE)**

(54) **METHOD FOR PRODUCING MASSES OF FOOD PIECES AND DEVICE FOR PRODUCING MASSES OF FOOD PIECES**

(57)    A method for forming aggregates (M) of food pieces (m) by arranging a plurality of food pieces (m) such that the food pieces (m) at least partially overlap one another is provided. The method automatically changes the number of food pieces (m) forming each aggregate (M) and a pitch (K) at which the food pieces (m) are arranged so as to limit the weights of the aggregates (M) within a predetermined permissible range and to form each aggregate (M) such that the total length of the aggregate (M) is a preset length (A). The method also automatically changes the number of food pieces (m) forming each aggregate (M) and the pitch (K) at which the food pieces (m) are arranged according to the length (A) of the food piece (m) in the arrangement direction.

**(Cont. next page)**

EP 4 159 041 A1

## Fig.43

## Description

TECHNICAL FIELD

The present invention relates to a method and apparatus for forming a food aggregate from multiple food pieces.

BACKGROUND ART

A method and an apparatus for forming food aggregates are conventionally known that successively slice a block of food, such as raw meat, processed meat, or cheese, into thin food pieces and form an aggregate of food pieces by arranging the food pieces such that they partially overlap one another. Forming an aggregate of food pieces as described above facilitates placement into a container, thereby improving the operation efficiency in the food processing factory. This also allows a food piece to be easily separated and taken out from the container, thereby improving convenience in cooking. When the food is raw meat, thinly sliced raw meat pieces are typically folded individually, and five to ten slices of these are arranged to form an aggregate of meat pieces. The aggregate is then placed in a tray and packed to be shipped as a product with its total weight, unit price, and the like indicated.

As a method and apparatus for forming such an aggregate of food pieces, Patent Literature 1 discloses a technique that vertically cuts a block of raw meat from its leading end portion to successively form meat slices, folds each meat slice at its middle portion, and arranges folded meat slices such that they partially overlap one another to form an aggregate. Patent Literature 2 discloses a technique of conveying aggregates of meat slices at predetermined intervals to store them in trays. Patent Literature 3 discloses a technique of automatically changing the number of meat pieces to be arranged and the cut thickness of the meat pieces so that the weight of the aggregate of meat pieces is close to a preset weight.

CITATION LIST

Patent Literature

Patent Literature 1: Japanese Patent No. 4264518
Patent Literature 2: Japanese Patent No. 5875156
Patent Literature 3: Japanese Patent No. 4942696

SUMMARY OF INVENTION

Technical Problem

However, a block of food, such as raw meat, does not have a uniform cross-sectional shape from the leading end portion to the rear end portion, and its cross-sectional shape changes irregularly. As such, slicing the block to a uniform thickness does not result in sliced food pieces of a uniform size (length) or weight. Accordingly, when the same number of food pieces are overlapped at the same pitch, the formed aggregates vary in total length and weight. When the aggregates vary in weight, the weights and the resulting prices, which are indicated on the aggregates as products, are less likely to be in the same range. This causes a problem where manual adjustment is required, lowering the operation efficiency.

When the number of food pieces to be arranged and the cutting thickness are automatically changed using the technique disclosed in Patent Literature 3, the variations in weight of aggregates of these food pieces may be reduced. However, the pitch at which the food pieces are arranged is not automatically adjusted, causing the aggregates to have uneven total lengths. This variation in total length may cause some aggregates to have an excessively long total length. When such an aggregate is placed in a container, such as a tray, the aggregate may extend out of the container. Conversely, an aggregate may have an excessively short total length, forming a clearance in the container. This causes a problem where the food pieces require manual adjustments, lowering the operation efficiency. Additionally, the food pieces contained in the same container, such as a tray, may vary in thickness, lowering their product value.

To solve the problems of the conventional techniques described above, it is an objective of the present invention to provide a method and an apparatus for forming food aggregates that allow the food aggregates to have a uniform total length and reduce the variation in weight of the aggregates.

Solution to Problem

To solve the above problems, according to the first aspect of the present invention, a method for forming aggregates (M) of food pieces (m) by arranging a plurality of food pieces (m) such that the food pieces (m) at least partially overlap one another is provided. This method automatically changes the pitch (K) at which the food pieces (m) are arranged to form each aggregate (M) such that the total length of the aggregate (M) is a preset length (E).

To solve the above problems, according to the second aspect of the present invention, a method for forming aggregates (M) of food pieces (m) by arranging a plurality of food pieces (m) such that the food pieces (m) at least partially overlap one another is provided. This method automatically changes the number of food pieces (m) forming each aggregate (M) and a pitch (K) at which the food pieces (m) are arranged to form each aggregate (M) to reduce variations in weight of the aggregates (M) and form each aggregate (M) such that a total length of the aggregate (M) is a preset length (E).

To solve the above problems, according to the third aspect of the present invention, a food aggregate forming apparatus for forming aggregates (M) of food pieces (m) by cutting a block of food (MF) from a leading end portion thereof and arranging a plurality of cut food pieces (m) such that the food pieces (m) at least partially overlap one another is provided. This apparatus includes a thickness measurement means configured to measure the thickness of the leading end portion of the block of food (MF) to be cut; and a length calculation means configured to calculate a length (A) of a cut food piece (m) in an arrangement direction based on the thickness measured by the thickness measurement means; and a pitch changing means configured to automatically change the pitch (K) at which the food pieces (m) are arranged. In this apparatus, the pitch changing means is configured to operate according to the length (A) calculated by the length calculation means to form each aggregate (M) such that the total length of the aggregate (M) is a preset length (E).

To solve the above problems, according to the fourth aspect of the present invention, a food aggregate forming apparatus for forming aggregates (M) of food pieces (m) by cutting a block of food (MF) from the leading end portion of the block of food (MF) and arranging a plurality of cut food pieces (m) such that the food pieces (m) at least partially overlap one another is provided. The apparatus includes: a thickness measurement means configured to measure the thickness of the leading end portion of the block of food (MF) to be cut; a length calculation means configured to calculate the length (A) of a cut food piece (m) in an arrangement direction based on the thickness measured by the thickness measurement means; a quantity changing means configured to automatically change the number of food pieces (m) forming each aggregate (M); a pitch changing means configured to automatically change a pitch (K) at which the food pieces (m) are arranged. In this apparatus, the quantity changing means and the pitch changing means are configured to operate according to the length (A) calculated by the length calculation means to reduce variations in weight of the aggregates (M) and form each aggregate (M) such that the total length of the aggregate (M) is a preset length (E).


BRIEF DESCRIPTION OF DRAWINGS

Fig. 1 is a plan view of a food cutting and conveying apparatus including an item storing controller of the present invention.
Fig. 2 is a right side view of the food cutting and conveying apparatus including the item storing controller of the present invention.
Fig. 3 is a front view of the food cutting and conveying apparatus including the item storing controller of the present invention.
Fig. 4 is an explanatory left side view showing the food cutting and conveying apparatus including the item storing controller of the present invention that is cut at a middle portion in the lateral direction.
Fig. 5 is a diagram illustrating the power transmission of the food cutting and conveying apparatus including the item storing controller of the present invention.
Fig. 6 is a left side view of a supply unit.
Fig. 7 is a plan view of the supply unit.
Fig. 8 is a plan view of a cutting unit.
Fig. 9 is a front view of a frame member provided at the delivery port of the supply unit.
Figs. 10A and 10B are right side views of the cutting unit, in which Fig. 10A is an explanatory right side view of the cutting unit and Fig. 10B is an enlarged view of a section enclosed by a long-dash short-dash line in Fig. 10A.
Fig. 11 is an explanatory left side view of an area around the cutting unit and a transfer portion.
Fig. 12 is an explanatory plan view of an area around the cutting unit and the transfer portion.
Fig. 13 is an explanatory left side view showing an aggregate of folded meat pieces.
Fig. 14 is a right side view of a conveying action unit on the downstream side in the conveyance direction.
Fig. 15 is a plan view of the conveying action unit on the downstream side in the conveyance direction.
Fig. 16 is a plan view of an item moving apparatus in a closed state.
Fig. 17 is a front view of the item moving apparatus in a closed state.
Fig. 18 is a plan view of the item moving apparatus during space adjustment.
Fig. 19 is a front view of the item moving apparatus during space adjustment.
Fig. 20 is a plan view of the item moving apparatus in an open state.
Fig. 21 is a front view of the item moving apparatus in an open state.
Figs. 22A and 22B are left side views of the item moving apparatus, in which Fig. 22A shows an operating state and Fig. 22B shows a maintenance state.
Fig. 23 is an explanatory diagram of a transfer member of the item moving apparatus.
Figs. 24A and 24B are front views illustrating an operating state of the item moving apparatus, in which Fig. 24A shows a closed state and Fig. 24B shows an open state.
Fig. 25 is an explanatory rear view of a container supply unit.
Fig. 26 is an explanatory diagram of the main part of the container supply unit.
Fig. 27 is an explanatory diagram of the main part of the container supply unit.
Fig. 28 is a left side view illustrating an operating state around the item moving apparatus.
Fig. 29 is a left side view illustrating an operating state around the item moving apparatus.

Fig. 30 is an explanatory plan view of an area around the item moving apparatus in the initial state before space adjustment.

Fig. 31 is an explanatory front view of an area around the item moving apparatus in the initial state before space adjustment.

Fig. 32 is an explanatory plan view of an area around the item moving apparatus during space adjustment.

Fig. 33 is an explanatory front view of an area around the item moving apparatus during space adjustment.

Fig. 34 is an explanatory plan view of an area around the item moving apparatus in the process of opening.

Fig. 35 is an explanatory front view of an area around the item moving apparatus in the process of opening.

Fig. 36 is an explanatory plan view of an area around the item moving apparatus in an open state.

Fig. 37 is an explanatory front view of an area around the item moving apparatus in an open state.

Fig. 38 is a left side view illustrating an operating state around the item moving apparatus in a storing completion state.

Fig. 39 is a pneumatic circuit diagram of an air cylinder.

Fig. 40 is a block circuit diagram.

Fig. 41 is the first part of a flowchart for control.

Fig. 42 is the latter part of the flowchart for control.

Fig. 43 is an explanatory diagram showing a formation state of aggregates.

Fig. 44 is an explanatory diagram showing height variations of a block of meat.

Fig. 45 is an explanatory diagram conceptually showing the relationship between the height of a block of meat and the total weight of an aggregate of meat pieces.

Fig. 46 is the first flowchart of storing control.

Fig. 47 is the second flowchart of storing control.

Fig. 48 is the third flowchart of storing control.

Fig. 49 is an explanatory diagram of storing control.

DESCRIPTION OF EMBODIMENTS

Regarding the mode for carrying out the present invention, a slicer that continuously cuts a block of meat MF and conveys meat pieces m as aggregates M ("items" in the claims) each including multiple pieces is described in detail as an embodiment. With respect to a conveyance direction in which a block of meat to be cut by the slicer and aggregates of meat pieces are conveyed, the upstream side is referred to as a "rear side", the downstream side is referred to as a "front side", the left side as viewed in the downstream direction is referred to as a "left side", and the right side is referred to as a "right side".

Overall Configuration of Slicer

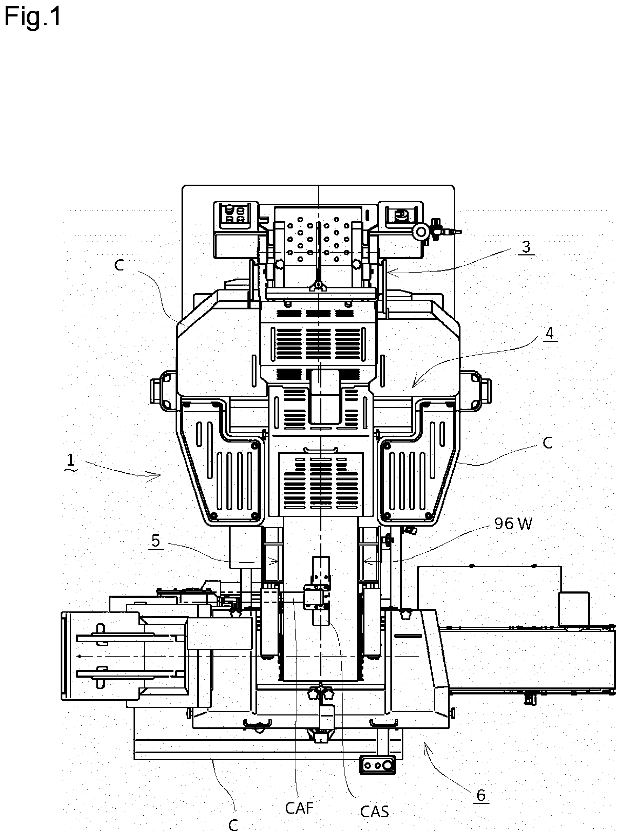

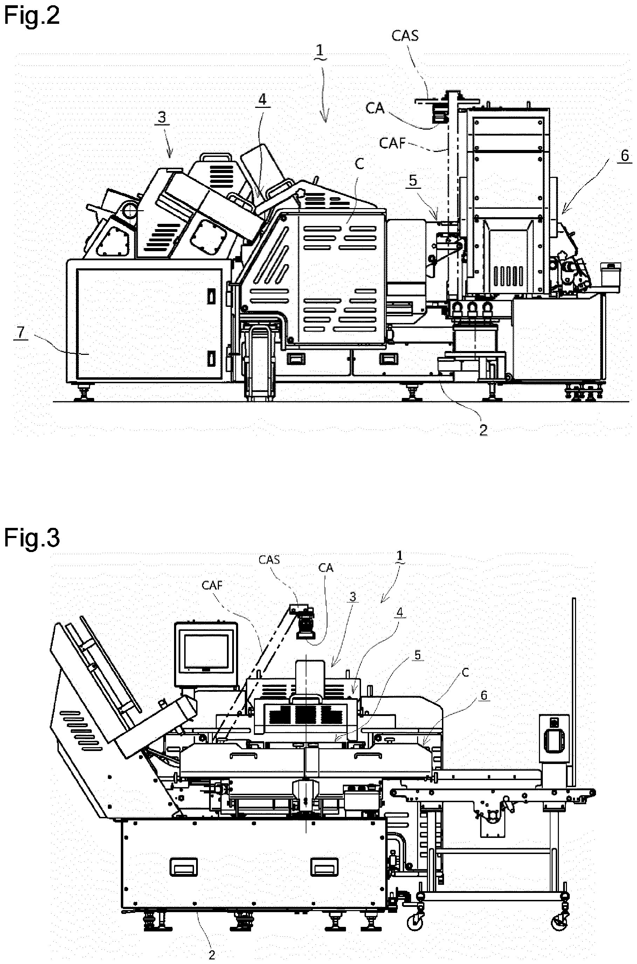

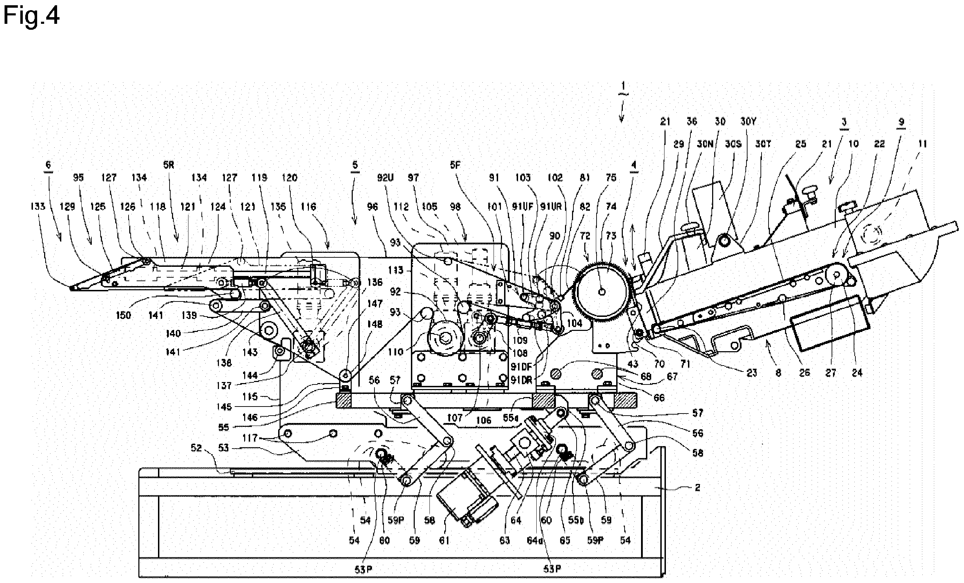

As shown in Figs. 1 to 3, a slicer 1 includes a machine base 2, which serves as a base, and a supply unit 3, a cutting unit 4, a conveying unit 5, a storing unit 6, and a control unit 7, which are arranged on the machine base 2. The machine base 2 is a frame having a predetermined height and a rectangular shape in a plan view. The supply unit 3 transfers a block of meat fed by an operator toward the front, and the cutting unit 4 cuts the front end portion of the block of meat protruding frontward from the front end portion of the supply unit 3 to a predetermined thickness. The conveying unit 5 conveys the pieces of meat cut by the cutting unit 4 frontward, and the storing unit 6 stores the conveyed meat pieces into containers and shipping out. The control unit 7 controls the operating states of electric motors, air cylinders, and the like for driving different portions. For hygienic reasons, each portion is mainly made of stainless steel and covered with a cover C made of stainless steel. Fig. 4 and the subsequent figures do not show these covers C.

As shown in Figs. 1 to 3, the conveying unit 5 has a camera ("image capturing means" in the claims) CA, which is placed above a conveyor 96W, which is described below, at a predetermined distance from the conveyor 96W. This camera CA is placed above the center position of the lateral width of the conveyor 96W and suspended and thus supported by a horizontal attachment stay CAS, which is fixed to the upper end portion of a support frame CAF extending obliquely from the machine frame such that the position of the camera CA is adjustable.

Supply Unit

As shown in Figs. 4 to 7, the supply unit 3 includes a frame 8, which is a rectangular frame in a plan view, and a meat block conveying apparatus 9, which is coupled to the frame 8 and conveys manually supplied blocks of meat frontward. The meat block conveying apparatus 9 includes left and right side walls 10, 10 extending from the left and right side portions of the frame 8. Left and right fulcrum shafts 11, 11 are fixed to the rear end portions of the left and right side walls 10, 10 and extend outward. The left and right fulcrum shafts 11, 11 are coaxial, and their two end portions are supported by the machine base 2 through left and right bearings 12, 12.

Swing Mechanism of Supply Unit

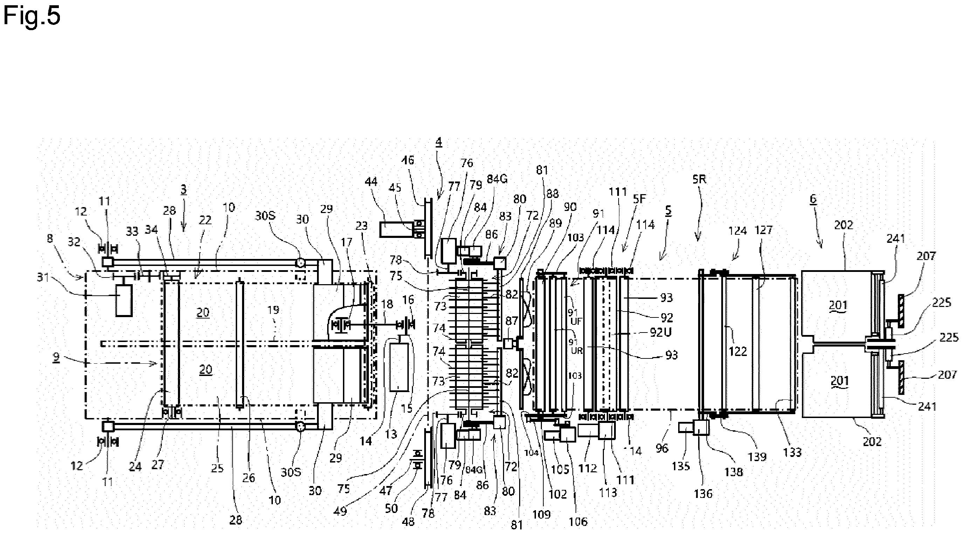

As shown in Fig. 5, a swing electric motor 13 is attached to a section of the machine base 2 below the frame 8, and one end of a crank arm 15 is attached to an output shaft 14 of the swing electric motor 13. A bearing 16 that supports the other end of the crank arm 15 and a bearing 17 that is supported on a section of the frame 8 located frontward and below the fulcrum shafts 11, 11 are fitted and fixed to tubular portions (not shown) provided at opposite ends of an interlocking rod 18. Accordingly, the supply unit 3 is supported to be inclined downward toward the front side such that the front end portion, which is closer to the conveyance termination end, is lower. When the swing electric motor 13 is driven, the supply unit 3 swings obliquely upward or downward about the fulcrum shafts 11, and the front end portion of the supply unit 3 reciprocates along an arcuate path about the fulcrum shafts 11.

Conveyance Passage of Supply Unit

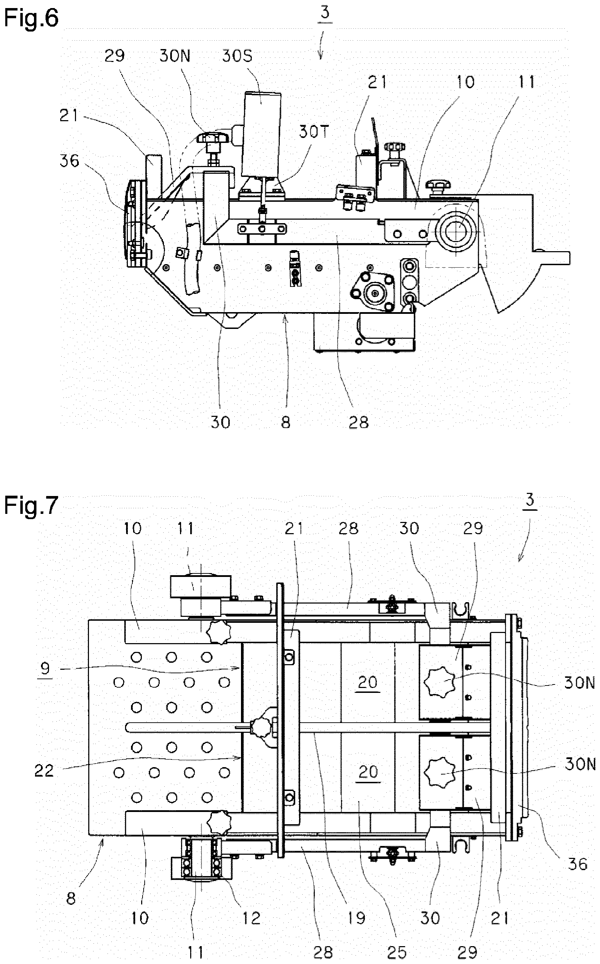

As shown in Figs. 5 and 7, the frame 8 includes one partition wall 19, which is integrally formed between the side walls 10, 10 at the left and right ends. Two conveyance passages 20, 20 are formed between the two side walls 10, 10 and the one partition wall 19. As shown in Figs. 6 and 7, gate-shaped or arched reinforcement frames 21, 21, which extend over the two conveyance passages 20, 20, couple the side walls 10, 10 at the left and right end portions to each other at their front and rear portions, securing the rigidity of the frame 8.

Conveyor of Supply Unit

As shown in Figs. 4, 5, and 7, the meat block conveying apparatus 9 includes a wide lower conveyor 22 located under each of the two conveyance passages 20, 20 to convey blocks of meat. This lower conveyor 22 forms the base of the two conveyance passages 20, 20 and carries and conveys blocks of meat. The lower conveyor 22 includes a front end roller 23, a rear end roller 24, a lower endless belt 25 having a rough surface and wound around the front and rear end rollers 23 and 24, and a tension roller 26, which is located in a middle portion in the front-rear direction to apply tension to the lower endless belt 25.

The front end roller 23 is rotationally supported by a lateral shaft fixed to the front end portions of left and right frames (not shown). These left and right frames are formed integrally and attached to the lower portion of the frame 8 in a removable manner. The rear end roller 24 is fixed to a lateral lower drive shaft 27 received by the rear end portions of the left and right frames. The tension roller 26 is arranged in a middle portion in the front-rear direction of the frame 8, in contact with the upper surface of the lower winding area of the lower endless belt 25, and elastically urged downward. The lower endless belt 25 thus receives tension suitable for conveying. Instead of elastically urging the tension roller 26, the tension roller 26 may be fixed with its height adjusted. The front end roller 23, the rear end roller 24, the tension roller 26, and the lower endless belt 25 are formed to be wider than the space between the inner surfaces of the left and right side walls 10, 10, and their left and right end portions are located under the left and right side walls 10, 10.

Additionally, slide contact plate members (not shown), which support the lower surface of the upper winding area of the lower endless belt 25, are attached to the frame 8 between the front end roller 23 and the tension roller 26 and between the tension roller 26 and the rear end roller 24. These slide contact plate members are wide and extend between the inner surfaces of the left and right side walls 10, 10. The upper surface of the lower endless belt 25 is arranged directly under the partition wall 19 with a gap separating the lower endless belt 25 from the partition wall 19.

In this manner, the upper surface of the lower endless belt 25 forms the bases of the two conveyance passages 20, 20 described above.

Pressing Plate of Supply Unit

As shown in Figs. 5 to 7, the sections of the left and right fulcrum shafts 11, 11 between the side walls 10, 10 and the bearings 12, 12 pivotally support the bases of left and right pressing arms 28, 28. Thus, the left and right pressing arms 28, 28 are arranged outside the left and right side walls 10, 10 so as to swing up and down. Pressing plates 29, 29 facing the upper sides of the front end portions of the conveyance passages 20, 20 are attached to the front ends of the respective left and right pressing arms 28, 28. The pressing plates 29, 29 are fastened to attachment stays 30, 30 attached to the front end portions of the left and right pressing arms 28, 28 with knob bolts 30N, 30N. The attachment stays 30, 30 extend upward from the front end portions (free end portions) of the pressing arms 28, 28 and then bend toward the upper sides of the conveyance passages 20, 20.

The pressing plates 29, 29 are plate members each including an upper surface portion, which is fastened to the attachment stay 30, an oblique surface portion, which obliquely extends frontward and downward from the front end of the upper surface portion, and a pressing surface portion, which extends frontward from the front end of the oblique surface portion. Also, as shown in Figs. 4 to 6, stays 30T, 30T extend upward from the left and right side walls 10, 10 of the frame 8. These stays 30T, 30T rotationally support cylinder portions of left and right air cylinders 30S, 30S through lateral shafts 30Y, 30Y Thus, the air cylinders 30S, 30S are attached in vertical orientations. The distal ends of pistons of the air cylinders 30S, 30S are supported on the front portions of the left and right pressing arms 28, 28 and pivotal about a lateral axis. When the air cylinders 30S, 30S extend, the pressing arms 28 pivot downward, and the pressing plates 29, 29 are pressed against the upper surface of the lower endless belt 25 below. The pressing surface portions of the pressing plates 29, 29 press the front end portions of the blocks of meat conveyed to the front portions of the conveyance passages 20, 20.

That is, the timing of extension and contraction of the air cylinders 30S, 30S is controlled to synchronize with the swing motion of the supply unit 3 about the fulcrum shafts 11. As a result, immediately before the supply unit 3 swings upward so that the front end portions of the blocks of meat are cut by the cutting unit 4, the air cylinders 30S, 30S extend and press the front end portions of the blocks of meat to prevent displacement during cutting. After cutting, the air cylinders 30S, 30S contract to release the pressure on the blocks of meat. Then, the lower endless belt 25 is driven so that the blocks of meat are conveyed until their front ends abut receiving plates, which will be described below.

Power Transmission of Supply Unit

As shown in Fig. 5, a conveying electric motor 31 is attached to the lower side of the frame 8 of the supply unit 3 and oriented in the lateral direction. An output gear 32 is fixed to the lateral output shaft of the conveying electric motor 31. The output gear 32 meshes with an intermediate gear 33, which is supported by the rear portion of the frame 8. The intermediate gear 33 meshes with an input gear 34, which is fixed to the left end portion of the lower drive shaft 27.

Cutting-related Portion in Supply Unit

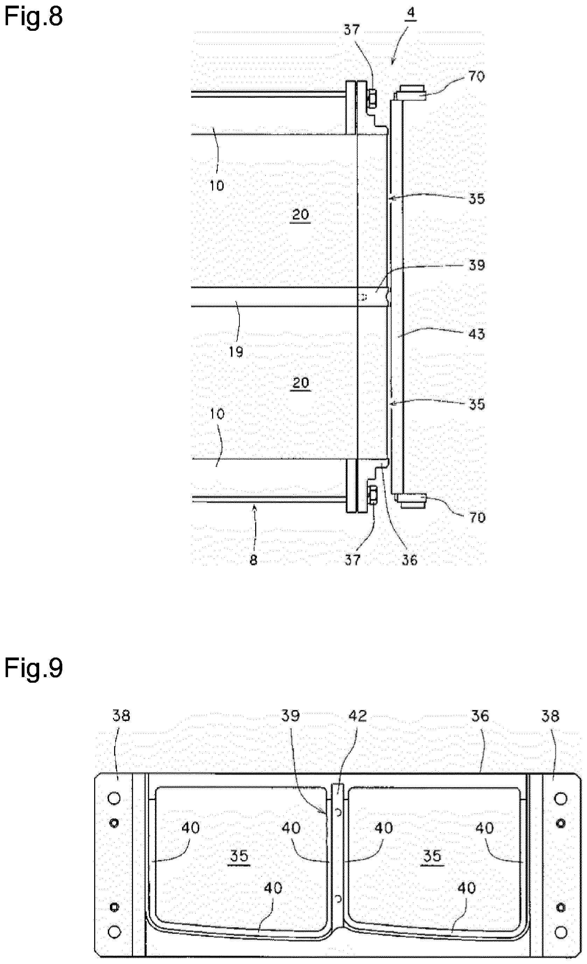

As shown in Figs. 8 and 9, a frame member 36 having two openings 35, 35 is fastened to the front end portion of the frame 8 of the supply unit 3 with bolts 37. As shown in Fig. 9, the frame member 36 has attachment portions 38, 38 with bolt holes at left and right ends. The two rectangular openings 35, 35 extend through the frame member 36 between the left and right attachment portions 38, 38. A vertical frame portion 39 is formed between these two rectangular openings 35, 35.

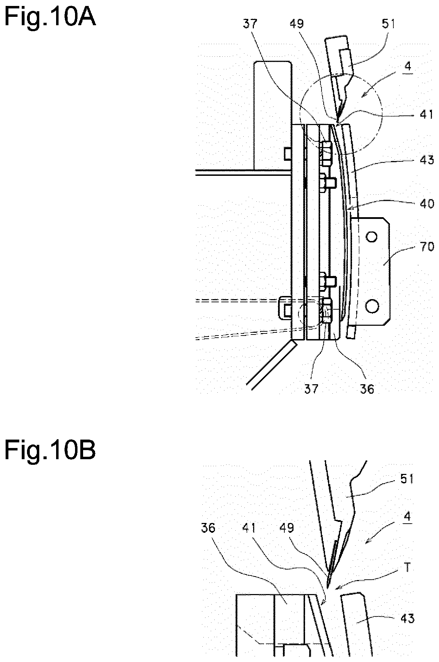

Slide contact edge portions 40, 40, which bulge frontward, are formed on the front surfaces of the sections of the frame member 36 around the left and right openings 35, 35 including the front surface of the frame portion 39. Each slide contact edge portion 40 continuously surrounds three edge portions of the left and right edge portions and the bottom edge portion around the corresponding opening 35. As shown in Fig. 10A, the front surfaces of the slide contact edge portions 40, 40 have the shape of an arc about the fulcrum shaft 11 of the supply unit 3 in a side view. As shown in Figs. 10A and 10B, the upper front surfaces of the slide contact edge portions 40, 40 are inclined surfaces 41 that are inclined upward toward the rear side. When the supply unit 3 swings upward, an endless band blade, which will be described below, slides on and is guided by the inclined surfaces 41 to the slide contact edge portions 40, 40. The upper edges of the bottom edge portion of the openings 35, 35 are blade-shaped.

As shown in Fig. 9, a recess 42, which extends continuously in the vertical direction, is formed only in the center portion in the width direction (the lateral direction) of the slide contact edge portions 40, 40 formed over the front surface of the frame portion 39. As a result, the slide contact edge portions 40, 40 remain on both left and right sides of the bottom of the recess 42, and the rear surface of the cutting edge portion of the endless band blade 49, which will be described below, comes into slide contact with these slide contact edge portions 40, 40. The bottom surface of this recess 42 also has the shape of an arc about the fulcrum shafts 11 of the supply unit 3 in a side view.

Receiving Plate of Cutting Unit

As shown in Figs. 4, 8, 10A, 10B, and 11, a receiving plate 43 for receiving the front end portions of the blocks of meat moving out of the two openings 35, 35 is provided facing the frame member 36 on the front side of the swing path of the frame member 36. The entire or a part of the rear surface of each receiving plate 43 is formed to have a curvature of an arc about the fulcrum shafts 11 of the supply unit 3 in a side view. As a result, the front surfaces of the slide contact edge portions 40, 40 of the frame member 36 and the rear surface of the receiving plate 43 have arc shapes with the same or similar curvature in a side view.

Cutting Blade

As shown in Fig. 5, the cutting unit 4 includes a cutting electric motor 44, a driving pulley 46 attached to an output shaft 45 of the cutting electric motor 44, a driven pulley 48 attached to a driven shaft 47, and a steel endless band blade 49 wound around the driving pulley 46 and driven pulley 48. The cutting electric motor 44 is fixed to a section that is separated from the two openings 35, 35 to the left. The driven shaft 47 is rotationally supported via a bearing 50 at a position separated from the two openings 35, 35 to the right. The driven shaft 47 is supported by the machine base 2 such that its lateral position is adjustable by operating an air cylinder (not shown). The output shaft 45 and the driven shaft 47 are held in parallel in the same orientation inclined upward toward the front side. By operating the air cylinder to reduce the distance between the driving pulley 46 and the driven pulley 48, the endless band blade 49 can be easily wound around and removed from these two pulleys 46 and 48.

When the cutting electric motor 44 is actuated with the endless band blade 49 wound around the driving pulley 46 and the driven pulley 48, the driving pulley 46 is driven and rotated counterclockwise as viewed in a direction along an extension line of the axis of the output shaft 45 from the upper front side. The driven pulley 48 is also driven and rotated counterclockwise through the endless band blade 49. As a result, in the lower winding area of the endless band blade 49, the endless band blade 49 rotates from the side corresponding to the driven pulley 48 to the side corresponding to the driving pulley 46 side (from right to left).

As such, in the lower winding area, the endless band blade 49 rotates in a tensioned state, and the lower winding area of the endless band blade 49 is used as the area for cutting blocks of meat. When an excessive load is applied to the endless band blade 49, which rotates as described above, due to a cutting resistance of the block of meat, for example, a force acts on the driven shaft 47 in the direction of the output shaft 45. However, since the air in the air cylinder that adjusts the movement of the driven shaft 47 is compressed, the excessive load does not cause damage. One edge of the endless band blade 49 is formed as a sharp blade edge.

As shown in Figs. 10A and 10B, a guide member 51 for guiding the endless band blade 49 is arranged above the receiving plate 43 between the driving pulley 46 and the driven pulley 48. The guide member 51 has a lateral groove, which is formed in the lower edge of a laterally elongate plate member and opens downward. The edge portion of the endless band blade 49 that is free of a blade edge is fitted in the groove in a slidable manner in the lateral direction. By fixing the orientation of the guide member 51, the winding surface of the endless band blade 49 is held in a preset orientation inclined downward toward the front side, forming a clearance T between the blade edge of the endless band blade 49 and the upper end of the receiving plate 43. The guide member 51 supports the inner and outer surfaces of the endless band blade 49 in a slidable manner, stabilizing the inclined orientation during rotating movement.

Support of Cutting Unit, First Support Member, and Third Support Member

As shown in Fig. 4, two rails 52, 52 having the shape of a flat plate member are fixed to left and right sides of the upper portion of the machine base 2. The rails 52, 52 extend in the front-rear direction and are laterally spaced apart. The left and right sides of the lower front portion of a third support member 53, which is formed as a rectangular frame in a plan view, each support two rollers 54 in a swinging manner like a balance. Also, the left and right sides of the lower rear portion of the third support member 53 each support one roller 54.

With the third support member 53 mounted on the machine base 2, the six rollers 54 in total are placed and supported on the upper surfaces of left and right rails 52, 52, and the third support member 53 is movable in the front-rear direction relative to the machine base 2. A first support member 55, which is formed in a rectangular frame in a plan view, is placed above the third support member 53. Four upper link arms 56 are attached at four positions of front, rear, left, and right of the first support member 55. The upper end portions of the upper link arms 56 are pivotal about lateral upper shafts 57.

The lower end portions of the four upper link arms 56 are each fixed to a corresponding one of the lateral end portions of lateral lower shafts 58, 58, which are rotationally supported in a middle portion in the front-rear direction and the rear portion of the third support member 53. The left and right upper link arms 56, 56 are configured to pivot integrally about the lower shafts 58, 58. Furthermore, the upper end portions of lower link arms 59 are coupled and fixed to the lower end portions of the four upper link arms 56. Thus, the lower and upper link arms 59 and 56 form the shape of letter L in a left side view. Front and rear tension springs 60 and 60 coupled lateral shafts 59P, 59P provided at the lower end portions of the front and rear lower link arms 59, 59 to shafts 53P, 53P provided at the front and rear portions of the third support member 53. The elastic forces of the tension springs 60, 60 in a contraction direction urge the first support member 55 upward.

The third support member 53 rotationally supports the base portion of an electric motor 61 about a lateral axis. The electric motor 61 drives and rotates a threaded shaft 63, which is engaged with an internal threaded member 64. The distal end portion of an intermediate member 64a, which moves together with the internal threaded member 64, is attached by a lateral shaft 65 to a stay 55b of a lateral frame 55a located in a middle portion in the front-rear direction of the first support member 55. When the electric motor 61 drives and rotates the threaded shaft 63, the internal threaded member 64 engaging with the threaded shaft 63 moves in the axial direction of the threaded shaft 63, thereby pressing and pulling the frame 55a of the first support member 55 through the intermediate member 64a. The first support member 55 thus moves relative to the third support member 53. The movement path of the first support member 55 is determined by the setting of the swinging path of the upper end portions of the front and rear upper link arms 56.

That is, the four upper link arms 56 are formed to have the same length, and the bearing position of the front lower shaft 58 relative to the third support member 53 is set higher than the bearing position of the rear lower shaft 58 relative to the third support member 53. The downward inclination toward the rear side of the left and right upper link arms 56, 56 on the front side is set to be less steep than the downward inclination toward the rear side of the left and right upper link arms 56, 56 on the rear side. As such, as the first support member 55 approach the third support member 53 (descends), the front side of the first support member 55 descends lower than the rear side, causing the first support member 55 to incline downward toward the front side.

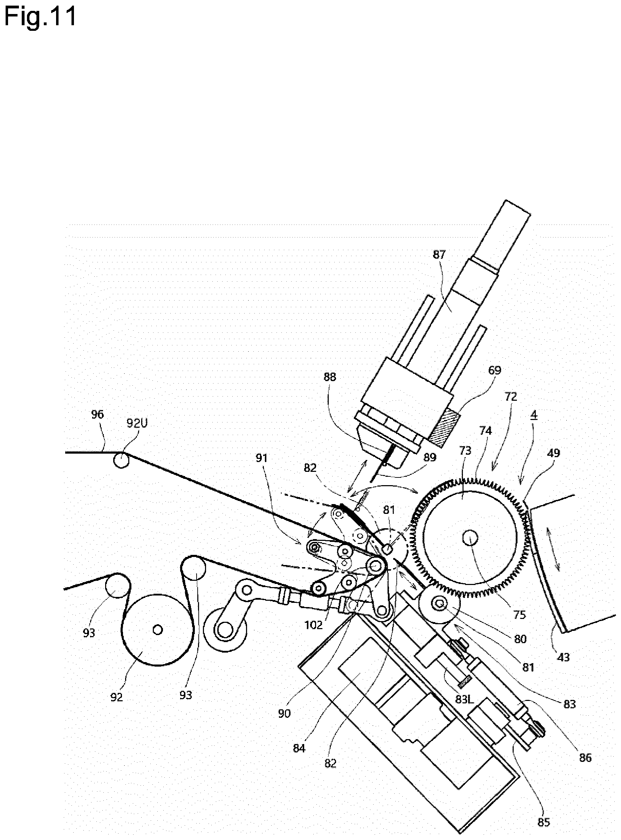

The lower end portion of a rear support base 67 having left and right side plates 66, 66 is fixed to the rear portion of the first support member 55 with bolts. To increase the strength, rod-shaped lateral frames 68, 68 couple the lower portions of the left and right side plates 66, 66 to each other. As shown in Fig. 11, a lateral frame 69 couples the upper extension portions of the left and right side plates 66, 66 to each other. As shown in Fig. 4, oblique side portions, which are inclined upward toward the front side, are formed in the upper rear sections of the left and right side plates 66, 66. Stays 70, 70 are fastened to the oblique side portion with nuts 71. The stays 70, 70 extend frontward from the left and right end portions of the front surface of the receiving plate 43 described above.

In this manner, the receiving plate 43 is fixed in place on the first support member 55. When the third support member 53 is moved frontward relative to the machine base 2, the receiving plate 43 is separated from the openings 35, forming a space for maintenance between the receiving plate 43 and the openings 35. This space is used for the maintenance of the cutting unit 4, the conveying unit 5, which will be described below, and the like.

Adjustment of Thickness of Cut Meat Piece

When the electric motor 61 is driven, the first support member 55 and the receiving plate 43, which is integrally supported by the first support member 55, move in the direction governed by the swing path of the upper link arms 56, 56. That is, when the first support member 55 is moved frontward to increase the thickness of the cut meat piece, the first support member 55 moves frontward and downward while tilting downward toward the front side. At this time, the rear surface of the receiving plate 43 supported by the first support member 55 changes its orientation and tilts frontward.

As a result, in spite of the change in the space between the front surfaces of the slide contact edge portions 40, 40 and the rear surface of the receiving plate 43, the rear surface of the receiving plate 43 remains on an arc (an imaginary arc) about the fulcrum shafts 11, which are the swing center of the slide contact edge portions 40, 40. That is, the distance from the fulcrum shaft 11 to the upper end of the rear surface of the receiving plate 43 remains equal to the distance from the fulcrum shaft to the lower end of the rear surface of the receiving plate 43 while the space between the front surfaces of the slide contact edge portions 40, 40 and the rear surface of the receiving plate 43 is adjusted. This allows the thickness of the cut meat pieces to be adjusted while maintaining a substantially uniform thickness over the entire surface.

In a side view, the curvature of the front surfaces of the slide contact edge portions 40, 40 is substantially equal to the curvature of the rear surface of the receiving plate 43. Accordingly, in a strict sense, the thickness adjustment described above results in a slight difference between the distance from the fulcrum shaft 11 to the upper and lower ends of the rear surface of the receiving plate 43 and the distance from the fulcrum shafts 11 to the middle portion in the up-down direction of the rear surface of the receiving plate 43. However, this slight difference does not affect the commercial value of the cut pieces of meat. The configuration in which the receiving plate 43 is tilted frontward while being moved frontward and downward as described above is applied to a configuration that cuts a block of meat in the lower area of the arcuate path of the slide contact edge portions 40, 40 about the fulcrum shafts 11, as with the slicer of the present embodiment.

Transfer Rotation Member of Cutting Unit

As shown in Figs. 4, 5, and 11, left and right transfer rotation members 72, 72, which rotate independently on the same axis, are provided between the upper portions of the left and right side plates 66, 66. The left and right transfer rotation members 72, 72 each include a body 73 and a large number of annular plates 74 arranged on the outer circumference of the body 73 at intervals. Each annular plate 74 has a large number of sharp projections. The bodies 73, 73 are rotationally supported on a support shaft 75, which extends between the left and right side plates 66, 66. The projections formed on the circumference edges of the annular plates 74 have pointed ends that are sharp enough to stick in a cut meat piece.

As shown in Fig. 5, transfer electric motors 76, 76 are attached to the upper outer surfaces of the left and right side plates 66, 66, and output shafts 77, 77, which are driven by the transfer electric motors 76, 76, extend into the inner sides of the side plates 66, 66 through holes formed in the left and right side plates 66, 66. Output gears 78, 78 are fixed to the projecting end portions of the output shafts 77, 77, and input gears 79, 79 are fixed to the outer end portions of the left and right bodies 73, 73. The output gears 78, 78 mesh with the input gears 79, 79.

A part of the circumference portion of each annular plate 74 is inserted into a vertical slit formed in the upper portion of the receiving plate 43, and the projections formed on the circumference portion stick in the meat piece during or after cutting so as to transfer the meat piece onto the transfer rotation members 72, 72. At this time, the velocity of the upward movement of the openings 35, 35 and the velocity of the outer circumferences of the annular plates 74, 74 of the transfer rotation members 72, 72 are set to the same velocity in the same direction, allowing the cut meat pieces to be smoothly transferred and conveyed.

Folding Apparatus

As shown in Figs. 5, 11, and 12, left and right bar-shaped members 81, 81, which are reciprocally rotated by left and right swing electric motors 80, 80, are arranged frontward and downward of the support shaft 75. A large number of thin rods 82, 82 extend from the left and right bar-shaped members 81, 81 at predetermined intervals in the longitudinal direction. These thin rods 82, 82 enter between adjacent annular plates 74, 74 before the support shaft 75 starts to pivot, so that the thin rods 82, 82 are retracted in a standby position that does not interfere with the meat pieces that are retained and conveyed by the upper circumference surface of the annular plates 74, 74.

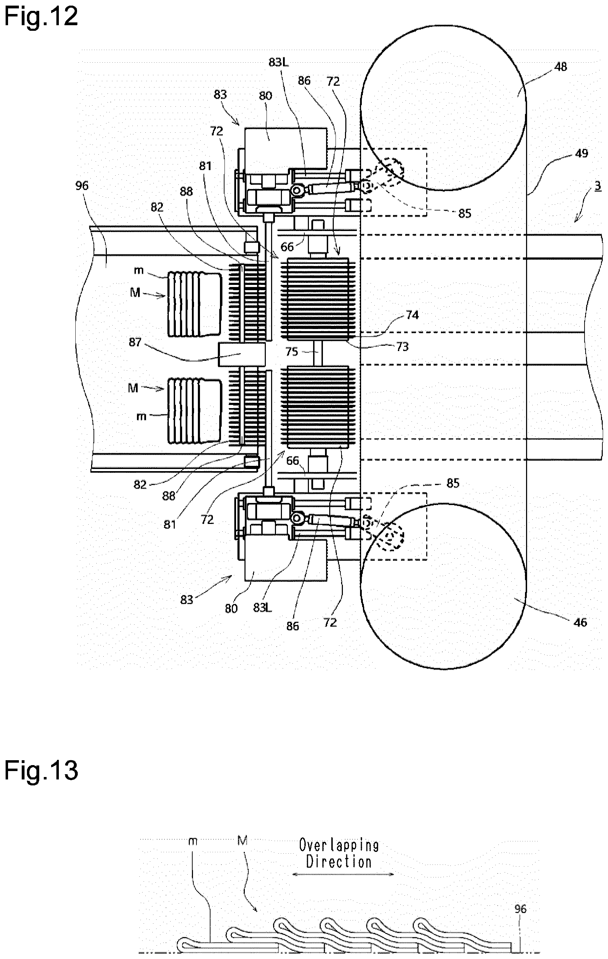

Also, the left and right swing electric motors 80, 80 and the left and right bar-shaped members 81, 81 are unitized. As shown in Figs. 11 and 12, these left and right units 83, 83 are supported on two guide rails 83L, 83L and slidable in the longitudinal direction. The rod-shaped guide rails 83L, 83L are attached to the outer side portions of the left and right side plates 66, 66 in parallel and inclined upward toward the front side. Left and right deployment/retraction electric motors 84, 84 are attached to the outer portions of the left and right side plates 66, 66 to supply power to gear cases 84G, 84G. End portions of crank arms 85, 85 are attached to output shafts of the gear cases 84G, 84G. Opposite end portions of turnbuckle rods 86, 86 are attached to the other end portions of the crank arm 85, 85, and the units 83, 83.

Thus, the actuation of the left and right swing electric motors 80, 80 causes the large number of thin rods 82, 82 extending from the left and right bar-shaped members 81, 81 to reciprocally swing so that their inclined orientations are reversed in the front-rear direction. Also, the actuation of left and right deployment/retraction electric motors 84, 84 causes the large number of thin rods 82, 82 to reciprocally slide in a direction inclined upward toward the front side while being guided by the guide rails 83L, 83L in units.

Pressing Apparatus

As shown in Figs. 5 and 11, the cylinder portion of an air cylinder 87 is attached to the center portion of the lateral frame 69 coupling the upper portions of the left and right side plates 66, 66. The cylinder portion extends obliquely in an up-down direction. The lateral center portion of a pressing member 88 extending in the lateral direction is attached to the piston distal end portion of the air cylinder 87. Four wire pressing members 89, each formed by bending an elastic wire so that it bulges upward, are attached to the pressing member 88. One end of each wire pressing member 89 is fixed to the pressing member 88, and the other end is inserted in a hole in the pressing member 88 in a slidable manner. In this state, each wire pressing member 89 intersects with a paired one of the wire pressing member 89, and the curved portions of the four wire pressing members 89 are positioned at the lower end.

An extension operation of the air cylinder 87 moves the pressing member 88 downward, causing the lower edge of the pressing member to press the upper surfaces of the folded meat pieces m. Then, when a retraction operation of the air cylinder 87 moves the pressing member 88 upward, the curved portions of the four wire pressing members 89 simultaneously press the respective folded meat pieces m in two rows at two points.

Folding of Meat Pieces and Formation of Aggregates

When the swing electric motors 80, 80 are actuated and cause the large number of thin rods 82 to swing frontward from the standby position, the meat pieces m being transferred on the upper circumference surface of the annular plates 74 of the transfer rotation member 72 are peeled off from the circumference surface of the annular plates 74 by the distal end portions of many thin rods 82. At this time, the distal end portions of the many thin rods 82 arranged in the lateral direction come into contact with the center portion in the front-rear direction of the lower surface of the meat piece m, pushing up the center portion in the front-rear direction of the meat pieces m, and swing further frontward. As a result, the front and rear end portions fall under their own weight, causing the meat piece m to be folded at the position in contact with the distal end portions of many thin rods 82. The meat piece m thus folded in two is placed on the conveying action unit on the upstream side (rear side) in the conveyance direction, which will be described below.

At this time, an extension operation of the air cylinder 87 moves the pressing member 88 downward, so that the lower edge of the pressing member 88 presses the meat piece m folded in two. In this pressed state, the deployment/retraction electric motors 84, 84 are actuated, causing the left and right bar-shaped members 81, 81 to slide rearward and downward together with the left and right swing electric motors 80, 80. This instantaneously pulls out the large number of thin rods 82 sandwiched by the meat piece m folded in two. Then, the pressing member 88 is retracted upward while the curved portions of the wire pressing members 89 push away the upper surface of the two folded meat piece m downward.

As shown in Fig. 13, by repeating such folding of the meat pieces m, multiple folded meat pieces m (six meat pieces m in this embodiment) are successively placed on the conveyance start end portion of the endless belt 96 in conveying operation such that the meat pieces m partially overlap one another vertically. An aggregate M of meat pieces m is thus formed. Also, control for intermittently increasing and reducing the conveying speed of the endless belt 96, control for intermittently changing the time interval for swinging of the thin rods 82 while maintaining the rotational speed of the transfer rotation members 72 in synchronization with the swinging timing of the thin rods 82, and other controls are performed to set a predetermined space between one aggregate M and the next aggregate M.

Conveying Unit

As shown in Figs. 4, 5, 11, 14, and 15, the conveying unit 5 is configured by winding an endless belt 96 around a rear end driven roller 90, a rear driven roller group 91, a driving roller 92, two driven rollers 93, 93, which are adjacent to the driving roller 92 and located at the front and rear sides thereof, an upper driven roller 92U, which is located above the driving roller 92, and a driven roller group forming a reciprocating conveyor 95, which will be described below. Slide contact support plate members (not shown) are provided between the rollers in the upper winding area of the endless belt 96. The slide contact support plate members are in slide contact with and thus support the inner circumference surface of the endless belt 96. In this manner, a series of conveying action areas from the conveyance start end portion to the conveyance termination end portion is formed. This series of conveying action areas includes a conveying action unit 5F on the upstream side in the conveyance direction (rear side) and a conveying action unit 5R on the downstream side in the conveyance direction (front side).

Conveying action unit on Upstream Side in Conveyance Direction

As shown in Fig. 4, a middle support base 98 including left and right asymmetrical plate members 97, 97 is mounted on the middle portion in the front-rear direction of the first support member 55. Specifically, boss members having bearing holes in the front-rear direction are fixed to the lower end portions of the left and right plate members 97, 97. Front and rear end portions of circular sliding guide bars are fixed to the left and right side portions of the first support member 55. The boss members are engaged with the sliding guide bars and slidable in the front-rear direction (the boss members and the sliding guide bars are not shown).

Also, a locking apparatus (not shown) is provided to lock and unlock the sliding position of the boss members relative to the sliding guide bars. When the middle support base 98, including the left and right plate members 97, 97, is slid to the rear end of the sliding range and the locking apparatus is locked at this position, the winding circumference of the endless belt 96 is increased, so that the endless belt 96 is stretched and ready for conveying. In contrast, when the locking apparatus is unlocked and the middle support base 98 is slid frontward, the winding circumference of the endless belt 96 is shortened, so that the endless belt 96 is slackened and ready to be detached.

The bases of left and right support stays 101, 101 are fixed to the front portions of the left and right plate members 97, 97 of the middle support base 98. The rear extension end portions of the left and right support stays 101, 101 support, through bearings, left and right end portions of a support shaft 102, which is elongate in the lateral direction and pivotal upward and downward. As shown in Figs. 4 and 5, this support shaft 102 rotationally supports the rear end driven roller 90, which is laterally wide. Thus, the rear end driven roller 90 is located frontward and downward of the clearance T in the cutting unit 4 described above.

Furthermore, the top portions of swing arms 103, 103, each branching into an upper portion and a lower portion, are supported on the left and right end portions of the support shaft 102 and pivotal upward and downward. Two rear upper driven rollers 91 UF, 91 UR are rotationally supported between the left and right upper portions of the swing arms 103, 103. Two rear lower driven rollers 91 DF and 91 DR are rotationally supported between the left and right lower portions of the swing arms 103, 103. The rear driven roller group 91 is thus formed, and this rear driven roller group 91 is arranged in front of the rear end driven roller 90. Also, an operating arm 104 is integrally suspended from the top portion of the right swing arm 103.

A gear case 106, which is driven by a vertical movement electric motor 105, is fixed to the right side surface of the right plate member 97 of the middle support base 98, and one end portion of a crank arm 108 is attached to an output shaft 107 of this gear case 106. A turnbuckle interlocking rod 109 couples the distal end portion (lower end portion) of the operating arm 104 to the other end of the crank arm 108. With this configuration, when the vertical movement electric motor 105 is driven to rotate forward, the crank arm 108 and the operating arm 104 synchronously pivot, and the left and right swing arms 103, 103 pivot upward about the axis of the support shaft 102. Accordingly, the two rear upper driven rollers 91 UF, 91 UR rise and press the inner surface of the endless belt 96 in the upper winding area, forming a steep surface inclined upward toward the front side in the conveyance start end portion (rear end portion) of the conveying action unit 5F on the upstream side in the conveyance direction in the series of conveying action areas.

Then, when the vertical movement electric motor 105 is driven to rotate backward, the left and right swing arms 103, 103 pivot downward about the axis of the support shaft 102, and the two rear upper driven rollers 91UF, 91UR descend to return to the original position. Accordingly, the front portion of the endless belt 96 is lowered to its original position, and the conveyance start end portion of the conveying action unit 5F returns to a gently inclined surface. At this time, the two descending rear lower driven rollers 91 DF and 91 DR press down the inner surface of the lower winding area of the endless belt 96, preventing the loosening of the endless belt 96.

The driving roller 92 is arranged between the left and right plate members 97, 97 of the middle support base 98, and the left and right end portions of its rotation shaft 110 are supported by the left and right plate members 97, 97 through bearings 111, 111. A gear case 113, which receives power from a conveying drive motor 112, is fixed to the right side surface of the right plate member 97, and an output shaft of the gear case 113 is coupled to the rotation shaft of the driving roller 92. The two driven rollers 93, 93, which are adjacent to the driving roller 92 and located at the front and rear sides thereof, are located at positions higher than the driving roller 92 and rotationally supported between the left and right plate members 97, 97 by left and right bearings 114, 114.

The endless belt 96 is wound around the upper circumference surfaces of the two driven rollers 93 and 93 and also around the lower circumference surface of the driving roller 92 arranged between the two rollers. Accordingly, the winding circumference of the endless belt 96 wound around the lower circumference surface of the driving roller 92 is increased. This reduces the slippage of endless belt 96 on the driving roller 92.

The above-mentioned upper driven roller 92U is rotationally supported on a lateral shaft (not shown) attached between the upper portions of the left and right plate members 97 of the middle support base 98, and is located above the driving roller 92. The conveying action unit 5F on the upstream side in the conveyance direction is thus formed mainly by the section extending from the rear end driven roller 90 to the upper driven roller 92U.

Second Support Member

As shown in Fig. 4, a front support base 116 including left and right plate members 115, 115 is fixed to the rear end portion of the third support member 53 described above. That is, the lower end portions of the left and right plate members 115, 115 are fastened to the rear end portion of the third support member 53 with bolts 117, 117. The upper end portions of the left and right plate members 115, 115 extend to have an equivalent height as the upper end portions of the left and right plate members 97, 97 of the middle support base 98. The front support base 116 is spaced apart from the first support member 55 in the front-rear direction. The front support base 116 is not directly coupled to the first support member 55 or the middle support base 98.

Conveying action unit on Downstream Side in Conveyance Direction

As shown in Figs. 4, 14, and 15, left and right extension plate members 118, 118, which are vertically narrow, integrally extend rearward from the upper portion of the front support base 116 (the left and right plate members 115, 115). Guide rails 119, 119 in the form of round bars extending in the front-rear direction are arranged at the inner surfaces of the left and right extension plate members 118, 118 and spaced from the inner surfaces. The front and rear end portions of the left and right guide rails 119, 119 are attached to the inner surfaces of extension plate members 118, 118 through stays 120, 120.

Left and right moving plate members 121, 121 in the front-rear direction and a front coupling bar 122 and a rear coupling bar 123, which couple opposite front end portions and opposite rear end portions of the left and right moving plate members 121, 121, form a moving frame 124. Inclined edge portions, which are inclined downward toward the front side, are formed at the upper edges of the front portions of the left and right moving plate members 121, 121 of the moving frame 124. The rear end portions of left and right tilted plate members 125, 125 extending in the front-rear direction, which are inclined along the inclined edge portions, are supported on left and right end portions of a rear support shaft 126 provided between the left and right moving plate members 121, 121. The tilted plate members 125, 125 are pivotal upward and downward. A bent portion driven roller 127, which is laterally wide, is rotationally fitted to the rear support shaft 126.

Arcuate slots 128, 128 extending in the vertical direction are formed in the front end portions of the left and right moving plate members 121, 121, and bolts 130, 130 are inserted through these slots 128, 128 from the outside. The distal end portions of the bolts 130, 130 are inserted into weld nuts 129 provided on the left and right tilted plate members 125, 125, so that the moving plate members 121 and the tilted plate members 125 are fastened together and fixed. By loosening the bolts 130, 130, the angle of downward inclination toward the front side of the left and right tilted plate members 125, 125 can be adjusted.

Also, left and right support arms 131, 131 are attached to the outer sides of the front end portions of the left and right tilted plate members 125, 125, and the front end portions of the left and right support arms 131, 131 are connected by a coupling shaft 132. The coupling shaft 132 rotationally supports a front end driven roller 133, which is laterally wide. Additionally, the lower rear portions of the left and right moving plate members 121, 121 extend frontward and downward to form left and right extension end portions. A shaft 149 extends between these extension end portions, and a moving roller 150, which is laterally wide, is rotationally supported on the shaft 149. The moving roller 150 moves together with the moving frame 124 and accommodates changes in the winding circumference of the endless belt 96 caused by the frontward and backward movement of the front end driven roller 133.

Boss members 134, 134 are attached to the outer surfaces of the left and right moving plate members 121, 121 at two front and rear locations, and the boss members 134, 134 are fitted to the left and right guide rails 119, 119 and slidable in the front-rear direction. A gear case 136, to which power is supplied from an extension/contraction electric motor 135, is fixed to the right side surface of the right plate member 115 of the front support base 116. The lower end portion of a swing arm 138, which is oriented in the up-down direction, is fixed to the end portion of the output shaft 137 of the gear case 136 that extends into the right plate member 115. Front and rear end portions of turnbuckle interlocking rods 139, 139 are coupled to the upper end portions of the swing arms 138 and the end portions of the front coupling bar 122 protruding outward from the moving plate members 121.

Accordingly, when the extension/contraction electric motor 135 is driven, the bent portion driven roller 127 and the front end driven roller 133, which are supported on the moving frame 124, move together in a front-rear direction, changing the position of the conveyance termination end portion (front end portion) of the endless belt 96 in a front-rear direction. A section of the endless belt 96 from the bent portion driven roller 127 to the front end driven roller 133 is referred to as the reciprocating conveyor 95 described above. A series of conveying apparatuses in which the endless belt 96 forms a conveying action area is referred to as a conveyor 96W.

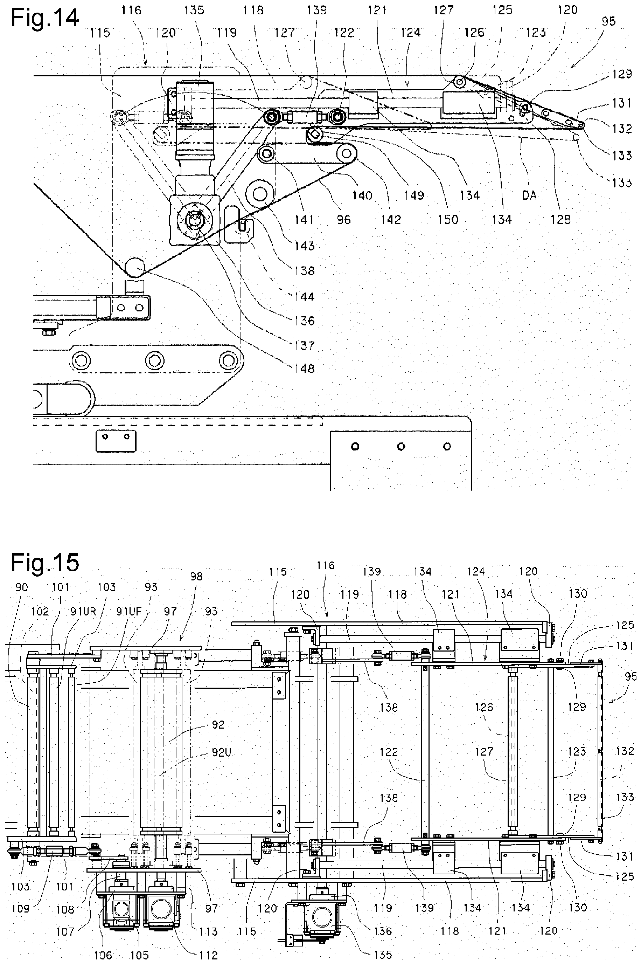

As indicated by a long-dash double-short-dash line in Fig. 14, the front end driven roller 133 is placed lower than the moving roller 150, so that the lower winding area DA of the reciprocating conveyor 95 is inclined downward toward the front side. As a result, during a storing operation in the storing unit 6, which will be described below, the interference with the storing unit 6 caused by a slack in the lower winding area DA of the endless belt 96 is prevented. Furthermore, as shown in Figs. 4 and 14, the bases (rear end portions) of tension arms 140, 140 are attached to the upper rear sections of the left and right plate members 115 of the front support base 116 and pivotal upward and downward about pivot shafts 141, 141.

The free end portions (the front end portions) of the tension arms 140, 140 rotationally support wide tension rollers 142, 142. Although not shown, a locking apparatus is provided to fix the tension arms 140, 140 in an orientation horizontally extending frontward. The tension arms 140, 140 pivot downward when the locking apparatus is unlocked. When the unlocking causes the tension arms 140, 140 to pivot downward, the winding circumference of the endless belt 96 including the tension rollers 142, 142 is shortened, loosening the endless belt 96.

Although not shown, the left side plate 66 of the rear support base 67, the left plate member 97 of the middle support base 98, and the left plate member 115 of the front support base 116 are each formed to be dividable into an upper plate and a lower plate. By removing a coupling plate member coupling the upper plate to the lower plate, the endless belt 96 can be pulled out to the left. This allows the endless belt 96 to be attached and detached.

In addition, an inner guide roller 143, which rolls on and guides the inner circumference surface of the endless belt 96, and an outer guide roller 144, which rolls on and guides the outer circumference surface of the endless belt 96, are provided in a middle section in the vertical direction in the rear portion of the front support base 116. Support stays 145, 145 are fastened with bolts 146, 146 to the left and right sides of the front end portions of the first support members 55. A shaft 147 extends between the left and right support stays 145, 145. A lower driven roller 148, which is laterally wide, is rotationally supported by the shaft 147.

As described above, during an adjustment for increasing the thickness of the cut meat pieces, as the first support member 55 approaches the third support member 53 (descends), the front side of the first support member 55 descends lower than the rear side, causing the first support member 55 to tilt downward toward the front side. At this time, the winding circumference of the endless belt 96 is shortened, thereby loosening the endless belt 96. However, the lower driven roller 148, which is provided in the front end portion of the first support member 55, moves frontward and downward, accommodating the change in the circumference of the endless belt 96. The conveying action unit 5R on the downstream side in the conveyance direction of the conveying unit 5 is thus formed mainly by the reciprocating conveyor 95 described above.

A series of conveying action areas of the endless belt 96 extend from the conveying action unit 5F on the upstream side in the conveyance direction to the conveying action unit 5R on the downstream side in the conveyance direction. Slide contact plate members (not shown) are provided between the above-described rollers to support the lower surface of the upper winding area of the endless belt 96 from below.

Storing Unit

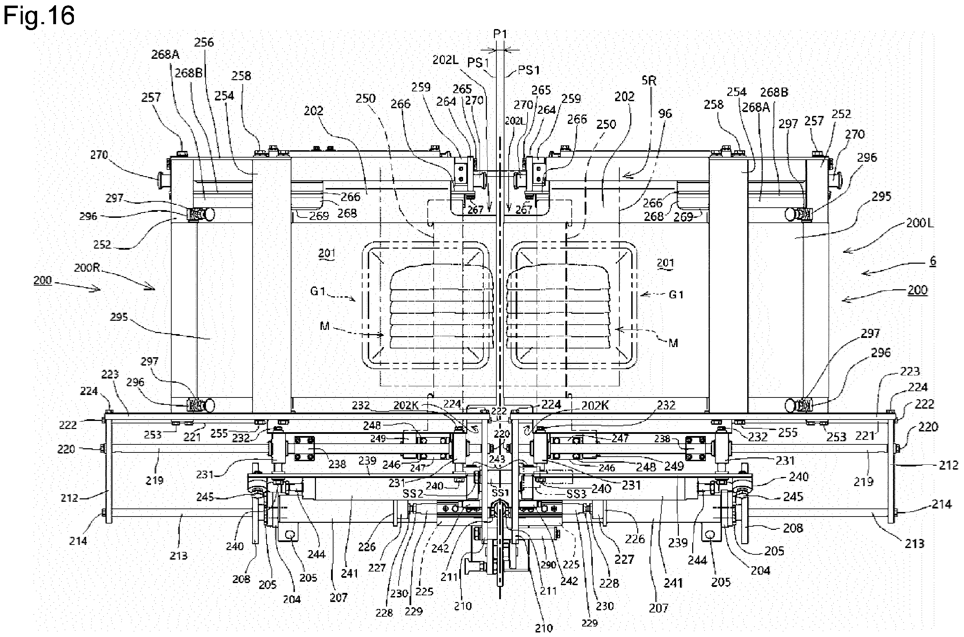

Figs. 16 to 22B show an item moving apparatus 200 having receiving surfaces 201, which are located below the frontward/backward movement range of the conveyance termination end portion of the conveying action unit 5R on the downstream side in the conveyance direction (the conveyance termination end portion of the reciprocating conveyor 95). This item moving apparatus 200 includes a right moving unit 200R and a left moving unit 200L and has substantially horizontal left and right receiving plates 202, 202 having the receiving surfaces 201, 201 at their upper portions. The shape, support structure, and drive structure of the left and right receiving plates 202, 202 of the left and right moving units 200L, 200R are substantially symmetrical in the lateral direction. As such, the following description applies symmetrically to both the left and right moving units 200L, 200R unless otherwise specified.

Support Structure of Storing Unit

The lower end portions of planar left and right support stays 204, 204 are fastened to the upper portion of the machine base 203 with bolts 205, 205, and a lateral fulcrum shaft 206 is inserted in lateral holes provided in the upper end portions of the left and right support stays 204, 204 and rotatable about an axis. A fulcrum shaft cylinder 207, which is fitted to the outer circumference of the fulcrum shaft 206, is rotatable about the axis and slidable in the axial direction.

The lower end portion of a planar upper support stay 208, which is provided on one lateral side (outer side), is fastened with a bolt 209 to one lateral end portion (outer end portion) of the fulcrum shaft 206 that protrudes outward from the lateral outer support stay 204. In addition, the lower end portion of an inner support plate member 210, which is substantially rectangular and located at the other lateral side (inner side), is fastened with a bolt 211 to the other lateral end portion (inner end portion) of the fulcrum shaft 206 that protrudes inward from the lateral inner support stay 204.

Frame of Storing Unit

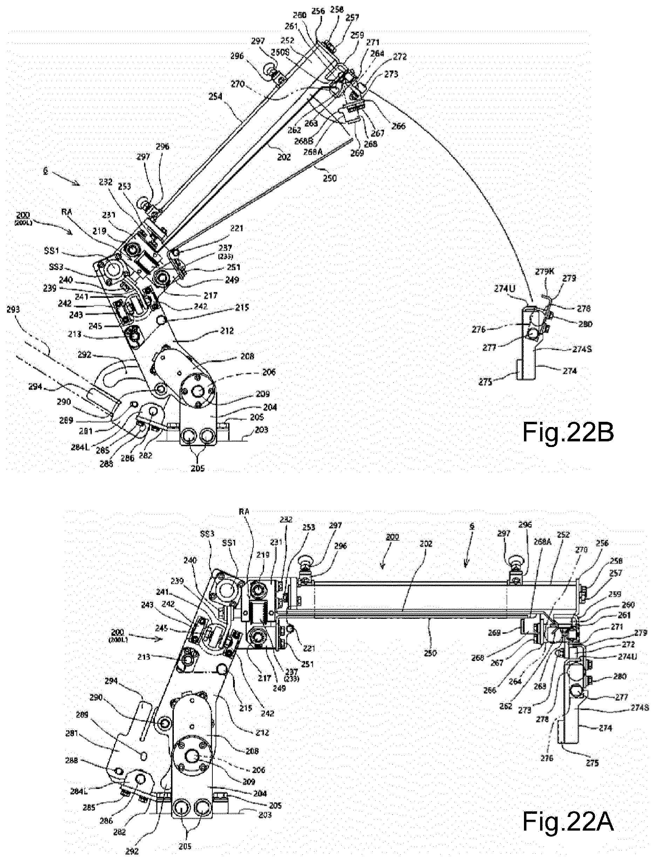

As shown in Figs. 16 to 22B, a substantially rectangular outer support plate member 212 is provided outward of the upper support stay 208 on one lateral side (outer side) with a space in between. The outer support plate member 212 and the inner support plate member 210 are coupled together as described below to form a frame. That is, opposite end portions of a round first coupling bar 213 are positioned on and fastened with bolts 214, 214 to the inner surface of a vertical middle section in the front portion of the inner support plate member 210 and the inner surface of a lower section in the front portion of the outer support plate member 212. A lateral middle portion of the first coupling bar 213 extends through a hole formed in the upper portion of the lateral outer upper support stay 208 and is thus fixed. Opposite end portions of a round lower coupling bar 215 are positioned on and fastened with bolts 216, 216 to the inner surface of the upper portion of the lateral outer upper support stay 208 and the inner surface of a vertical middle section in the front portion of the left or right inner support plate member 210.

Opposite end portions of a round second coupling bar 217 are positioned on and fastened with bolts 218, 218 to the inner surface of the upper section in the rear portion of the inner support plate member 210 and the inner surface of the lower section in the rear portion of the outer support plate member 212. Opposite end portions of a round third coupling bar 219 are positioned on and fastened with bolts 220, 220 to the inner surface of the upper section in the rear portion of the inner support plate member 210 and the inner surface of the upper section in the rear portion of the outer support plate member 212. The third coupling bar 219 is thus arranged directly above the second coupling bar 217.

Opposite end portions of a round fourth coupling bar 221 are positioned on and fastened with bolts 222, 222 to the inner surface of an upper section of the rear end portion of the inner support plate member 210 and the inner surface of a vertical middle section in the rear end portions of the left or right outer support plate member 212. Additionally, the base of a lateral sliding guide bar SS1 is positioned on and is fastened with a bolt SS2 to the left side surface of an upper end section in the vertical middle portion of the inner support plate member 210 of the right moving unit 200R.

The base of a sliding guide cylinder SS3, which has a lateral hole, is positioned and fixed on the left side surface of an upper end section in a vertical middle portion of the inner support plate member 210 of the left moving unit 200L. The distal end portion of the sliding guide bar SS1 is fitted in the hole of the sliding guide cylinder SS3 in a slidable manner. This allows the left and right moving units 200L, 200R to move independently in the axial direction of the fulcrum shaft 206, and a position restriction unit PK is formed that restricts independent upward and downward swinging of the left and right moving units 200L, 200R about the fulcrum shafts 206.

The first coupling bar 213, the second coupling bar 217, the third coupling bar 219, the fourth coupling bar 221, and the sliding guide bar SS1 are arranged horizontally and parallel to one another. The front surfaces of the left and right end portions of a lateral rear coupling plate member 223, which has a narrow vertical width, are placed on and fastened with bolts 224, 224 to the rear end surface of the upper portion of the outer support plate member 212 and the rear end surface of the upper portion of the inner support plate member 210.

Spacing Adjustment Mechanism of Item Moving Apparatus

As shown in Figs. 16 to 22B, the base of a double-acting first air cylinder 225 for adjusting space is attached to the inner surface of the lower front portion of the inner support plate member 210. Also, the base of a stay 226 is fixed to a lateral middle portion of the fulcrum shaft cylinder 207, and a box-shaped holder 227 is fixed to the inner surface of the upper portion of the stay 226, which stands vertically.

The holder 227 has a hollow interior and an opening in the side opposite to the section fixed to the stay 226. The head, which is larger than the above opening, of an adjustment bolt 228 is placed within the holder 227 with a gap formed between the head and the inner wall of the holder 227 such that the adjustment bolt 228 can freely change its orientation. The adjustment bolt 228 has an external thread portion extending inward from the opening. The distal end of this external thread portion is engaged with and thus coupled to an internal thread portion formed in the distal end portion of a piston 229 of the first air cylinder 225 and is fixed with a lock nut 230.

Thus, even if the extension/contraction direction of the piston 229 and the sliding direction of the fulcrum shaft 206 relative to the fulcrum shaft cylinder 207 deviate from parallel orientations, this deviation can be accommodated by the head of the adjustment bolt 228 changing its orientation relative to the holder 227, allowing the fulcrum shaft 206 to smoothly slide. By extending and contracting both the left and right first air cylinders 225, 225, the right and left moving units 200R and 200L move in opposite lateral directions.

In this movement, since the sliding guide bar SS1 fitted in the sliding guide cylinder SS3 is slidable, the relative orientations of the right and left moving units 200R and 200L are maintained. Furthermore, as will be described below, when the item moving apparatus 200 swings upward about the axis of the fulcrum shaft 206, the right and left moving units 200R and 200L integrally swing upward since the sliding guide bar SS1 is fitted in the sliding guide cylinder SS3 in a slidable manner.

Receiving Plate

As shown in Figs. 16 to 22B, the receiving plate 202 is formed from a rectangular stainless steel plate by bending the front edge portion vertically upward, bending the rear edge portion in an orientation of downward inclination toward the front side, bending the lateral outer edge portion in an orientation of downward inclination toward the outside, and rounding the lateral inner edge portion downward. Alternatively, a round bar extending in the front-rear direction may be welded to the lateral inner end portion. Furthermore, a wide roller having a small diameter and rotatable about a front-rear axis may be attached to the lateral inner end portion.

To prevent interference with the inner and outer support plate members 210 and 212, cutout sections 202K, 202K are formed at two front corners of the receiving plate 202. At two rear corners of the receiving plate 202, cutout sections 202L, 202L are formed for the operation of a first index plunger 270, which will be described below. A horizontal receiving surface 201 is formed on the upper side of a middle portion in the front-rear direction of the receiving plate 202 thus formed.

Slide Mechanism of Receiving Plate

As shown in Figs. 16 to 22B, slide members 231, 231, which are arranged at the lateral outer side and the lateral inner side, are fitted to the third coupling bar 219 in a slidable manner. The slide members 231, 231 are at a predetermined distance from each other. The slide members 231, 231 have through-holes through which the third coupling bar 219 extends, and ball-type sliding members for reducing the sliding resistance with respect to the third coupling bar 219 are provided in the through-holes. The slide members 231 encapsulate grease for the sliding members. The rear surfaces of the slide members, 231, 231 are in contact with and fastened with bolts 232, 232 to the bent portion extending vertically upward at the front end portion of the receiving plate 202.

Interlocking Means by Timing Belt

A first timing pulley 233 is supported on the lower portion of the outer slide member 231 and rotatable about an axis 234 in the front-rear direction. A second timing pulley 235 is supported on the lower portion of the inner slide member 231 and rotatable about an axis 236 in the front-rear direction. The effective diameters of the first and second timing pulleys 233 and 235 are set to be equal.

A timing belt 237 is wound around the first and second timing pulleys 233 and 235. A part of the upper winding area of the timing belt 237 is fixed to the longitudinal center portion of the third coupling bar 219 via a fixing member 238. The upper portion of the fixing member 238 is fastened to the third coupling bar 219 such that its longitudinal position is adjustable. The lower portion of the fixing member 238 is fixed to and holds a part of the timing belt 237. That is, the fixing member 238 holds a part of the upper winding area of the timing belt 237 at a fixed point.

Additionally, the outer and inner slide members 231, 231 are connected with bolts 240, 240 to left and right end portions of a lateral support plate member 239, which is arranged in front of and spaced from the slide members 231, 231. The distal end portions of the bolts 240, 240 may have shaft portions to rotationally support the first timing pulley 233 and the second timing pulley 235. The first timing pulley 233, the second timing pulley 235, the timing belt 237, the fixing member 238, a first slider 246, and a pulling plate member 250 form an interlocking means RA, which moves a transfer belt 295 in conjunction with the movement of the receiving plate 202.

Sliding Drive

The base of the sliding double-acting second air cylinder 241 is supported by a pin 243 extending in the front-rear direction on front and rear stays 242, 242 attached to the inner surface of an upper section in a middle portion in the front-rear direction of the inner support plate member 210. The distal end portion of a piston 244 of the second air cylinder 241 is coupled with a bolt 245 to the lower end portion of the bent portion bent downward from the outer end of the support plate member 239.

Pneumatic Circuit

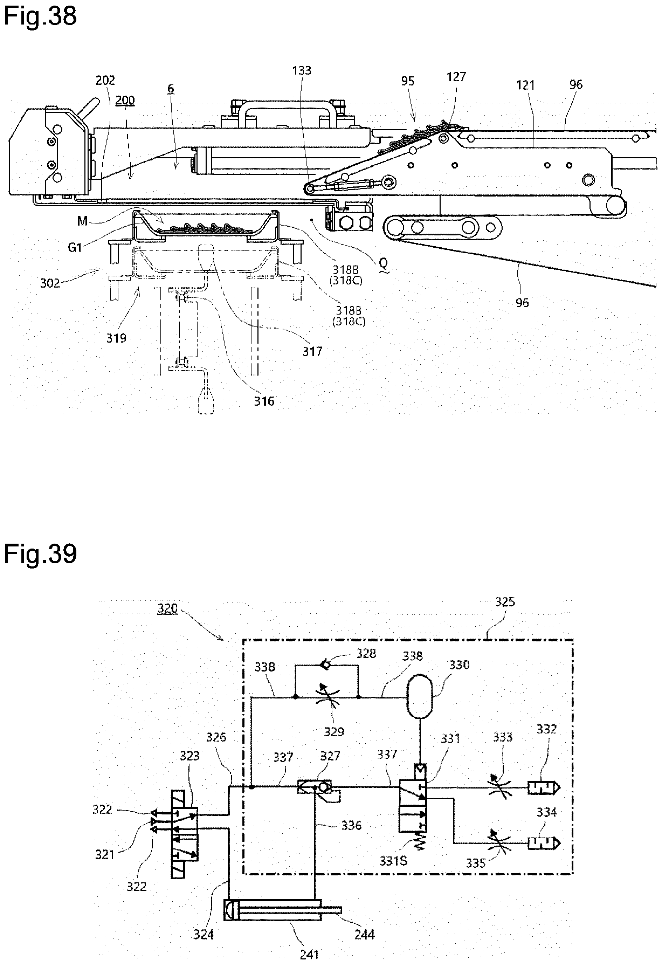

The left and right second air cylinders 241, 241 each have a pneumatic circuit 320 shown in Fig. 39. This pneumatic circuit 320 has an electromagnetic switching valve 323, which switches the directions of supply and discharge of air supplied from a pneumatic pump (not shown) to extend and contract the piston 244 of the second air cylinder 241.

The three ports on one side of the electromagnetic switching valve 323 are connected to an IN port 321 communicating with the upstream pneumatic pump and two OUT ports 322 in a switchable manner. The two ports on the other side of the electromagnetic switching valve 323 communicate with a first flow passage 324, which communicates with a port of the second air cylinder 241 on the extension side, and a second flow passage 326, which communicates with a buffer/speed adjusting circuit 325, in a switchable manner. The buffer/speed adjusting circuit 325 includes a pilot check valve 327, which is switchable between two flow directions, a check valve 328, a manually operated first variable throttle valve 329, an air tank 330, and a two-position switching valve 331, a first atmosphere release apparatus 332 for buffering, a manually operated second variable throttle valve 333 for adjusting the amount of air sent to the first atmosphere release apparatus 332, and a second atmosphere release apparatus 334 for speed adjustment, and a manually operated third variable throttle valve 335 for adjusting the amount of air sent to the second atmosphere release apparatus 334.

A third flow passage 336 branched from the pilot check valve 327 communicates with the port on the contraction side of the second air cylinder 241. One end of a fifth flow passage 338 communicates with a middle portion of the fourth flow passage 337 communicating with the second flow passage 326 in the buffer/speed adjusting circuit 325, and the other end of the fifth flow passage 338 communicates with the air tank 330. The check valve 328 and the first variable throttle valve 329 are connected in parallel to a middle portion of the fifth flow passage 338. One side of the pilot check valve 327 communicates with a middle portion of the fourth flow passage 337, and the other side of the fourth flow passage 337 communicates with the IN port of the two-position switching valve 331.

The OUT port of the two-position switching valve 331 selectively communicates with the first atmosphere release apparatus 332 and the second atmosphere release apparatus 334 by the switching operation of the two-position switching valve 331. The switching operation of the two-position switching valve 331 is performed according to the amount of air remaining in the air tank 330. The second variable throttle valve 333 is connected between the OUT port of the two-position switching valve 331 and the first atmosphere release apparatus 332, and the third variable throttle valve 335 is connected between the OUT port of the two-position switching valve 331 and the second atmosphere release apparatus 334. Thus, in a state in which the electromagnetic switching valve 323 is switched to the position of one side shown in Fig. 39 in response to an output from the controller to a switching solenoid 323S, the air entering from the IN port 321 flows from the second flow passage 326 to the fourth flow passage 337 and the pilot check valve 327 without any resistance and also flows through the third flow passage 336 into the port on the contraction sides of the second air cylinder 241, causing the piston 244 of the second air cylinder 241 to perform a contraction operation at high speed. As a result, the receiving plates 202 slide laterally inward, and the space between the opposing end portions of the left and right receiving plates 202, 202 becomes the minimum space P1.

Part of the air flowing into the fourth flow passage 337 passes through the fifth flow passage 338 and the check valve 328 and flows into the air tank 330, so that pressure accumulates in the air tank 330. This accumulated pressure maintains the two-position switching valve 331 in the position shown in Fig. 39 overcoming the elastic force of a return spring 331S. In this state, the pilot check valve 327 blocks air from the fourth flow passage 337 to the two-position switching valve 331.

Then, when the electromagnetic switching valve 323 is switched to the position on the other side in response to an output from the controller to the switching solenoid 323S, the air entering from the IN port 321 flows from the first flow passage 324 to the port on the extension side of the second air cylinder 241, causing the piston 244 of the second air cylinder 241 to start extension operation at high speed. As a result, the receiving plates 202 start to slide laterally outward. During this sliding motion, the air in the contraction side chamber of the second air cylinder 241 is discharged to the third flow passage 336 by the movement of the piston 244 to the extension side. The air then flows through the pilot check valve 327 and then the open side of the fourth flow passage 337 and reaches the IN port of the two-position switching valve 331.

The air reaching the IN port of the two-position switching valve 331 flows out from the OUT port of the two-position switching valve 331. The third variable throttle valve 335 regulates the flow rate of this air, which is then discharged to the outside from the second atmosphere release apparatus 334. The regulated discharge flow rate caused by the third variable throttle valve 335 regulates the discharge amount from the contraction side chamber of the second air cylinder 241. Thus, the extension speed of the piston 244 of the second air cylinder 241 is set at a fixed high speed, thereby maintaining a constant speed at which the receiving plate 202 slides laterally outward. The extension speed of the piston 244 of the second air cylinder 241, that is, the sliding speed of the receiving plate 202, can be changed by manually adjusting the third variable throttle valve 335.

While the piston 244 of the second air cylinder 241 is performing extension operation at high speed, the air accumulated in the air tank 330 flows out to the fifth flow passage 338 and is gradually discharged to the OUT port 322 after passing through the second flow passage 326 and the electromagnetic switching valve 323 with the first variable throttle valve 329 regulating the flow rate the air. Then, when the air accumulated in the air tank 330 is exhausted, the elastic force of the return spring 331S switches the two-position switching valve 331. This results in a state in which the air that has passed through the pilot check valve 327 and the open side of the fourth flow passage 337 is discharged to the outside through the first atmosphere release apparatus 332 while its flow rate is regulated by the second variable throttle valve 333.

This state occurs immediately before the piston 244 of the second air cylinder 241 reaches the stroke end in the extension direction, and the extension speed of the piston 244 is significantly reduced from the speed before this state. This alleviates the impact created when the piston 244 reaches the stroke end in the extension direction, reducing the occurrence of impact and sound due to a sudden stop of the receiving plate 202.

Pulling Plate Member

The first slider 246 is supported in a slidable manner on the second coupling bar 217 located directly under the third coupling bar 219, and the first slider 246 is located directly under the lower winding area of the timing belt 237. The upper surface of the first slider 246 and the lower surface of a plate member 247, which is attached to the upper portion of the first slider 246, vertically sandwich a part of the lower winding area of the timing belt 237. The plate member 247 is fastened to the first slider 246 with a bolt 248.

Second sliders 249, 249, which include ball-type sliding members and encapsulate grease, are provided at left and right sides of the first slider 246. These second sliders 249, 249 are supported by the second coupling bar 217 and slidable and pivotal relative to the second coupling bar 217. The pulling plate member 250, which has a vertical portion and a horizontal portion and is bent into an L-shape, is fastened to the rear surfaces of the left and right second sliders 249, 249 at its vertical portion with a bolt 251.

This integrates the pulling plate member 250 with the two second sliders 249, 249 sandwiching the first slider 246. The supported pulling plate member 250 is slidable in the lateral direction and pivotal upward and downward. The front and rear end sections of the horizontal portion of the pulling plate member 250 are formed to be wider than the middle section in the front-rear direction so that the end portions of the transfer belt 295 are retained in a stable manner.

Supporting of Receiving Plate and Rear End Portion of Pulling Plate Member, and Upper Pivot Mechanism of Item Moving Apparatus

As shown in Figs. 16 to 22B, the front end portion of a circular-cylinder frames 252 elongated in the front-rear direction is positioned on and fastened with a bolt 253 to a lateral outer portion of the rear surface of the rear coupling plate member 223. Also, the front end portion of a square-cylinder frame 254 elongated in the front-rear direction is placed on and fastened with a bolt 255 to a lateral middle portion of the rear surface of the rear coupling plate member 223. The rear end portion of the circular-cylinder frame 252 and the rear end portion of the square-cylinder frame 254 are in contact with and fastened with bolts 257, 258 to the front surfaces of left and right end portions of a coupling plate 256. As shown in Figs. 22A and 22B, a holder 259 having an inverted L-shaped cross-section is fixed to the lower end portion of the coupling plate 256.

The upper surface of a first plastic rail 260 is in contact with the lower surface of the upper side portion of the holder 259, the lower surface of the first plastic rail 260 is in contact with a plate 261, and a drop prevention plate 262 is placed on and fastened together with a bolt 263 to the lower surface of the plate 261. The first plastic rail 260 has a trapezoidal cross-sectional shape in which the upper side is longer than the lower side, and an inclined guide surface 260S, which is oriented to incline downward toward the front side, is formed on the front side. This inclined guide surface 260S comes into slide contact with and guides the rear edge portion, which is inclined downward toward the rear side, in the rear end portion of the receiving plate 202 from the upper side. This restricts the upward pivoting of the receiving plate 202 about the axis of the third coupling bar 219.

The drop prevention plate 262 is bent to have an L-shaped cross-section, and its front side portion is inclined downward toward the front side in the fixed state described above. As such, when the item moving apparatus 200 pivots upward about the fulcrum shaft 206 as will be described below, the rear end of the receiving plate 202 comes into contact with the upper surface of the front side portion, which is inclined downward toward the front side, so that the receiving plate 202 will not pivot and drop downward.

One of the end portions of each of the support arms 264, 264 is attached to left and right end portions of the holder 259 with bolt pins 265 and is pivotal upward and downward. Left and right end portions of an attachment plate member 266 are fastened with bolts 267 to the other end portions of the left and right support arms 264, 264. A laterally elongated second plastic rail 268 in contact with the front surface of the attachment plate member 266 is sandwiched between and fastened to a plate member 269 in contact with the front surface of the second plastic rail 268 and the attachment plate member 266.

As shown in Figs. 22A and 22B, the second plastic rail 268 has a first planar portion 268A in its front upper portion. The first planar portion 268A supports and guides the lower surface of the rear end portion of the pulling plate member 250 in a slidable manner. The rear upper portion of the second plastic rail 268 protrudes upward, and a second planar portion 268B, which supports and guides the lower surface of the rear end portion of the receiving plate 202 in a slidable manner, is formed in the upper end portion. The left and right support arms 264, 264 described above include first index plungers 270, 270 for locking and unlocking the upward and downward pivoting. The upper end portion of the support plate member 271 is fixed to the front side of the lower end portion of the holder 259 described above, and multiple guide rollers 272 rotatable about an axis in the front-rear direction are fixed with a pin bolt 273.

As shown in Figs. 22A and 22B, the lower end portion of the vertical support plate member 274 is fixed to a frame 275 integrated with the machine base 203. Left and right end portions and the upper portion of the support plate member 274 are bent rearward, forming side wall portions 274S and an upper wall 274U. Left and right pivot arms 276, 276 are attached to the upper portion of the side wall portion 274S with bolt pins 277, 277 and pivotal upward and downward.

Of the pivot arms 276, 276, a second index plunger 278 is attached to the lateral outer pivot arm 276. The second index plunger 278, which is capable of fixing the pivot arm 276 in an upright position orientation, is attached to the lateral outer pivot arm 276 by the engagement between the side wall portion 274S and a nose. Additionally, the front surface of a lock plate 279, which is bent into an inverted L shape in a side view, is in contact with and fastened with bolts 280, 280 to the rear surfaces of the left and right pivot arms 276, 276. A restriction unit 279K, which is bent frontward, is formed in the upper portion of the lock plate 279.

Upper Swing Mechanism of Item Moving Apparatus

As shown in Figs. 16 to 22B, a sectoral pivot plate member 281 is placed in a vertical orientation between the inner support plate members 210, 210 provided in the left and right moving units 200L, 200R. A support plate member 282 is fixed to the machine base 203 with bolts 283, and a left stay 284L and a right stay 284R in upright orientations are fastened to the frontward extension portion of the support plate member 282 with bolts 285, and the lower portion of the pivot plate member 281 is located between the left and right stays 284L and 284R.

A lateral shaft 286 supports the lower portion of the pivot plate member 281 between the left and right stays 284L and 284R such that the pivot plate member 281 can swing frontward and rearward. The right stay 284R is formed higher than the left stay 284L, and a third index plunger 287 is attached to the upper portion of the right stay 284R.

A first through-hole 288 is formed in a section in the lower portion of the pivot plate member 281 that is frontward of the shaft 286. With the nose of the third index plunger 287 inserted into the first through-hole 288, the pivot plate member 281 is held in an orientation that is inclined upward toward the rear side. A second through-hole 289 is formed in a section of the pivot plate member 281 that is above the shaft 286. With the pivot plate member 281 rotated frontward, the nose of the third index plunger 287 is inserted in the second through-hole 289.

Then, the right end portion of a lateral swing support shaft 290 is fastened with a bolt 291 to a lower center portion in the front-rear direction of the inner support plate member 210 of the right moving unit 200R. Also, the left section of the swing support shaft 290 extends through a hole formed in a lower center portion in the front-rear direction of the inner support plate member 210 of the left moving unit 200L in a slidable manner. The swing support shaft 290 extends further to the left.

As shown in Figs. 22A and 22B, an arc-shaped cam groove 292 extends through the pivot plate member 281. The cam groove 292 is formed such that its lower section is closer to the shaft 286 and its upper section is farther from the shaft 286. The above-described swing support shaft 290 is inserted in the cam groove 292. Furthermore, an upward extension portion 294, which is engageable with an operating tool 293, such as an elongate pipe, is integrally formed with the rear portion of the pivot plate member 281.

Upward Swing of Item Moving Apparatus

As shown in Fig. 22A, in a state in which the nose of the second index plunger 278 engages with the side wall portion 274S, a lock plate 279 stands upright together with the pivot arms 276, 276. In this state, the guide roller 272 rests on the upper surface of the upper wall 274U, and the restriction unit 279K is located above the guide roller 272. This allows the guide roller 272 to be supported on the upper wall 274U and roll in the lateral direction. Also, the restriction unit 279K limits the lifting of the guide roller 272.

As a result, the lower surface of the rear end portion of the receiving plate 202 of the item moving apparatus 200 is supported on the upper surface of the second planar portion 268B of the second plastic rail 268, maintaining the receiving plate 202 in a substantially horizontal orientation. The lower surface of the rear end portion of the pulling plate member 250 is supported on the upper surface of a first planar portion 268A of the second plastic rail 268 and is maintained in an orientation along the lower surface of the receiving plate 202. In this state, the item moving apparatus 200 stores meat pieces in containers.

In contrast, as shown Fig. 22B, to perform maintenance of the item moving apparatus 200, a knob of the second index plunger 278 is pulled to separate the nose from the side wall portion 274S, and the restriction unit 279K, which is formed in the upper portion of the lock plate 279, is retracted rearward from the upper side of the guide roller 272. As a result, the left and right moving units 200L, 200R are allowed to swing upward about the fulcrum shaft 206.

Also, the knob of the third index plunger 287 is pulled to separate the nose from the first through-hole 288, allowing the pivot plate member 281 to swing rearward. In this state, the operator fits the operating tool 293 to the upward extension portion 294 of the pivot plate member 281 and operates the operating tool 293 frontward and downward to cause the pivot plate member 281 to swing rearward. This rearward swing motion of the pivot plate member 281 causes the cam groove 292 to swing about the shaft 286, and the slide contact between the swing support shaft 290 and the inner edge of the cam groove 292 that is farther from the shaft 286 pulls (pushes) the swing support shaft 290 downward.

This allows the item moving apparatus 200, which includes the left and right moving units 200L, 200R, to swing frontward and upward about the fulcrum shaft 206 with a light operating force. At this time, the position restriction unit PK allows the left and right moving units 200L, 200R to integrally swing frontward and upward. When the item moving apparatus 200 swings frontward and upward and is thus opened, the center of the gravity of the item moving apparatus 200 has moved from the front side to the rear side of the fulcrum shaft 206. Additionally, inserting the nose of the third index plunger 287 into the second through-hole 289 holds the item moving apparatus 200 open in a stable manner.

As shown in Fig. 22B, while the item moving apparatus 200 is open, the downward pivoting of the pulling plate member 250 is restricted by contact with the fourth coupling bar 221. Opening the item moving apparatus 200 opens the upper side of a tray conveying apparatus 305 provided in a clearance Q described below, facilitating the maintenance of the tray conveying apparatus 305.

Attachment and Detachment Structure of Transfer Belt

As shown in Fig. 16, in forming each pulling plate member 250 described above, the two front and rear end portions are formed wide, an elongate middle portion in the front-rear direction is formed narrow, and cutout sections in the front-rear direction are formed at the corners where the narrow section transitions to the wide sections. The transfer belt 295 is installed with the item moving apparatus 200 open as shown in Fig. 22B.

In this state, the knob of the first index plunger 270 is pulled to unlock the left and right support arms 264, 264, and the left and right support arms 264, 264 are rotated downward. Accordingly, the second plastic rail 268 retracts downward, and the pulling plate member 250, which was supported by the second plastic rail 268, is allowed to pivot downward. The downward pivoting of the pulling plate member 250 about the second coupling bar 217 is restricted at the position at which the lower surface of the front end portion of the pulling plate member 250 comes into contact with the fourth coupling bar 221. The downward pivoting (dropping) of the rear end portion of the receiving plate 202, which was supported by the second plastic rail 268, is stopped when it comes into contact with the drop prevention plate 262.

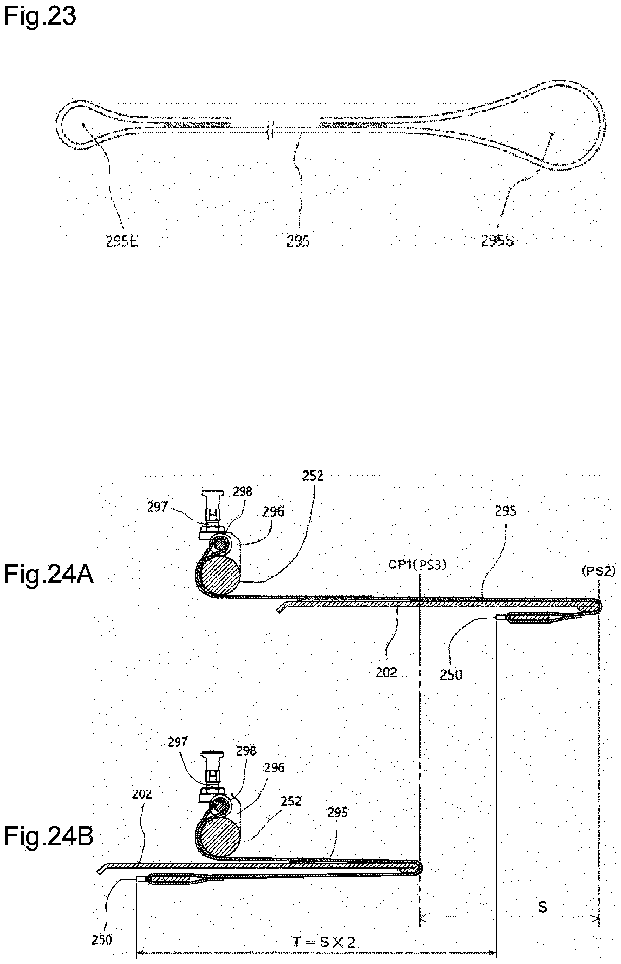

In this state, as shown in Fig. 23, the pulling plate member 250 is inserted into a first gap 295S formed by folding one end of the transfer belt 295 in a loop shape. Front and rear end portions of the section of the transfer belt 295 surrounding the first gap 295S are hooked on the front and rear cutout sections formed in the pulling plate member 250. Thus, one end of the transfer belt 295 is attached to the pulling plate member 250 so as to be pulled and moved by the pulling plate member 250.

The bases of hook members 296 are fixed to the front end portion and the rear portion of the circular-cylinder frame 252 described above. Openings, which open obliquely outward and upward, are formed in the upper portions of the hook members 296, and fourth index plungers 297, 297 having noses for closing the entrances of the openings are provided. Thus, the entrances of the openings are closed with the distal ends of the noses of the fourth index plungers 297, 297 fitted in the holes formed in the circumference surface of the circular-cylinder frame 252. When the knobs of the fourth index plungers 297, 297 are pulled up causing the noses to be pulled out of the holes and retract upward, the entrances of the openings are opened.

Additionally, a round bar 298, which is longer than the front-rear width of the transfer belt 295, is inserted into a second gap 295E formed by folding the other end of the transfer belt 295 in a loop shape. The other end of the transfer belt 295 is pulled laterally inward along the lower surface of the receiving plate 202, and then wound around the lateral inner edge of the receiving plate 202 to be folded back over the upper side of the receiving plate 202. The other end of the transfer belt 295 is pulled laterally outward along the upper surface of the receiving plate 202, extended under the square-cylinder frame 254 and the circular-cylinder frame 252, and then folded back around the outer circumference surface of the circular-cylinder frame 252. Then, the front and rear end portions of the round bar 298 inserted into the other end of the transfer belt 295 are fitted into the openings of the front and rear hook members 296, 296 and retained.

In this state, the nose distal ends of the front and rear fourth index plungers 297, 297 are fitted into holes formed in the circumference surface of the circular-cylinder frame 252 to prevent the round bar 298 from dropping out of the openings of the hook members 296, 296. As a result, the other end of the transfer belt 295 is attached to and fastened to the circular-cylinder frame 252 at a fixed point.

As described above, the lower surface of the upper winding area of the transfer belt 295 slides and is supported on the receiving surface 201 formed in the upper surface of the receiving plate 202. A configuration may also be used in which a groove is formed in the front-rear direction in the circumference surface of the circular-cylinder frame 252, a round bar 298 is inserted through the other end of the transfer belt 295 and then inserted into the groove, and the dropping of the round bar 298 is prevented by the fourth index plungers 297, 297. The operation of removing the transfer belt 295 is performed in the reverse order of the above.

Operation of Main Part of Item Moving Apparatus

In the following description, a first position PS1, a second position PS2, and a third position PS3 are determined with reference to the position of the inner end portion of the receiving surface 201 or the receiving plate 202 supporting the transfer belt 295.

First Position

While the inner end portion of the receiving surface 201 or the receiving plate 202 supporting the transfer belt 295 is located at the first position PS1, the receiving surface 201 or the receiving plate 202 covers the entire area of the upper side of the tray G1 that is conveyed to under the receiving surface 201 or the receiving plate 202 (this state refers to a state in which the receiving surface 201 or the receiving plate 202 overlaps the entire area of the tray G1 in a plan view). Then, while the inner end portions of the left and right receiving surfaces 201, 201 or the left and right receiving plates 202, 202 supporting the left and right transfer belts 295, 295 are positioned at the first positions PS1, PS1, meat pieces m or the aggregates M of meat pieces m, which are conveyed in two rows, are supplied onto the left and right transfer belts 295, 295 from the conveyance termination end portion of the reciprocating conveyor 95.

Movement from First Position to Second Position

In a state in which the inner end portions of the left and right receiving surfaces 201, 201 or the receiving plates 202, 202 supporting the left and right transfer belts 295, 295 have moved to the second positions PS2, PS2, which are separated outward from the first positions PS1, PS1 by a slight distance, the receiving surfaces 201, 201 or the receiving plates 202, 202 substantially cover the upper sides of the two adjacent trays G1, G1 that are conveyed to under the receiving surfaces 201, 201 or the receiving plates 202, 202 (this state includes a state in which small parts of the end portions of the trays G1, G1 are uncovered and exposed in a plan view). The movement of the inner end portions of the left and right receiving surfaces 201, 201 or the left and right receiving plates 202, 202 from the first positions PS1, PS1 to the second positions PS2, PS2 increases the lateral space between the meat pieces m or the aggregates M of meat pieces m on the left and right transfer belts 295, 295 on the left and right receiving surfaces 201, 201. The meat pieces m are thus positioned at locations that allow the meat pieces m to be placed onto the two adjacent trays G1, G1 that are ready under the aggregates M.

The adjustment amount of the lateral space between the meat pieces m or the aggregates M on the left and right transfer belts 295, 295 depends on the lateral space between the two conveyance passages 20, 20 of the meat block conveying apparatus 9 in the cutting unit 4 and the conveyance pitch of a large number of trays G1 conveyed by the tray conveying apparatus 305. The conveyance pitch of a large number of trays G1 conveyed by the tray conveying apparatus 305 depends on the lateral width the tray G1 itself, so that the conveyance pitch can be reduced only to a certain degree.

In contrast, the lateral space between the two rows of meat pieces m or the aggregates M, which are cut out by the cutting unit 4 and conveyed, is determined by the lateral space between the two conveyance passages 20, 20 of the meat block conveying apparatus 9. The distance between the centers of two adjacent trays G1, G1 (food trays of generally used specifications) conveyed at the above-mentioned conveyance pitch is longer (laterally wider) than the distance between the centers of the two conveyance passages 20, 20 of the meat block conveying apparatus 9. As such, to place two rows of meat pieces m or aggregates M onto the two adjacent trays G1, G1, the lateral space between the meat pieces m or the aggregates M that have been transferred in two rows with a narrow space has to be increased to eliminate the difference between the two center-to-center distances.

For this reason, as described above, the inner end portions of the left and right receiving surfaces 201, 201 or the left and right receiving plates 202, 202 supporting the left and right transfer belts 295, 295 are moved from the first positions PS1, PS1 to the second positions PS2, PS2 to increase the lateral space between the meat pieces m or the aggregates M of meat pieces m on the left and right transfer belts 295, 295 on the left and right receiving surfaces 201, 201, thereby positioning the meat pieces m at locations that allow the meat pieces m to be placed onto the two adjacent trays G1, G1 that are ready under the meat pieces m.

Movement from Second Position to Third Position

In a state in which the inner end portions of the left and right receiving surfaces 201, 201 or the receiving plates 202, 202 supporting the left and right transfer belts 295, 295 have moved significantly outward from the second positions PS2 and located at the third positions PS3, the receiving surfaces 201, 201 or the receiving plates 202, 202 are retracted from the upper sides of the trays G1 that have been conveyed to under the receiving surfaces 201, 201 or the receiving plates 202, 202, so that the entire areas above the trays G1 are open. As the inner end portions of the left and right receiving surfaces 201, 201 or the left and right receiving plates 202, 202 move to the outward third positions PS3, PS3, the left and right transfer belts 295, 295 on the left and right receiving surfaces 201, 201 move inward relative to the left and right receiving plates 202, 202. As a result, the meat pieces m or the aggregates M on the left and right transfer belts 295, 295 are lowered and placed onto the two trays G1, G1 without changing their lateral positions.

Description of Operation of Receiving Plate and Transfer Belt Portion

Figs. 24A and 24B are front views illustrating the operating states of the left and right moving units 200L, 200R after the units have moved outward (away from each other) in response to a contraction operation of the first air cylinders 225, 225. That is, in the state shown in Fig. 24A, the left and right first air cylinders 225, 225 are shortened, and the inner end portions of the receiving surfaces 201, 201 or the receiving plates 202, 202 supporting the transfer belts 295, 295 have been moved from the first positions PS1, PS1, which cover the entire upper sides of the two trays G1, G1 conveyed to under the receiving surfaces 201, 201 or the receiving plates 202, 202, to the second positions PS2, PS2, which are separated outward from the first positions PS1, PS1 by a slight distance.

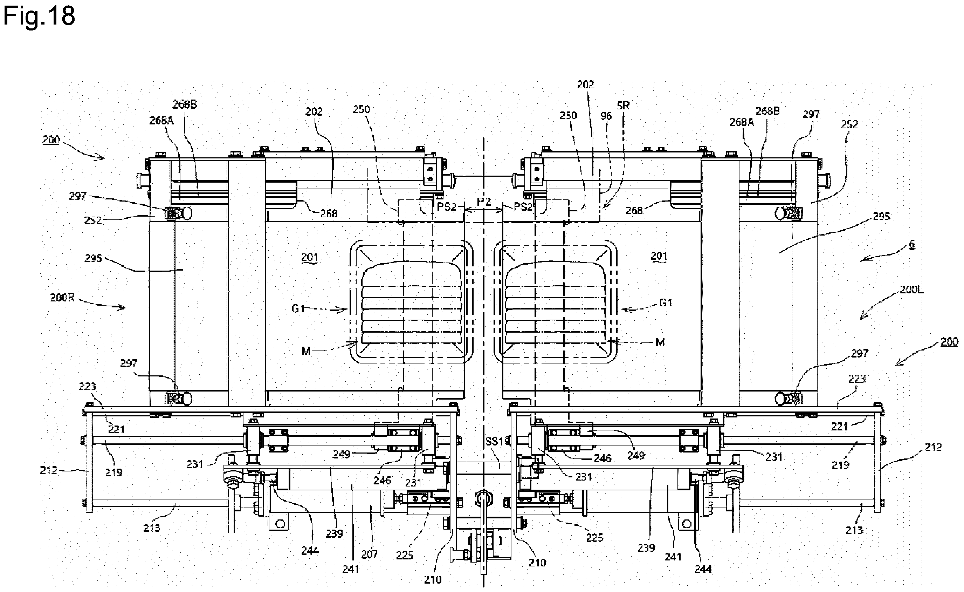

As a result, the space between the inner end portions of the left and right receiving plates 202, 202 is increased from P1 shown in Fig. 16 to P2 shown in Fig. 18. In this state, the receiving surfaces 201, 201 or the receiving plates 202, 202 supporting the transfer belts 295, 295 substantially cover the upper sides of the two trays G1, G1 conveyed to under the receiving surfaces 201, 201 or the receiving plates 202, 202.

Also, the left and right second air cylinders 241, 241 are shortened, and the left and right receiving plates 202, 202 integrated with the distal end portions of the pistons 244, 244 of the second air cylinders 241, 241 have been moved inward of the item moving apparatus 200. As shown in Fig. 24B, when the second air cylinder 241 extends from this state, the inner end portion of the receiving surface 201 or the receiving plate 202 supporting the transfer belt 295 moves from the second position PS2 to the third position PS3. Together with the receiving plate 202, the axis 234 of the first timing pulley 233, which is integrated with the distal end portion of the piston 244 of the second air cylinder 241, and the axis 236 of the second timing pulley 235 move outward through the full stroke.

The fixing member 238 holds a part of the upper winding area of the timing belt 237, which is wound around the first and second timing pulleys 233 and 235, at a fixed position. As such, when the axis 234 of the first timing pulley 233 and the axis 236 of the second timing pulley 235 move outward, the lower winding area of the timing belt 237 moves outward while the two timing pulleys 233, 235 rotate in the same direction. As a result, the first slider 246 attached to the lower winding area of the timing belt 237 moves outward together with the pulling plate member 250, and the pulling plate member 250 pulls one end of the transfer belt 295 outward.

The transfer belt 295 extends along the upper surface of the receiving plate 202, is folded back at the inner end portion of the receiving plate 202, and then extends along the lower surface of the receiving plate 202. To move the inner end portion of the receiving plate 202 outward without causing the transfer belt 295 to slacken, the pulling plate member 250 has to be moved outward by a distance twice as long as the amount of outward movement of the receiving plate 202. That is, as shown in the state change from Fig. 24A to Fig. 24B, it is assumed that an imaginary fixed point CP1 is set in a section of the transfer belt 295 over the receiving plate 202 (Fig. 24A) and the inner end of the receiving plate 202 supporting the transfer belt 295 moves to this imaginary fixed point CP1 (Fig. 24B).

At this time, in comparison to the first moving distance S the inner end of the receiving surface 201 or the receiving plate 202 supporting the transfer belt 295 moves to reach the imaginary fixed point CP1, the outer end portion of the pulling plate member 250 has to move by the second moving distance T, which is twice as long as the first moving distance S. To this end, the mechanism including the timing belt 237 and the two timing pulleys 233, 235 described above is provided. The mechanism allows the outward moving speed of the pulling plate member 250 to be double the outward moving speed of the receiving surface 201 or the receiving plate 202 (the extension speed of the piston 244 of the second cylinder 241). Consequently, when the receiving surface 201 or the receiving plate 202 supporting the transfer belt 295 moves from the second position PS2 to the third position PS3, the transfer belt 295 slides relative to the receiving surface 201 in the direction opposite to the moving direction of the receiving surface 201 at the same speed.

Fig. 24A shows a closed state in which the receiving plate 202 or the receiving surface 201 supporting the transfer belt 295 is located above the tray G1 and substantially covers the upper side of the tray G1. Fig. 24B shows an open state in which the receiving plate 202 (receiving surface 201) is retracted from above the tray G1 to open the upper side of the tray G1. In the state of Fig. 24B, the folding movement of the transfer belt 295 at the inner end portion of the receiving plate 202 causes the meat pieces m or the aggregate M on the transfer belt 295 to be peeled off from the surface of the transfer belt 295 and fall into the tray G1 to be stored. That is, the meat pieces m or the aggregate M that has been placed on the transfer belt 295 on the receiving surface 201 from the conveyance termination end portion of the conveying action unit 5R on the downstream side in the conveyance direction falls and is thus lowered to be placed and stored in the tray G1 directly below without changing its position in the lateral and front-rear directions.

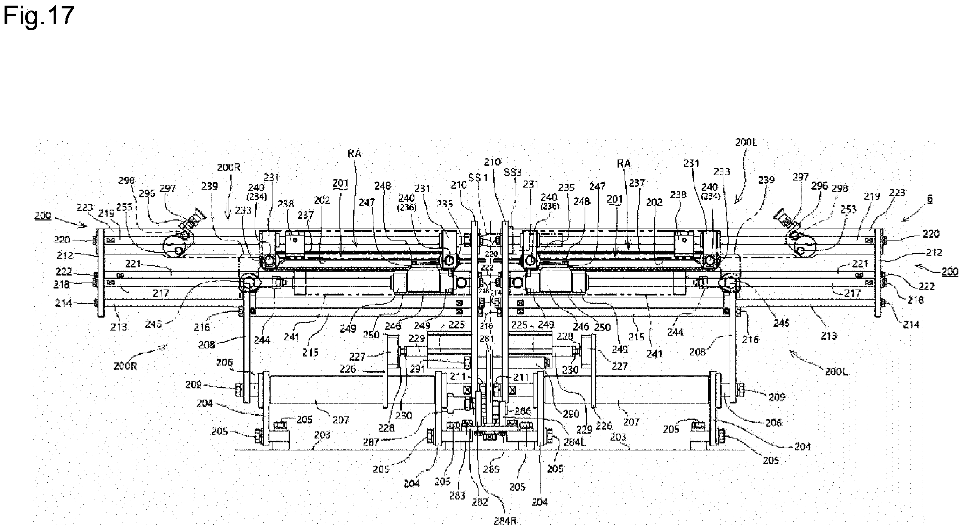

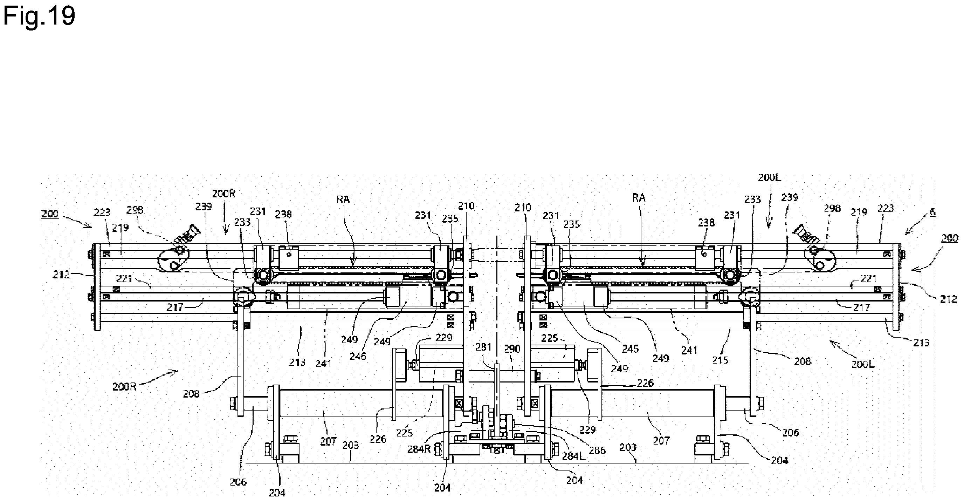

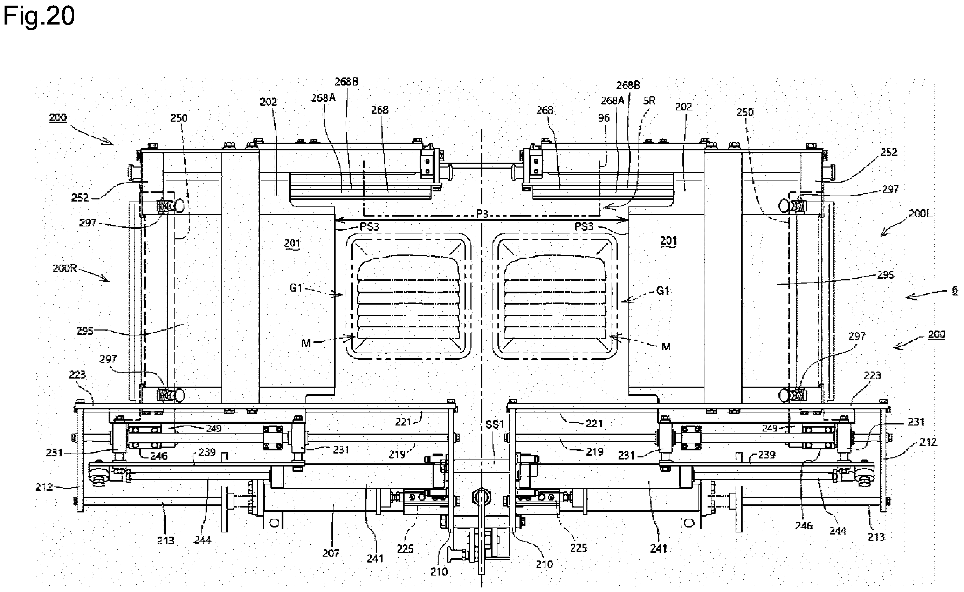

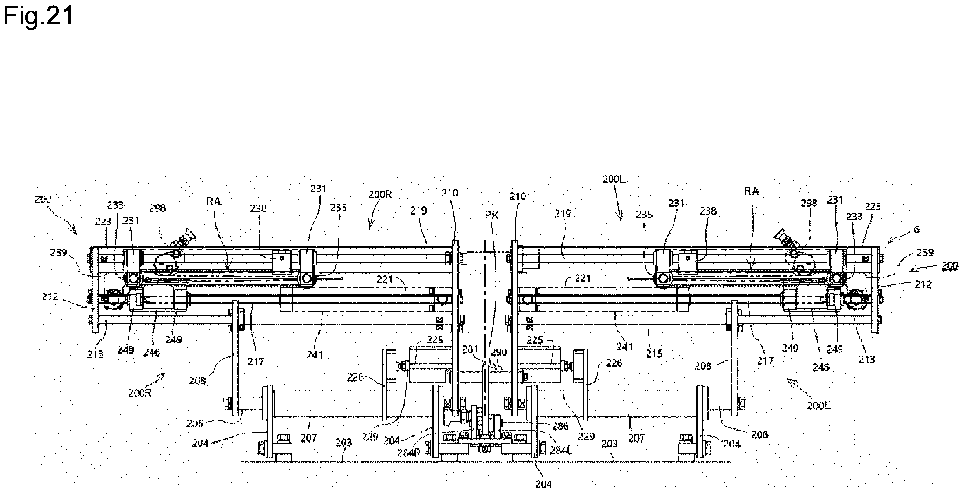

Figs. 16 and 17 show a state in which the receiving surface 201 or the receiving plate 202 supporting the transfer belt 295 is located at the first position PS1 where the receiving surface 201 or the receiving plate 202 covers the entire area over the upper side of the tray G1. Figs. 18 and 19 show a state in which the receiving surface 201 or the receiving plate 202 has been moved outward to the second position PS2 where the receiving surface 201 or the receiving plate 202 substantially covers the upper side of the tray G1 (the second position separated from the first position by a predetermined distance). Figs. 20 and 21 show a state in which the receiving surface 201 or the receiving plate 202 supporting the transfer belt 295 has been moved outward to the third position PS3 (the third position for unloading the item on the transfer member) where the receiving surface 201 or the receiving plate 202 opens the upper side of the tray G1. As described above, the receiving surface 201 or the receiving plate 202 is arranged below the frontward/backward movement range of the conveyance termination end portion of the conveying action unit 5R on the downstream side in the conveyance direction.

Tray Conveying Apparatus

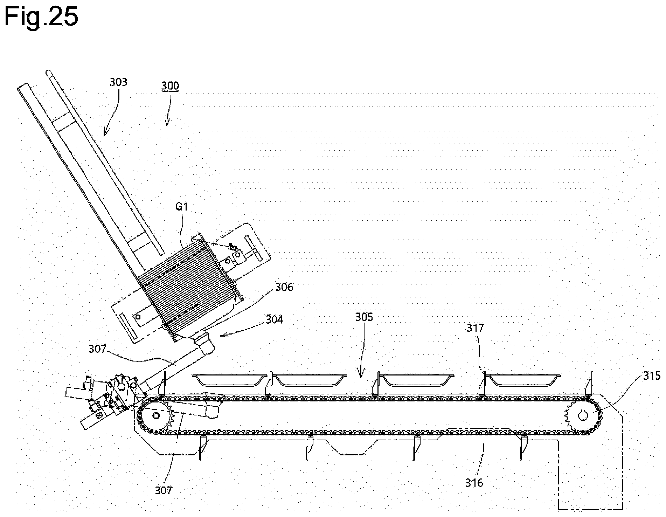

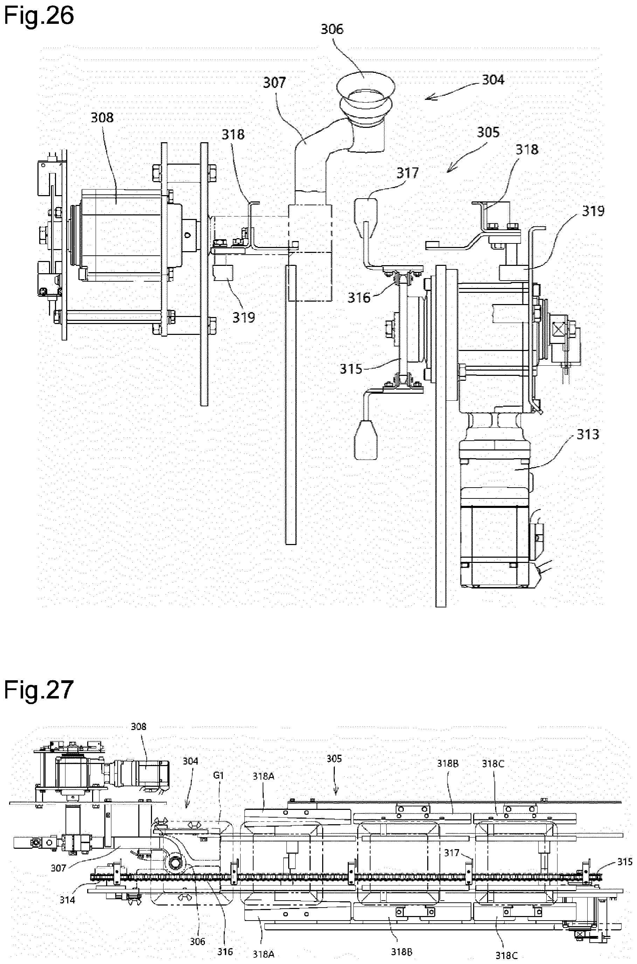

Figs. 25 to 27 show a tray conveying apparatus 305 including a container supply unit 300. As shown in Fig. 25, the container supply unit 300 includes a rail-shaped tray storage unit 303 and a tray peeling apparatus 304. The tray storage unit 303 has a rail-shaped frame, which stores and guides a large number of stacked empty trays G1 obliquely downward in a slidable manner while preventing them from dropping. The tray peeling apparatus 304 peels and removes the trays G1 one by one from the lower end portion of the tray storage unit 303.

The tray peeling apparatus 304 includes a pivot arm 307 having a suction cup 306 at its distal end portion, and an electric motor 308 for rotating the pivot arm 307. The suction cup 306 communicates with the distal end portion of a suction pipe (not shown) routed in the pivot arm 307, and negative pressure is generated when the pivot arm 307 pivots upward, thereby attracting the lower surface of the tray G1. After this attraction, the pivot arm 307 is rotated downward to release the negative pressure causing the attracted tray G1 to be placed on the tray conveying apparatus 305.

The tray conveying apparatus 305 conveys the tray G1 peeled off by the tray peeling apparatus 304 in a direction perpendicular to the conveying unit 5 in a plan view and causes the tray G1 to pass from right to left through a clearance Q formed below the left and right receiving plates 202, 202 of the item moving apparatus 200 in the storing unit 6. This tray conveying apparatus 305 is formed by winding an endless chain 316 between a driving sprocket 315 arranged on the conveyance termination end and a driven sprocket 314 arranged on the conveyance start end, and by providing an electric motor 313 for driving and rotating the driving sprocket 315. The endless chain 316 has a large number of retaining plates 317 provided at intervals that are longer by a predetermined length than the width of the tray G1. Each retaining plate 317 pushes the end of a tray G1 on the upstream side in the conveyance direction. The electric motor 313 may also be reversely driven to move the trays G1 in the direction returning to the upstream side in the conveyance direction.

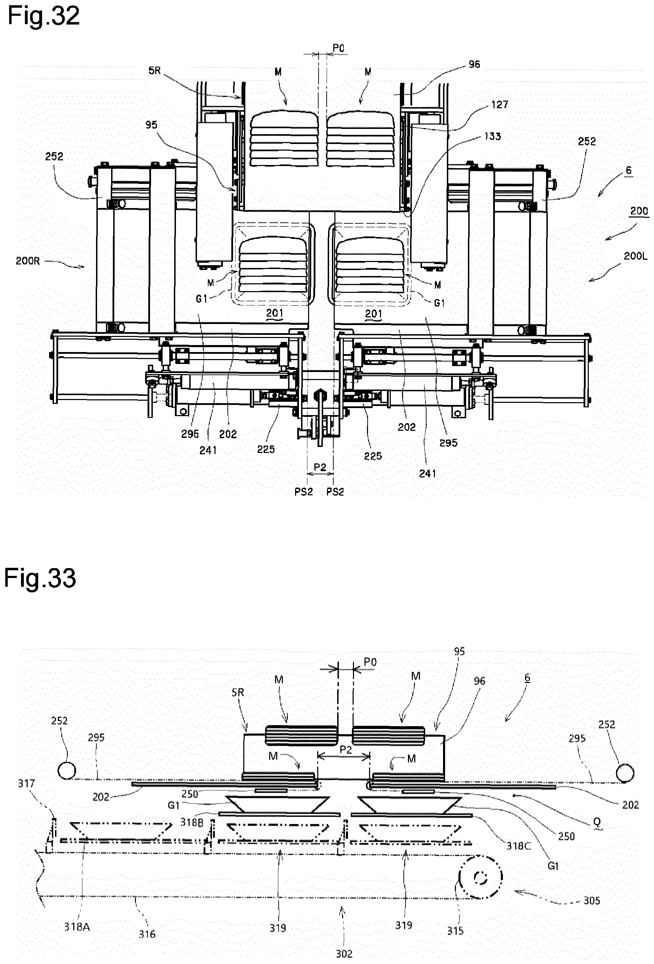

A pair of front and rear conveying guide rails 318 having a U-shaped cross-section conveys and guides trays G1 while restricting their front and rear positions and the vertical positions. The pair is divided into three parts in the conveyance direction of the trays G1. Of the divided three pairs of conveying guide rails 318A, 318B, and 318C, the first conveying guide rails 318A, which are located on the most upstream side in the conveyance direction, are fixed so as not to move up or down. As shown in Fig. 33, the second conveying guide rails 318B in the intermediate portion and the third conveying guide rails 318C located on the most downstream side in the conveyance direction are arranged directly under the left and right receiving surfaces 201, 201 of the item moving apparatus 200 and configured to be independently lifted and lowered by two air cylinders 319, 319.

Cutting Operation

The operating conditions are set according to the type and condition of the blocks of meat to be cut, the preset conditions and the like of each portion may be changed, and an activation switch 401, which is described below, is operated. This starts the rotating movement of the endless band blade 49 of the cutting unit 4 and the driving and conveying of the conveying unit 5.

In this initial state, the supply unit 3 is positioned at the lower limit of its swing range. When blocks of meat are fed into the supply unit 3 in this state and the feed switch is turned ON, the meat block conveying apparatus 9 starts to operate. The fed blocks of meat are thus conveyed frontward by the conveying action of the meat block conveying apparatus 9, and the front end portions of the blocks of meat come into contact with the rear surface of the receiving plate 43. The positions of the front end portions of the blocks of meat are thus restricted. Then, as the supply unit 3 swings upward from this state, the blade edge of the endless band blade 49, which rotates from right to left, cuts into the front end portions of the blocks of meat protruding from the left and right opening 35 from the upper side. At this time, since the positions of the front end portions of the block of meat are restricted by the receiving plate 43, the endless band blade 49 cuts the front end portions of the blocks of meat to a uniform thickness.

When the supply unit 3 swings upward to a position near the upper limit of the swing range, the endless band blade 49 cuts off the front end portions of the blocks of meat. Then, the meat pieces cut to a predetermined thickness pass through the clearance T, which is formed between the upper end of the receiving plate 43 and the lower end of the endless band blade 49, and are transferred to the upper circumference surfaces of annular plates 74, 74 of the left and right transfer rotation members 72, 72 arranged in front of the receiving plate 43. Then, the supply unit 3 swings downward to the lower limit position of the swing range and returns to the initial state. The supply unit 3 then swings upward again, and the above-described cutting of the block of meat is repeated.

The meat pieces that have been conveyed to the upper circumference surfaces of the annular plates 74, 74 of the transfer rotation members 72, 72 through the clearance T are peeled off from the circumference surfaces of the annular plates 74 by the distal end portions of a large number of swinging thin rods 82 and folded in two. In this manner, meat pieces are successively placed on the conveyance start end portion of the endless belt 96 in conveying operation such that they partially overlap one another, forming two rows of aggregates M, M of meat pieces m. In these two rows of aggregates M, M, a predetermined space (inter-aggregate space) P is formed between an aggregate M and the next aggregate M in each row.

In this cutting operation, to adjust the thickness of cut meat pieces m, the electric motor 61 for adjusting meat thickness may be operated to adjust the position of the receiving plate 43 relative to the openings 35. This moves the receiving plate 43 and the first support member 55, which supports the conveying action unit 5F on the upstream side in the conveyance direction, in a front-rear direction. However, the front support base 116, which supports the conveying action unit 5R on the downstream side in the conveyance direction, is not affected or moved in the front-rear direction by the positional adjustment of the receiving plate 43 since the front support base 116 is integrally attached to the third support member 53 on the machine base 2.

As such, an adjustment of the thickness of cut meat pieces m does not change the position of the conveying action unit 5R on the downstream side in the conveyance direction in the conveying unit 5, allowing the meat pieces m or the aggregates M of meat pieces m to be transferred from the conveyance termination end portion of the conveying action unit 5R to the storing unit 6 at constant positions. That is, the positions of conveyed meat pieces m or the aggregates M relative to the receiving surfaces 201 of the item moving apparatus 200 in the storing unit 6 are less likely to vary, allowing the subsequent storing operation to be smoothly performed. Moreover, since the positional relationship between the receiving plate 43 and the conveying action unit 5F on the upstream side in the conveyance direction in the conveying unit 5 does not change, the cut and folded meat pieces m are smoothly transferred to the conveying action unit 5F and conveyed.

Storing Operation

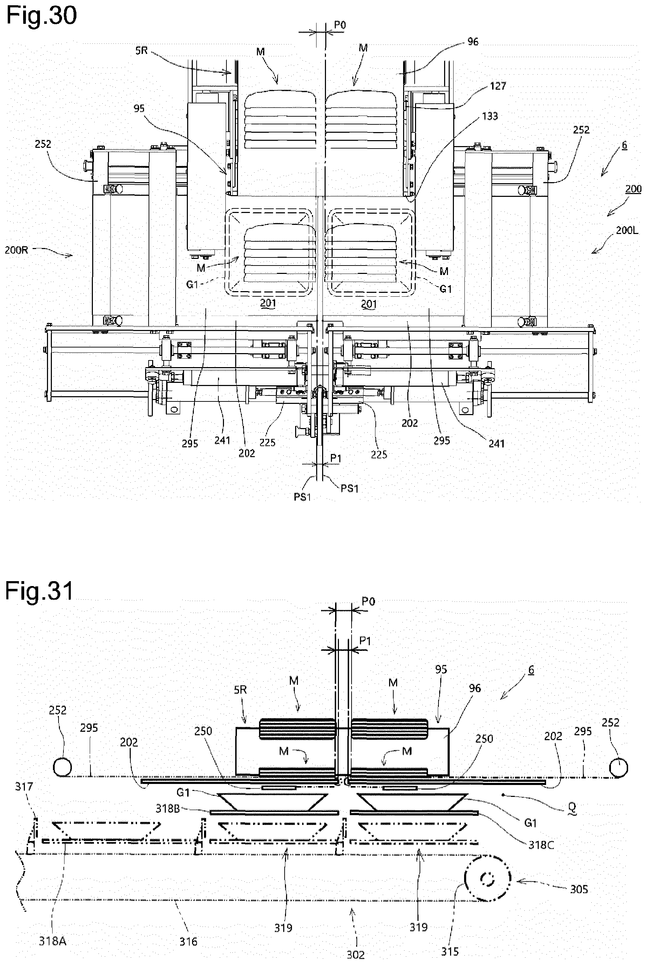

The two rows of aggregates M, M formed by the above-described cutting operation are conveyed to the storing unit 6 with a predetermined narrow space formed between the rows. Referring to Figs. 30 to 37, the space between the rows of aggregates M, M being conveyed is referred to as a "meat row space P0."

Transferring of Aggregates to Transfer Belt on Receiving Surface

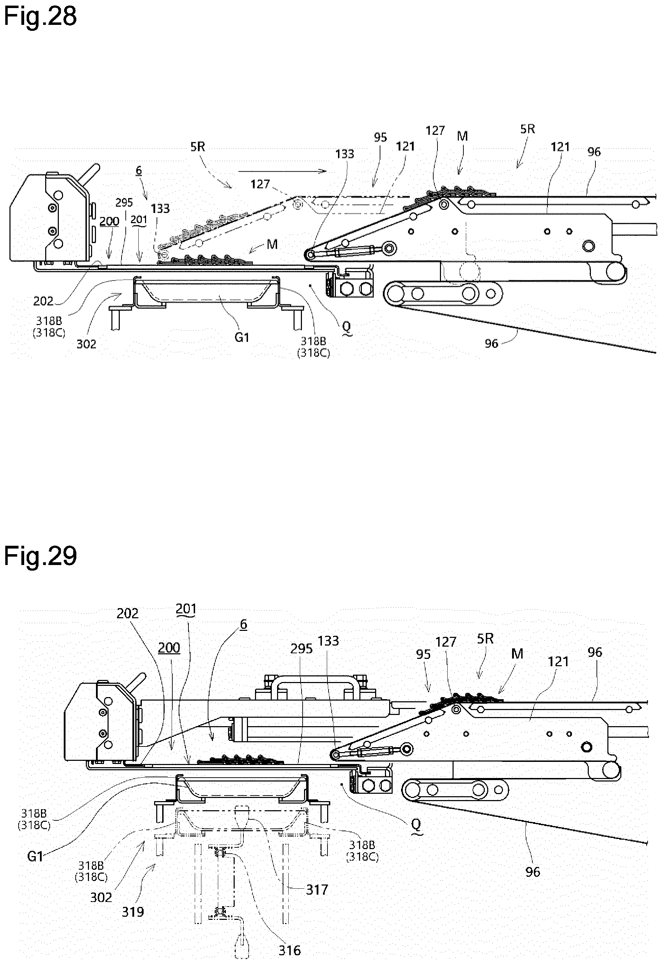

As shown in Figs. 28 and 29, at the start of storing operation, the two rows of aggregates M, M conveyed with the meat row space P0 are lowered and thus transferred to the transfer belts 295, 295 on the left and right receiving surfaces 201, 201 of the item moving apparatus 200, while the conveyance termination end portion of the reciprocating conveyor 95 in conveying operation is moved rearward. As shown in Figs. 16, 30, and 31, when the left and right aggregates M, M are transferred to the transfer belts 295, 295 on the left and right receiving surfaces 201, 201, the space between the left and right aggregates M, M remains the meat row space P0.

In this state, two trays G1, G1 need to be ready below the left and right receiving surfaces 201, 201 in a side-by-side relationship. However, these two trays G1, G1 have to be spaced apart from each other so as not to overlap. As such, the lateral center positions of aggregates M transferred to the transfer belt 295 on the receiving surface 201 may be misaligned in the lateral direction from the lateral center positions of the trays G1. If this aggregate M on the transfer belt 295 on the receiving surface 201 is lowered in this state, the aggregate M may extend out of the tray G1 (i.e. the positional deviation between the aggregates M indicated by solid lines and the trays G1 indicated by broken lines in Figs. 30 and 31). The positional deviation between the aggregates M, M and the trays G1, G1 is eliminated as follows.

First Stage Operation

First, as shown in Figs. 16, 17, 30, and 31, the left and right first air cylinders 225, 225 are extended to bring the left and right receiving surfaces 201, 201 closest to each other so that the space between the left and right receiving plates 202, 202 (specifically, the space between the folded portions of the left and right transfer belts 295, 295) becomes the minimum space P1. In this state, two rows of aggregates M, M are transferred onto the transfer belts 295, 295 on the left and right receiving surfaces 201, 201 from the termination end of the reciprocating conveyor 95. As shown in Figs. 18 and 32, the left and right first air cylinders 225, 225 are then shortened by a preset amount to move the left and right moving units 200L, 200R outward (opposite directions) to increase the space between the inner end portions of the left and right receiving surfaces 201, 201 to an intermediate space P2. The positions of the left and right receiving surfaces 201, 201 in a state in which the space between the inner end portions of the left and right receiving surfaces 201, 201 is the intermediate space P2 are defined as second positions PS2.

While the space between the inner end portions of the left and right receiving surfaces 201, 201 is increased from the minimum space P1 to the intermediate space P2, the left and right receiving surfaces 201, 201 advance to above the trays G1, G1, substantially covering the upper sides of the trays G1, G1. The positions of the left and right receiving surfaces 201, 201 in a state in which the space between the inner end portions of the left and right receiving surfaces 201, 201 is the minimum space P1 are defined as first positions PS1. In this state, the aggregates M, M of meat pieces m on the transfer belts 295, 295 on the left and right receiving surfaces 201, 201 are positioned directly above the trays G1, G1 waiting below.

Second Stage Operation

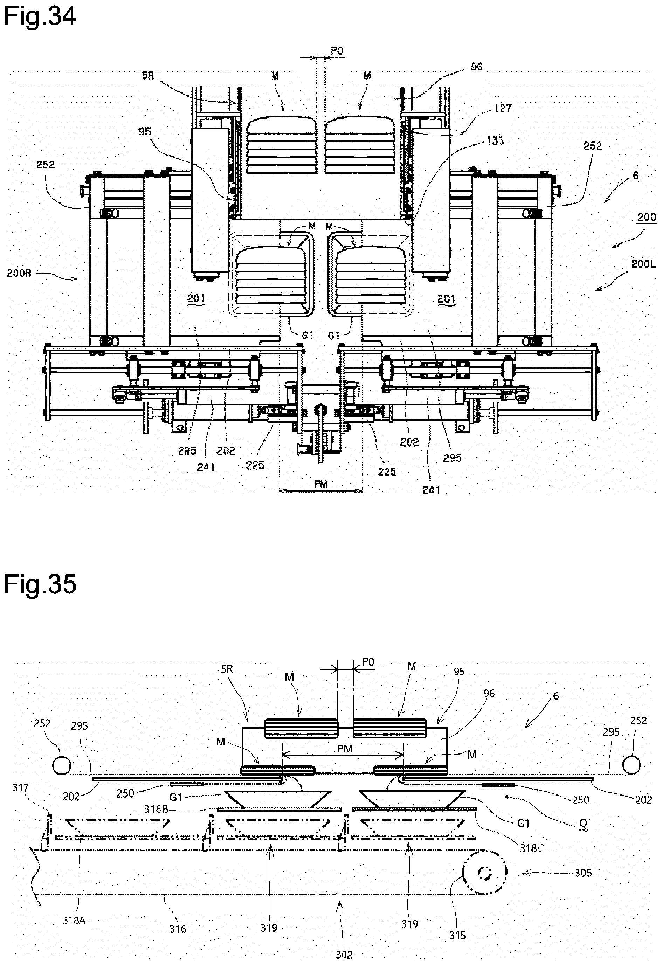

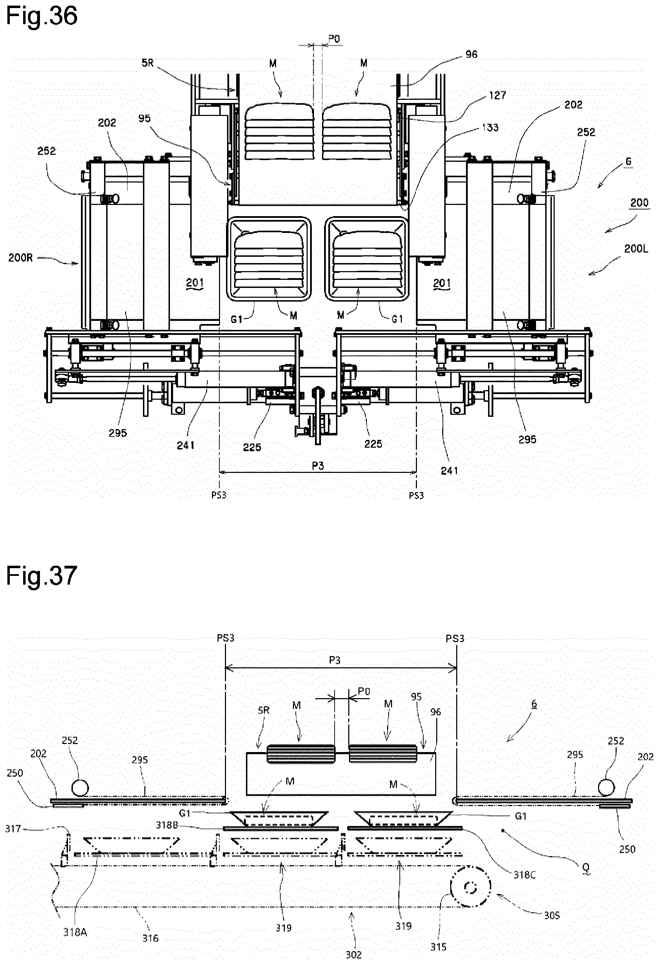

In this state, the air cylinders 319 of a tray conveying unit 302 perform a lifting operation to lift the trays G1, G1 to preset positions. Then, as shown in Figs. 20 and 36, while or after the trays G1, G1 are lifted, the left and right second air cylinders 241, 241 are extended by a preset amount to increase the space between the inner end portions of the left and right receiving surfaces 201, 201 to the maximum space P3. The positions of the left and right receiving surfaces 201, 201 in a state in which the space between the inner end portions of the left and right receiving surfaces 201, 201 is the maximum space P3 are defined as third positions PS3. In this state, the left and right receiving surfaces 201, 201 are retracted laterally outward from the upper side of the trays G1, G1, opening the upper sides of the trays G1, G1. Figs. 34 and 35 show a state in which the space between the inner end portions of the left and right receiving surfaces 201, 201 is an intermediate space PM that is formed while the intermediate space P2 is increased to the maximum space P3.

While the space between the inner end portions of the left and right receiving surfaces 201, 201 is increased from the intermediate space P2 to the intermediate space PM and then to the maximum space P3, that is, when the both receiving surfaces 201, 201 move from the first positions PS1 to the second positions PS2, the transfer belts 295, 295 move relative to the respective receiving surfaces 201, 201 in the directions opposite to the moving directions of the receiving surfaces 201, 201 at the same speed. The aggregates M, M thus fall into the trays G1, G1 and are stored without changing their positions in the lateral and front-rear directions. The trays G1, G1 containing the aggregates M, M are lowered to the initial positions and conveyed by the tray conveying apparatus 503 outward to the left through the clearance Q. The above operation is repeated in synchronization with the intervals at which the aggregates M, M are conveyed.

As described above, when the left and right receiving surfaces 201, 201 (the left and right receiving plates 202, 202 and the left and right transfer belts 295, 295) are positioned with the maximum space P3, the conveying action unit 5R is located within the maximum space P3 (the maximum space P3 is larger than the lateral width of the conveying action unit 5R). Also, the lower winding area of the endless belt 96 of the reciprocating conveyor 95 needs to be set at a height close to the upper side of the left and right receiving surfaces 201, 201 to enhance the transferability of the aggregates M.

As such, when the left and right air cylinders 241, 241 are shortened by a preset amount to return the left and right receiving surfaces 201, 201 to have the intermediate space P2, any slack in the lower winding area of the endless belt 96 of the reciprocating conveyor 95 may cause the inner end portions of the left and right receiving plate 202, 202 to interfere with the endless belt 96 of the reciprocating conveyor 95. However, as described above, since the lower winding area DA of the endless belt 96 of the reciprocating conveyor 95 is inclined downward toward the front side, the interference with the inner end portions of the left and right receiving plates 202, 202 (specifically, the folded end portions of the left and right transfer belts 295, 295), which would otherwise occur if the lower winding area DA of the endless belt 96 were slack, is prevent during a storing operation of aggregates M.

Control Circuit of Slicer as Aggregate Forming Apparatus

The slicer 1 configured as described above cuts the leading end of a block of meat MF to a predetermined thickness, folds the cut meat pieces m, and arranges the folded meat pieces m such that they partially overlap one another to form an aggregate M.

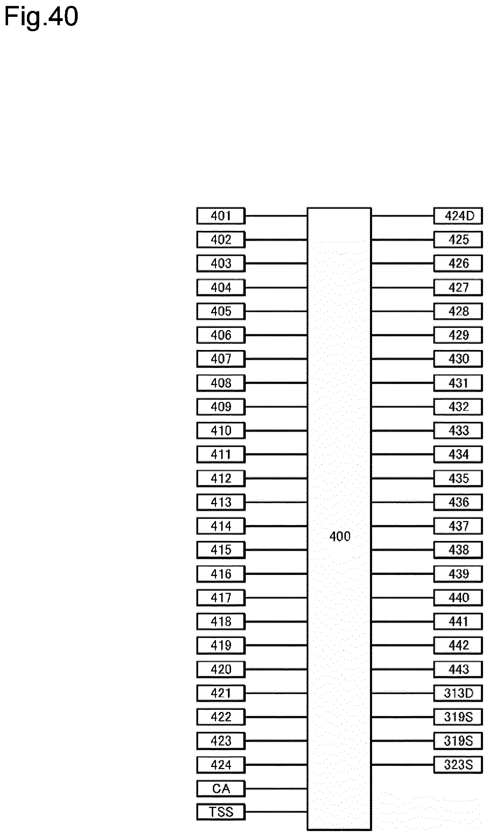

As shown in Fig. 40, the input side of the controller 400 of the control unit 7 is connected to an activation switch 401, a meat piece height automatic setting on/off switch 402, a meat block height manual setting switch 403, an arrangement length manual setting switch 404, an arrangement quantity manual setting switch 405, an arrangement quantity automatic control on/off switch 406, a left meat block height measurement potentiometer 407, a right meat block height measurement potentiometer 408, a supply unit swing angle measurement potentiometer 409, a lower endless belt moving distance measurement sensor 410, a left transfer rotation member rotation phase measurement potentiometer 411, a right transfer rotation member rotation phase measurement potentiometer 412, and a left bar-shaped member pivot angle detection potentiometer 413, a right bar-shaped member pivot angle detection potentiometer 414, a potentiometer 415 for measuring the extension/contraction position of the air cylinder for operating the pressing member, a swing arm swing angle detection potentiometer 416, a conveyor moving distance measurement sensor 417, a conveyor rear end portion advancement/retraction position measurement sensor 418, a left first air cylinder extension/contraction position measurement potentiometer 419, a right first air cylinder extension/contraction position measurement potentiometer 420, a left second air cylinder extension/contraction position measurement potentiometer 421, a right second air cylinder extension/contraction position measurement potentiometer 422, a tray conveyor moving distance sensor 423, a peeling arm pivot position measurement potentiometer 424, a camera CA ("image capturing means" in the claims), and a tray stop position control on/off switch TSS.

The output side of the controller 400 is connected to a cutting motor driver 424D, a swing motor driver 425, a conveying motor driver 426, a left transferring motor driver 427, a right transferring motor driver 428, a left swing motor driver 429, a right swing motor driver 430, a left deployment/retraction motor driver 431, a right deployment/retraction motor driver 432, an air cylinder valve solenoid 433, a conveyance drive motor driver 434, a vertical movement motor driver 435, an extension/contraction motor driver 436, a left first air cylinder valve solenoid 437, a right first air cylinder valve solenoid 438, a left second air cylinder valve solenoid 439, a left second air cylinder valve solenoid 440, a tray conveying motor driver 441, a tray moving arm motor driver 442, an suction valve solenoid 443, a tray conveying motor driver 313D for the electric motor 313 that drives the tray conveying apparatus 305, and ascending/descending valve solenoids 319S, 319S for the air cylinders 319, 319 for lifting and lowering the second conveying guide rails 318B and the third conveying guide rails 318C.

Description of Switches/Sensors Connected to Input Side

The activation switch 401 connected to the input side of the controller 400 described above is used to activate the entire slicer 1 and to switch to a state that allows command signals to be output to motor drivers or the like from the output side of the controller 400. When the activation switch 401 is turned on, the controller 400 outputs command signals from the output side to the cutting motor driver 424D, the swing motor driver 425, the conveying motor driver 426, the left transferring motor driver 427, and the right transferring motor driver 428, thereby starting the driving of the cutting unit 4, the supply unit 3, and the conveying unit 5.

The meat piece height automatic setting on/off switch 402 is used to turn on and off (switch between enabling and disabling) the meat piece height automatic setting, which will be described below. The meat block height manual setting switch 403 is used to visually determine and input (set) the height of the block of meat before cutting.

The arrangement length manual setting switch 404 is used to manually change or set the arrangement length of the cut meat pieces m after cutting (the total length of the aggregate M, an arrangement length manual preset value E described below) before starting a cutting operation. The arrangement quantity manual setting switch 405 is used to manually set the number of meat pieces m forming one aggregate M before starting a cutting operation.

The arrangement quantity automatic control on/off switch 406 is used to turn on and off (switch between enabling and disabling) the arrangement quantity automatic control, which will be described below. The above switches are displayed on a liquid crystal panel and operated by touch operation.

The left meat block height measurement potentiometer 407 measures the vertical movement position of the left pressing plate member 29 arranged in front of the left conveyance passage 20 for blocks of meat. This potentiometer 407 measures the height of the leading end portion of the block of meat supplied to the left conveyance passage 20. The right meat block height measurement potentiometer 408 measures the vertical movement position of the right pressing plate member 29 arranged in front of the right conveyance passage 20 for blocks of meat. This potentiometer 408 measures the height of the leading end portion of the block of meat supplied to the right conveyance passage 20.

The supply unit swing angle measurement potentiometer 409 measures the upward/downward swing angle of the supply unit 3. The lower endless belt moving distance measurement sensor 410 measures the moving distance of the lower endless belt 25 in the supply unit 3 (the conveyance distance of the block of meat) from the number of revolutions of the conveying electric motor 31 or the like.

The left transfer rotation member rotation phase measurement potentiometer 411 measures the rotation angle of the left transfer rotation member 72. The right transfer rotation member rotation phase measurement potentiometer 412 measures the rotation angle of the right transfer rotation member 72.

The left bar-shaped member pivot angle detection potentiometer 413 measures the rotation angle of the left bar-shaped member 81 having many thin rods 82. The right bar-shaped member pivot angle detection potentiometer 414 measures the rotation angle of the right bar-shaped member 81 having many thin rods 82.

The potentiometer 415 for measuring the extension/contraction position of the air cylinder for operating the pressing member measures the extension/contraction position of the air cylinder 87 for vertically moving the pressing member 88 including wire pressing members 89. The swing arm swing angle detection potentiometer 416 measures the upward/downward swing angle of the swing arm 103 provided at the starting end of the conveying unit 5.

The conveyor moving distance measurement sensor 417 measures the moving distance amount (conveyance distance) of the endless belt 96 in the conveying unit 5 from the number of revolutions of the conveying drive motor 112 or the like. The conveyor rear end portion advancement/retraction position measurement sensor 418 measures the movement position of the conveyance termination end portion of the conveying action unit (second conveying action unit) 5R on the downstream side in the conveyance direction of the conveying unit 5 based on the number of revolutions of the extension/contraction electric motor 135.

The left first air cylinder extension/contraction position measurement potentiometer 419 measures the extension/contraction position of the left first air cylinder 225 for space adjustment in the item moving apparatus 200. The right first air cylinder extension/contraction position measurement potentiometer 420 measures the extension/contraction position of the right first air cylinder 225 for space adjustment in the item moving apparatus 200.

The left second air cylinder extension/contraction position measurement potentiometer 421 measures the extension/contraction position of the left second air cylinder 241 for slide motion in the item moving apparatus 200. The right second air cylinder extension/contraction position measurement potentiometer 422 measures the extension/contraction position of the right second air cylinder 241 for slide motion in the item moving apparatus 200.

The tray conveyor moving distance sensor 423 measures the positions of the trays G1 conveyed by the tray conveying apparatus 305 based on the number of revolutions of the electric motor 313 that drives the tray conveying apparatus 305 or the like. The peeling arm pivot position measurement potentiometer 424 measures the pivot angle of the pivot arm 307 for peeling and removing the tray G1 from a stack, based on the number of revolutions of the electric motor 308 or the like.

The camera CA has a monocular solid-state imaging device. This solid-state imaging device may be a CCD image sensor, a CMOS image sensor, or the like, but is not limited to these. For example, an infrared camera may be used. The camera CA has an angle of view covering an area larger than the lateral width of the conveyor 96W. As will be described below, the side edge portions of the conveyor 96W (the lateral end portions of the endless belt 96) are captured with the angle of view. Additionally, the distance from the side edges of the conveyor 96W can be calculated from the number of pixels of the captured image. The tray stop position control on/off switch TSS is used to automatically correct the stop position of the trays, which will be described below.

Description of Drivers and the Like connected to Output Side

The cutting motor driver 424D connected to the input side of the controller 400 supplies electric power to the cutting electric motor 44 to drive and control the endless band blade 49. The swing motor driver 425 supplies electric power to the swing electric motor 13 to control and swing the supply unit 3 in oblique up-down directions. The conveying motor driver 426 supplies electric power to the conveying drive motor 112 to drive and control the conveying unit 5.

The left transferring motor driver 427 supplies electric power to the left transfer electric motor 76 to drive and control the left transfer rotation member 72. The right transferring motor driver 428 supplies electric power to the right transfer electric motor 76 to drive and control the right transfer rotation member 72.

The left swing motor driver 429 supplies electric power to the left swing electric motor 80 to drive and control the left bar-shaped member 81 having a large number of thin rods 82. The right swing motor driver 430 supplies electric power to the right swing electric motor 80 to drive and control the right bar-shaped member 81 having a large number of thin rods 82.

The left deployment/retraction motor driver 431 supplies electric power to the left deployment/retraction electric motor 84 to control and drive the deployment and retraction of the thin rods 82 together with the left bar-shaped member 81. The right deployment/retraction motor driver 432 supplies electric power to the right deployment/retraction electric motor 84 to control and drive the deployment and retraction of the thin rods 82 together with the right bar-shaped member 81.

The air cylinder valve solenoid 433 operates a valve that controls the amount of air supplied to and discharged from the air cylinder 87 to vertically move the pressing member 88 including the wire pressing members 89.

The conveying drive motor driver 434 supplies electric power to the conveying drive motor 112 to drive and control the endless belt 96 of the conveying unit 5. The vertical movement motor driver 435 supplies electric power to the vertical movement electric motor 105 to control the upward and downward swing of the swing arm 103. The extension/contraction motor driver 436 supplies electric power to the extension/contraction electric motor 135 to control and move the conveyance termination end portion of the conveying action unit 5R on the downstream side in the conveyance direction of the conveying unit 5 in the front-rear direction.

The left first air cylinder valve solenoid 437 operates a valve that controls the amount of air supplied to and discharged from the left first air cylinder 225 to change the lateral position of the left moving unit 200L. The right first air cylinder valve solenoid 438 operates a valve that controls the amount of air supplied to and discharged from the right first air cylinder 225 to change the lateral position of the right moving unit 200R.

The left second air cylinder valve solenoid 439 operates a valve that controls the amount of air supplied to and discharged from the left second air cylinder 241 to cause the receiving plate 202 (receiving surface 201) of the left moving unit 200L to laterally slide. The right second air cylinder valve solenoid 440 operates a valve that controls the amount of air supplied to and discharged from the right second air cylinder 241 to cause the receiving plate 202 (receiving surface 201) of the right moving unit 200R to laterally slide.

The tray conveying motor driver 441 supplies electric power to the electric motor 313 to drive and control the endless chain 316 of the tray conveying apparatus 305. The tray moving arm motor driver 442 supplies electric power to the electric motor 308 to control the rotation of the pivot arm 307 that separates and transfers trays G1 onto the tray conveying apparatus 305.

The suction valve solenoid 443 operates the suction valve to attract the bottom surface of the lowest tray G1 among a large number of stacked trays G1. The tray conveying motor driver 313D controls the driving speed and driving direction of the electric motor 313 that drives the tray conveying apparatus 305. The ascending/descending valve solenoids 319S, 319S operate valves that control the amount of air supplied to the air cylinders 319, 319 to lift and lower the second conveying guide rails 318B and the third conveying guide rails 318C.

Control of Meat Piece Aggregate Formation

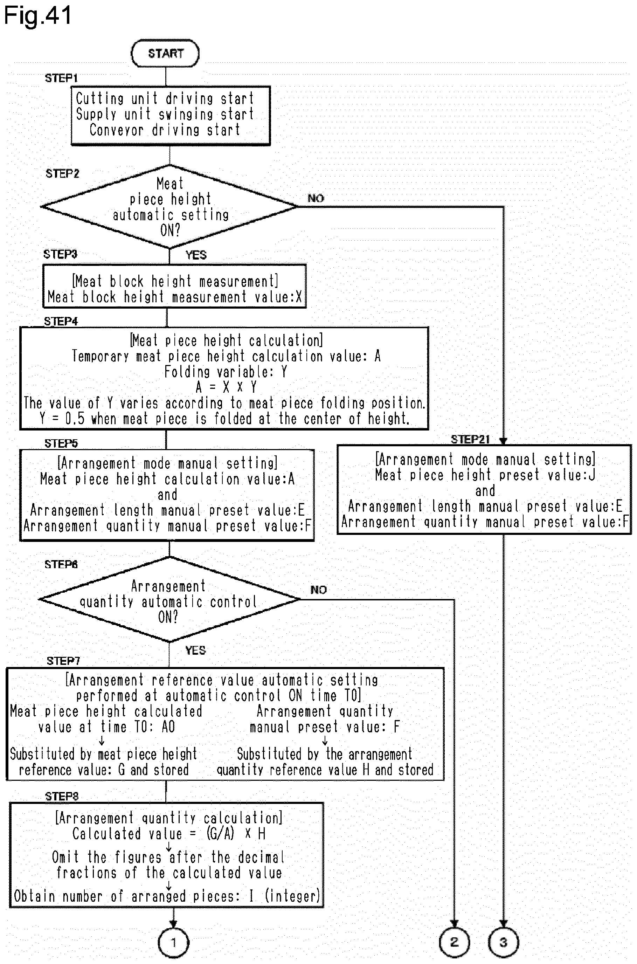

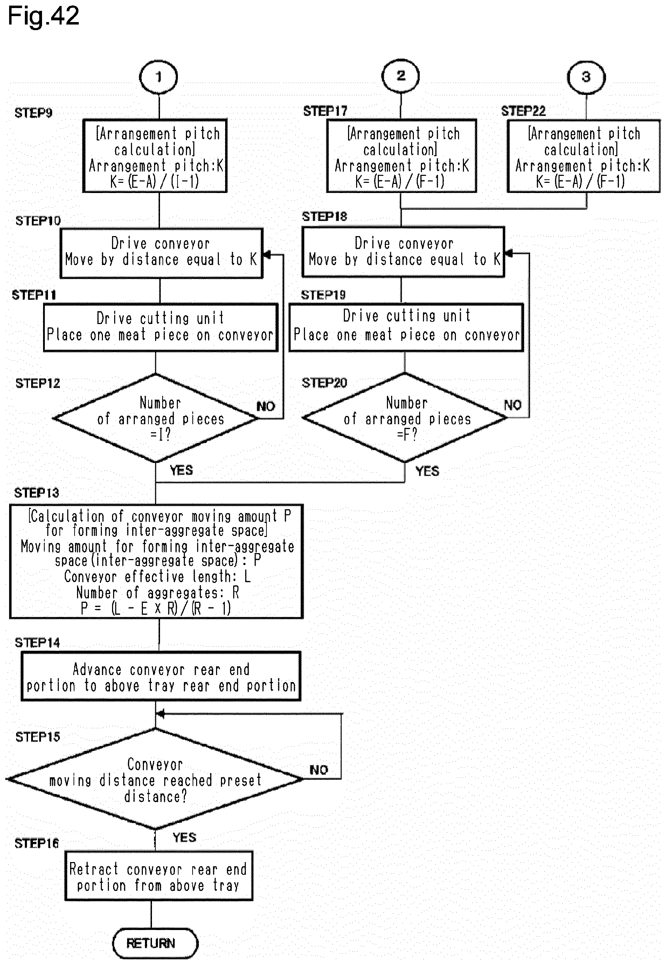

Referring to the flowcharts shown in Figs. 41 and 42, the control of the formation of aggregates M of meat pieces m is described. The following description is directed to a state in which a block of meat MF is supplied to only one of the left and right conveyance passages 20, 20 of the supply unit 3. However, when the lower endless belt 25 provided along the left and right conveyance passages 20, 20 of the supply unit 3 and the endless belt 96 provided in the conveying unit 5 are divided into left and right parts and driven independently, control may be performed that forms aggregates M by supplying blocks of meat MF to both left and right conveyance passages 20, 20. "Meat piece height" as used in this embodiment refers to the length of a meat piece m in the conveyance direction in which the vertically cut meat piece m is conveyed by the endless belt 96. Referring to the flowcharts shown in Figs. 41 and 42, the process is now described.

First Flow

First, the operating conditions are set according to the type and condition of the block of meat MF to be cut, the preset conditions or the like of different portions may be changed, and the activation switch 401 is operated. Consequently, based on the measurement results of the sensors 407 to 417, the controller 400 sends control outputs to the motor drivers 424D to 432 and 434 to 436 and the valve solenoid 433 to start the driving of the cutting unit 4, the swinging and driving of the supply unit 3, and the driving of the conveying unit 5 (STEP 1).

This starts the cutting (slicing) of the block of meat MF and the folding of the cut meat pieces m. The folded meat pieces m are successively placed on the conveyance start end portion of the endless belt 96 in conveying operation such that the meat pieces m at least partially overlap one another. Aggregates M, M of meat pieces m are thus formed. A predetermined space (inter-aggregate space) P, which will be described below, is formed between an aggregate M and the subsequent aggregate M, which are successively formed as described above.

In this formation of aggregates M of meat pieces m, when the meat piece height automatic setting on/off switch 402 is operated (or has been operated) to the ON side, the automatic setting of the meat piece height is turned on (enabled), and then the process proceeds to the measurement of the height of the block of meat MF (thickness measurement) (STEP 2). In the height measurement (thickness measurement) of the block of meat MF, one of the left and right meat block height measurement potentiometers 407 and 408 that is located on the side supplying the block of meat MF measures the height (thickness) of the leading end portion of this block of meat MF to obtain a meat block height measurement value X (STEP 3). Based on this, the height of the meat piece m (length in the conveyance direction) is calculated.

That is, the meat piece height calculation value A that is temporarily calculated is calculated from the meat block height measurement value X and a variable Y by the following expression (STEP 4).

$$A = X \times Y$$

The value of Y varies depending on the folding position of the meat piece m, and Y = 0.5 when the meat slice is folded at the center position of the height of the meat piece.

The meat piece height calculation value A thus calculated, the arrangement length manual preset value E set by operating the arrangement length manual setting switch 404, and the arrangement quantity manual preset value F set with the arrangement quantity manual setting switch 405 constitute the manual settings of the arrangement mode (STEP 5). The arrangement length manual preset value E is the length of each aggregate M in the conveyance direction that is changed or set with the arrangement length manual setting switch 404 according to the size of the tray G1 to be used (length in the conveyance direction). The arrangement quantity manual preset value F is the number of meat pieces m forming each aggregate M that may be changed or set freely by operating the arrangement quantity manual setting switch 405. When the arrangement quantity automatic control on/off switch 406 is operated (or has been operated) to the ON side, the process proceeds to the arrangement reference value automatic setting, which is performed at the automatic control ON time T0 (STEP 6).

In this arrangement reference value automatic setting, the calculated value A0 of the height of the meat piece m at time T0 is substituted by the meat piece height reference value G and stored, the arrangement quantity manual preset value F is substituted by the arrangement quantity reference value H and stored, and the process proceeds to the calculation of the number of arranged pieces I (STEP 7). This number of arranged pieces I is calculated from the meat piece height calculation value A, the meat piece height reference value G, and the arrangement quantity reference value H by the following expression, and obtained as an integer by omitting the figures after the decimal fractions of the calculated value (STEP8).

$$\text{Calculated value} = (G/A) \times H$$

For example, when the values calculated by the above expression are 5.1 and 5.9, the number of arranged pieces is 5 in both cases. Although the meat piece height calculation value A is continuously calculated, the number of pieces does not change as long as the integer obtained by omitting the figures after the decimal fractions remains unchanged.

The arrangement pitch K is calculated from the arrangement length manual preset value E, the meat piece height calculation value A, and the number of arranged pieces I by the following expression (STEP 9).

$$K = (E - A)/(I - 1)$$

Then, based on the measurement result of the conveyor moving distance measurement sensor 417, the action of driving the endless belt 96, which forms the conveyor of the conveying unit 5, for a distance equal to the arrangement pitch K (STEP 10) while placing each meat piece m, which is cut by the cutting unit 4 and folded, on the endless belt 96 (STEP 11) is repeated. Even if the calculated value of the arrangement pitch K changes during the formation of one aggregate, a change of the arrangement pitch is prohibited until the number of arranged pieces reaches the integer obtained at STEP 8.

The number of pieces placed and arranged on the endless belt 96 is determined by the number of reciprocating rotations of the left bar-shaped member pivot angle detection potentiometer 413 or the right bar-shaped member pivot angle detection potentiometer 414. When the number of arranged pieces reaches the above-mentioned number of arranged pieces I, the process proceeds to the calculation of the conveyor moving amount for forming inter-aggregate space (STEP 12). The conveyor moving amount P for forming inter-aggregate space is calculated from the effective conveying length (conveyor effective length) L of the endless belt 96, the arrangement length manual preset value E, and the number of aggregates R by the following expression (STEP 13).

$$P = (L - E \times R)/(R - 1)$$

This conveyor moving amount P is the space between adjacent aggregates M, M and is measured by the conveyor moving distance measurement sensor 417.

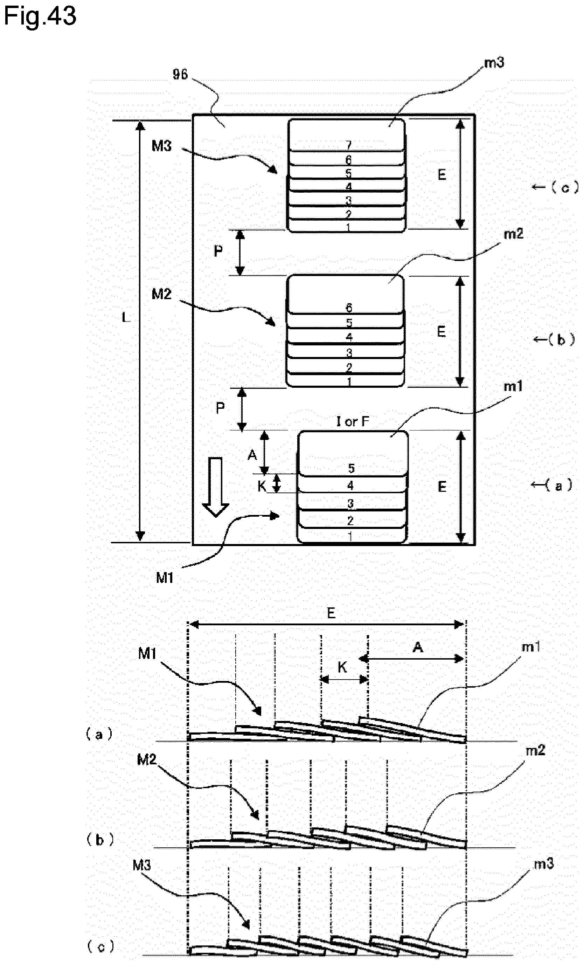

As described above, aggregates M are intermittently formed and conveyed on the endless belt 96 with the inter-aggregate space P formed between the aggregates M. Fig. 43 shows aggregates M of meat pieces m thus formed.

In a state in which the aggregate M has reached the conveyance termination end portion of the endless belt 96 (the rear end portion of the conveyor), the controller 400 sends an output to the extension/contraction motor driver 436 to operate the extension/contraction electric motor 135 and extend the conveyance termination end portion of the endless belt 96 (the rear end portion of the conveyor) rearward. This advances the conveyance termination end portion of the endless belt 96 to be located above the rear end portion of the tray G1 waiting below the receiving surface 201 on one lateral side of the item moving apparatus 200 (STEP 14).

Then, at the time point at which the conveyance distance of the endless belt 96 (conveyor moving distance) measured by the conveyor moving distance measurement sensor 417 reaches the preset distance (STEP 15, a time point at which the rear end portion of the aggregate M is separated from the conveyance termination end portion), the controller 400 sends an output to the extension/contraction motor driver 436 to operate the extension/contraction electric motor 135 in the reverse direction causing the conveyance termination end portion of the endless belt 96 to retract rearward from the upper side of the tray G1 (STEP 16). As described above, the aggregate M separated from the conveyance termination end portion of the endless belt 96 is transferred onto the receiving surface 201 on one lateral side of the item moving apparatus 200 and stored in the tray G1.

Second Flow

When, at STEP 6, the arrangement quantity automatic control on/off switch 406 is operated (or has been operated) to the OFF side, the above-described arrangement reference value automatic setting is not performed, and the process proceeds to the calculation of arrangement pitch (STEP 6). This arrangement pitch K is calculated from the arrangement length manual preset value E, the meat piece height calculation value A, and the arrangement quantity manual preset value F by the following expression (STEP 17).

$$K = (E - A)/(F - 1)$$

Then, based on the measurement result of the conveyor moving distance measurement sensor 417, the action of driving the endless belt 96, which forms the conveyor of the conveying unit 5, for a distance equal to the arrangement pitch K (STEP 18) while placing each meat piece m, which is cut by the cutting unit 4 and folded, on the endless belt 96 (STEP 19) is repeated. The number of pieces placed and arranged on the endless belt 96 is determined by the number of reciprocating rotations of the left bar-shaped member pivot angle detection potentiometer 413 or the right bar-shaped member pivot angle detection potentiometer 414. When the number of arranged pieces reaches the above-mentioned arrangement quantity manual preset value F, the process proceeds to the calculation of the conveyor moving amount for forming inter-aggregate space (STEP 20). The subsequent steps are common to the first flow and thus not described.

Third Flow

At STEP 2, when the meat piece height automatic setting on/off switch 402 is operated (or has been operated) to the OFF side, the process proceeds to the manual setting of arrangement mode without calculating the meat piece height. The meat piece height preset value J set with the meat block height manual setting switch 403, the arrangement length manual preset value E set by operating the arrangement length manual setting switch 404, and the arrangement quantity manual preset value F set with the arrangement quantity manual setting switch 405 constitute the manual settings of the arrangement mode, and the process proceeds to the calculation of the arrangement pitch (STEP 21). As with STEP 17, this arrangement pitch K is calculated from the arrangement length manual preset value E, the meat piece height calculation value A, and the arrangement quantity manual preset value F by the following expression (STEP 22).

$$K = (E - A)/(F - 1)$$

The subsequent steps are common to the second flow and thus not described. Aggregate Formation State

Fig. 43 illustrates the state of aggregates formed as described above. This example concurrently shows an aggregate M 1 formed by arranging five meat pieces m such that they at least partially overlap, an aggregate M2 formed by arranging six meat pieces m in the same manner, and an aggregate M3 formed by arranging seven meat pieces m in the same manner. However, this is for the sake of convenience in explanation, and the present invention is not limited to a state in which aggregates M of different numbers of meat pieces are present on the same endless belt 96.

The aggregate M 1 is formed by arranging five meat pieces m1 of a length (height) A at a pitch K to form an aggregate of a total length E. The aggregate M2 is formed by arranging six meat pieces m2 that are shorter than the meat pieces m1 at a pitch that is shorter than K to form an aggregate of the total length E. The aggregate M3 is formed by arranging seven meat pieces m3 that are shorter than the meat pieces m2 at a pitch that is shorter than the pitch of the aggregates M2 to form an aggregate of the total length E. Thus, the number of arranged pieces and the pitch are changed according to the height of the meat pieces m to allow the total length and the weight of the aggregates M of meat pieces m to be uniform.

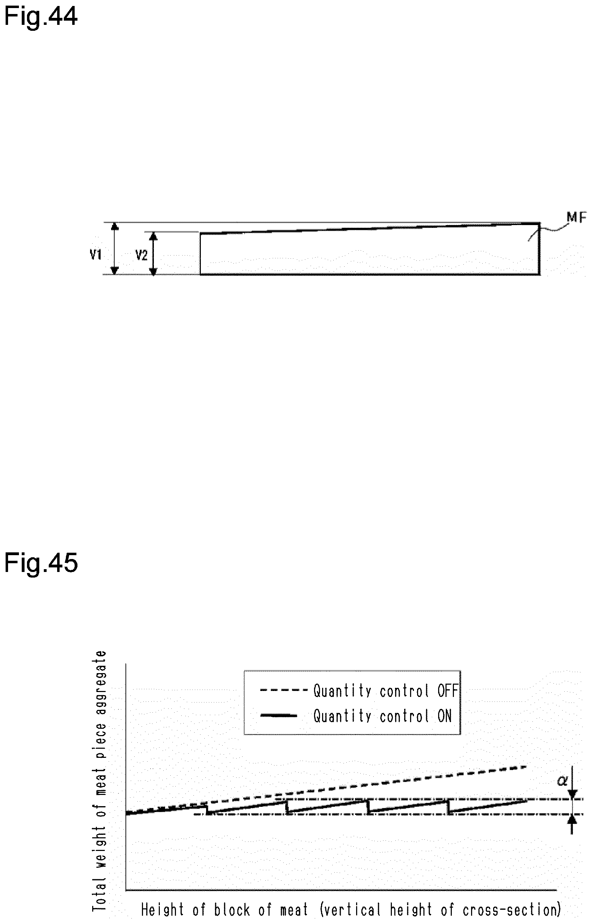

That is, as shown in Fig. 44, a block of meat MF usually has a predetermined length, and the height V1 of the front end portion may be different from the height V2 of the rear end portion. The height may vary irregularly from the front end portion to the rear end portion. Accordingly, when the meat is cut (sliced) to a constant thickness in the vertical direction, pieces of meat having different heights are formed depending on the section to be cut, and therefore the weights of the cut meat pieces are not uniform.

In this respect, performing the control of the number of arranged pieces in addition to the control of arrangement pitch as described above reduces the variation in total weight of aggregates M by bringing the total weight of an aggregate M corresponding to the height of the block of meat MF closer to a variation range $\alpha$, for example, as shown in Fig. 45.

Storing Control

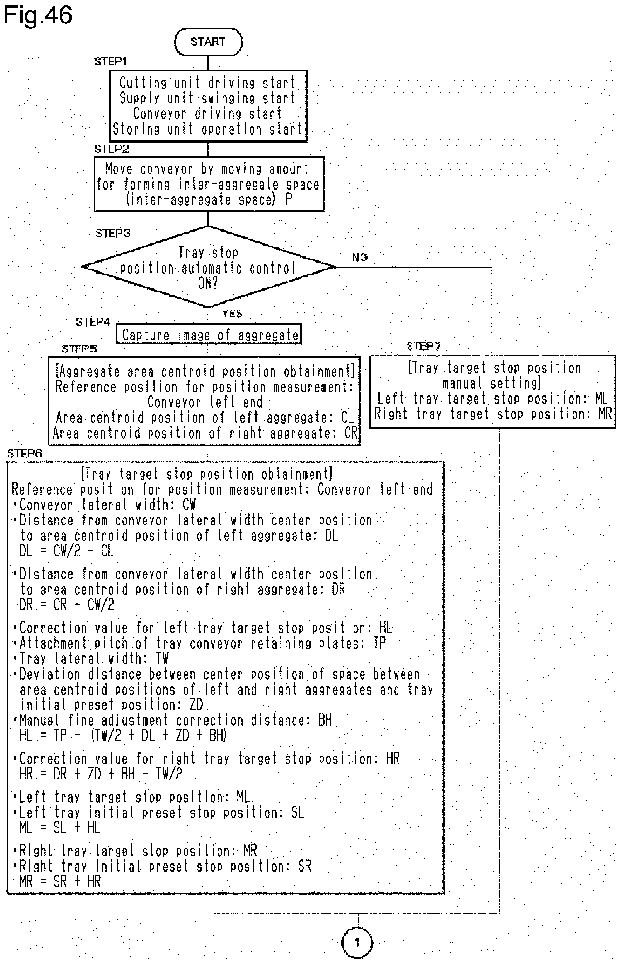

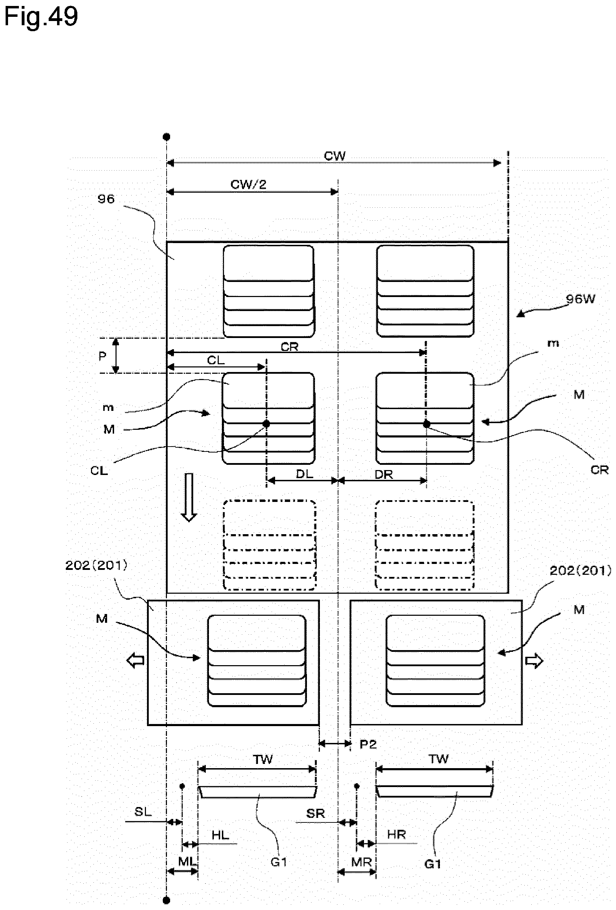

Based on the flowcharts of Figs. 46 to 48 and with reference to Fig. 49, item storage control is now described. In the description, the left side and the right side as viewed in the direction opposite to the conveyance direction of the conveyor 96W are referred to as "left" and "right", respectively.

As shown in Fig. 49, this control is performed on the precondition that the space between the inner end portions of the left and right receiving plates 202, 202 (the receiving surfaces 201, 201) of the item moving apparatus 200, on which the aggregates M, M are placed, increases from the minimum space P1 to the intermediate space P2. The intermediate space P2 is provided such that a distance of P2/2 is evenly set on each lateral side of the center position of the lateral width of the conveyor 96W. In this state, the area centroids of the aggregates M, M (substantially equal to the center position of the overall width of the aggregate) are moved to be aligned with the center positions of the lateral width of the respective trays G1, G1.

As shown in Fig. 46, when the activation switch 401 is first turned ON (this operation is omitted in the flowchart), the driving of the cutting unit 4, the supply unit 3, and the conveyor (first conveyor) 96W and the operation of the storing unit 6 start (STEP 1). Thus, the cutting unit 4 cuts the block of meat MF fed to the supply unit 3, and the predetermined number of cut meat pieces m are successively arranged on the conveyor 96W (the endless belt 96) to form an aggregate M.

After the conveyor 96W moves by the preset moving amount P for forming inter-aggregate space, the next aggregate M is formed. This process is performed continuously, thereby forming inter-aggregate spaces equal to P between aggregates M, M (STEP 2). Then, the tray stop position control on/off switch TSS is turned on, and it is determined whether the tray stop position automatic control is turned on (enabled) (STEP 3).

When the tray stop position automatic control is determined to be on, an image of the aggregates M, M ("items" in the claims) conveyed in two, left and right, rows is captured with the camera CA. The image area covers the outlines of the entire aggregates M, M and the left and right edges of the conveyor 96W (STEP 4). The area centroid positions of the aggregates M are obtained from the captured image data.

That is, the left edge of the conveyor 96W is used as the reference position, and the distances are determined from the number of pixels from this reference position. The area centroid position CL of the left aggregate M (the aggregate of the left row of the aggregates conveyed in two rows) and the area centroid position CR of the right aggregate M are thus obtained (STEP 5). This area centroid position is obtained by calculating the area within the outline of the aggregate M from the positions of a large number of pixels forming the outline. Based on the area centroid positions CL, CR of the left and right aggregates M, M, the target tray stop position is obtained.

That is, as shown in Fig. 49, when the lateral width of the conveyor 96W is CW and the distance from the center position of the lateral width of the conveyor 96W to the area centroid position CL of the aggregate M on the left side is DL, DL is obtained by the following expression.

$$DL = CW/2 - CL$$

Furthermore, when the distance from the center position of the lateral width of the conveyor 96W to the area centroid position CR of the aggregate M on the right side is DR, DR is obtained by the following expression.

$$DR = CR - CW/2$$

When the attachment pitch of the retaining plates 317 of the tray conveying apparatus (tray conveyor) 305 is TP, the lateral width of a tray G1 is TW, the deviation distance between the center position of the space between the area centroid positions of the left and right aggregates M, M and the initial preset position of the tray G1 (initial target stop position) is ZD, and the manual fine adjustment correction distance is BH, the correction value HL for the target stop position of the left tray G1 is obtained by the following expression.

$$HL = TP - (TW/2 + DL + ZD + BH)$$

The correction value HR for the target stop position of the right tray G1 is obtained by the following expression.

$$HR = DR + ZD + BH - TW/2$$

When the initial preset stop position of the left tray G1 is SL, the target stop position ML of the left tray G1 is obtained by the following expression.

$$ML = SL + HL$$

When the initial preset stop position of the right tray G1 is SR, the target stop position MR of the right tray G1 is obtained by the following expression.

$$MR = SR + HR$$

At STEP 3 described above, when the tray stop position automatic control is not turned on, the process proceeds to the manual setting of the target tray stop position, and target stop position ML of the left tray G1 and the target stop position MR of the right tray G1 are manually set (STEP 6).

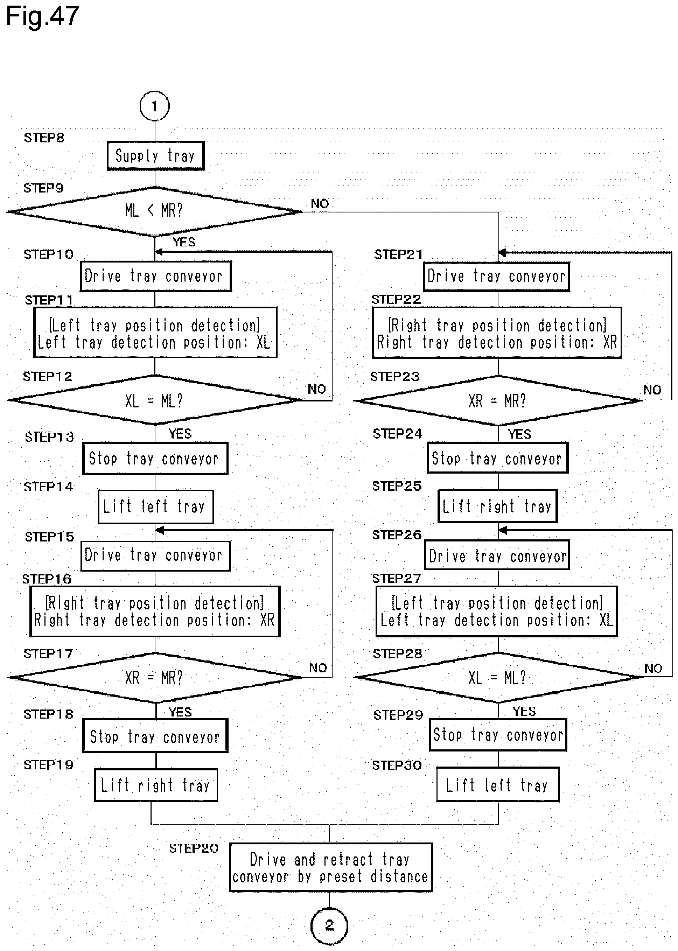

Then, as shown in Fig. 47, the tray peeling apparatus 304 supplies trays G1 to the tray conveying apparatus (the tray conveyor, the "second conveyor" in the claims) 305 from the tray storage unit 303 (STEP 8). The target stop position ML of the left tray G1 and the target stop position MR of the right tray G1 are compared to determine their magnitude relationship (STEP 9).

When the comparison determines that the target stop position MR of the right tray G1 is greater, the tray conveying apparatus 305 is driven (STEP 10), the position of the left tray G1 is detected, and a left tray detection position XL is obtained (STEP 12). It is then determined whether the left tray detection position XL agrees with the left tray target stop position ML (STEP 12). If it agrees, the driving of the tray conveying apparatus 305 is stopped (STEP 13).

Then, the left tray G1 is lifted while being supported by the second conveying guide rail 318B (STEP 14), the tray conveying apparatus 305 is driven again (STEP 15), the position of the right tray G1 is detected, and a right tray detection position XR is obtained. Then, it is determined whether the right tray detection position XR agrees with the target stop position MR of the right tray G1 (STEP 17). If it agrees, the driving of the tray conveying apparatus 305 is stopped (STEP 18).

Then, the right tray G1 is lifted while being supported by the third conveying guide rails 318C (STEP 19), and the tray conveying apparatus 305 is driven and retracted by a preset distance in the reverse direction (STEP 20). Since the tray conveying apparatus 305 is thus driven and retracted, the tray G1 containing the aggregate M does not collide with a retaining plate 317 of the tray conveying apparatus 305 when the tray G1 is lowered. As described above, when it is determined that the target stop position MR of the right tray G1 is greater than the target stop position ML of the left tray G1, the left tray G1 is lifted before (prior to) the right tray G1.

In contrast, when it is determined at STEP 9 that the target stop position MR of the right tray G1 is smaller or equal to the target stop position ML, the tray conveying apparatus 305 is driven (STEP 21), the position of the right tray G1 is detected, and a right tray detection position XR is obtained (STEP 22). Then, it is determined whether the right tray detection position XR agrees with the right tray target stop position MR (STEP 23). If it agrees, the driving of the tray conveying apparatus 305 is stopped (STEP 24).

Then, the right tray G1 is lifted while being supported by the third conveying guide rails 318C (STEP 25), the tray conveying apparatus 305 is driven again (STEP 26), the position of the left tray G1 is detected, and a left tray detection position XL is obtained (STEP 27). It is then determined whether the left tray detection position XL agrees with the target stop position ML of the left tray G1 (STEP 28). If it agrees, the driving of the tray conveying apparatus 305 is stopped (STEP 29). The left tray G1 is then lifted while being supported by the second conveying guide rail 318B (STEP 30), and the tray conveying apparatus 305 is driven and retracted by a preset distance in the reverse direction (STEP 20).

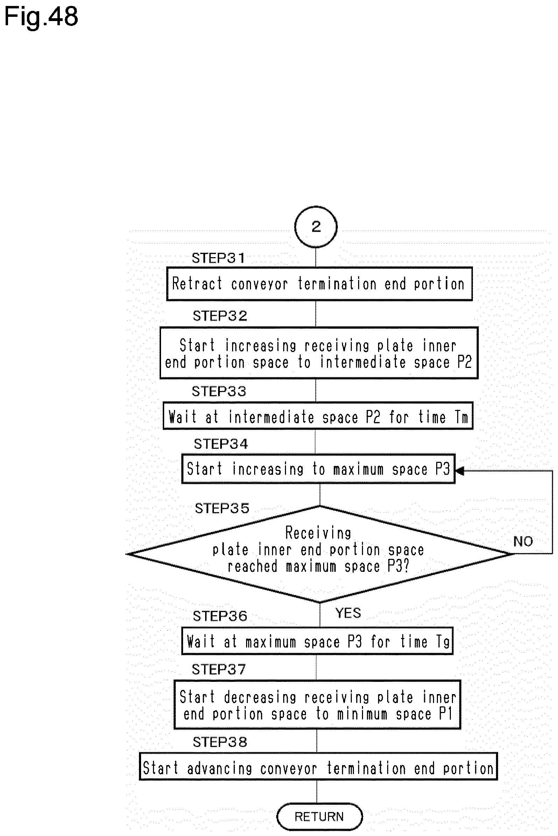

As described above, when it is determined that the target stop position ML of the left tray G1 is greater than or equal to the target stop position MR of the right tray G1, the right tray G1 is lifted before (prior to) the left tray G1. As shown in Fig. 48, after the trays G1, G1 are lifted, the rear end portion (conveyance termination end portion) of the conveyor (first conveyor) 96W starts retracting (STEP31).

Then, the operation of increasing the space between the inner end portions of the left and right receiving plates 202, 202 of the item moving apparatus 200 to the intermediate space P2 starts (STEP 32). When the space becomes the intermediate space P2, the process waits for a preset time Tm. The lateral space between the items (aggregates M, M) on the left and right receiving plates 202, 202 is thus increased. The time Tm is set to a slight time period, and after this time Tm elapses, the operation of increasing the space between the inner end portions of the left and right receiving plates 202, 202 to the maximum space P3 starts (STEP 34). As a result, the items (aggregates M, M) on the left and right receiving plates 202, 202 fall and are thus stored in the left and right trays G1, G1.

Then, it is determined whether the space between the inner end portions of the left and right receiving plates 202, 202 has reached the maximum space P3 (STEP 35). When the space reaches the maximum space P3, the process waits in this state for a preset time Tg (STEP 36). When this preset time Tg has elapsed, the operation of rapidly reducing the space between the inner end portions of the left and right receiving plates 202, 202 to the minimum space P1 starts (STEP 37), and the conveyance termination end portion of the conveyor 96W starts advancing (STEP 38). The above operation is repeated to store the items.

The area centroids of the items on the receiving plates 202, 202 moved to the second positions PS2 substantially coincide with the center positions of the widths of the containers G1, G1 that have stopped at the target position for stopping conveyance after correction in the conveyance direction of the tray conveying apparatus (second conveyor) 305. In the cutting unit 4, the lower winding area of the endless band blade 49, which moves laterally from one side to the other, cuts the block of meat MF, causing the cut meat pieces m to be pulled in the moving direction of the endless band blade 49 and released. For this reason, the present embodiment uses, of the lateral edge portions of the conveyor 96W, the edge portion that is on the upstream side in the moving direction of the endless band blade 49 as the reference position for the calculation of the distance based on the result of image capturing by the camera (image capturing means). However, the present invention is not limited to this, and the edge portion that is on the downstream side in the moving direction of the endless band blade 49 of the conveyor 96W may be used as the reference.

**Claims**

1. A food aggregate forming method for forming aggregates (M) of food pieces (m) by arranging a plurality of food pieces (m) such that the food pieces (m) at least partially overlap one another, the method comprising:

   automatically changing a pitch (K) at which the food pieces (m) are arranged to form each aggregate (M) such that a total length of the aggregate (M) is a preset length (E).

2. The food aggregate forming method according to claim 1, further comprising automatically changing the pitch (K) at which the food pieces (m) are arranged according to a length (A) of the food piece (m) in an arrangement direction.

3. The food aggregate forming method according to claim 1, further comprising:

   cutting a block of food (MF) from a leading end portion thereof to successively form the food pieces (m); and
   automatically changing the pitch (K) at which the food pieces (m) are arranged according to a thickness (X) of the leading end portion of the block of food (MF) to be cut.

4. The food aggregate forming method according to claim 1, further comprising:

   cutting a block of food (MF) from a leading end portion thereof;
   successively forming the food pieces (m) folded at a preset position;
   calculating a length (A) of the folded food piece (m) in an arrangement direction from a thickness (X) of the leading end portion of the block of food (MF) to be cut and a folding position of the food pieces (m); and
   automatically changing the pitch (K) at which the food pieces (m) are arranged according to the length (A).

5. The food aggregate forming method according to claim 3 or 4, further comprising cutting the block of food (MF) from the leading end portion at substantially regular intervals to successively form the food pieces (m) of a substantially uniform thickness.

6. The food aggregate forming method according to any one of claims 1 to 5, further comprising prohibiting the automatic changing of the pitch (K) at which the food pieces (m) are arranged until formation of the aggregate (M) is completed.

7. A food aggregate forming method for forming aggregates (M) of food pieces (m) by arranging a plurality of food pieces (m) such that the food pieces (m) at least partially overlap one another, the method comprising:

   automatically changing a number of food pieces (m) forming each aggregate (M) and a pitch (K) at which the food pieces (m) are arranged so as to reduce variations in weight of the aggregates (M) and form each aggregate (M) such that a total length of the aggregate (M) is a preset length (A).

8. The food aggregate forming method according to claim 7, further comprising automatically changing the number of food pieces (m) forming each aggregate (M) and the pitch (K) at which the food pieces (m) are arranged according to a length (A) of the food piece (m) in an arrangement direction.

9. The food aggregate forming method according to claim 7, further comprising:

   cutting a block of food (MF) from a leading end portion thereof to successively form the food pieces (m); and
   automatically changing the number of food pieces (m) forming each aggregate (M) and the pitch (K) at which the food pieces (m) are arranged according to a thickness (X) of the leading end portion of the block of food (MF) to be cut.

10. The food aggregate forming method according to claim 7, further comprising:

    cutting a block of food (MF) from a leading end portion thereof;
    successively forming the food pieces (m) folded at a preset position;
    calculating a length (A) of the folded food piece (m) in an arrangement direction from a thickness (X) of the leading end portion of the block of food (MF) to be cut and a folding position of the food pieces (m); and
    automatically changing the number of food pieces (m) forming each aggregate (M) and the pitch (K) at which the food pieces (m) are arranged according to the length (A).

11. The food aggregate forming method according to claim 9 or 10, further comprising cutting the block of food (MF) from the leading end portion at substantially regular intervals to successively form the food pieces (m) of a substantially uniform thickness.

12. The food aggregate forming method according to any one of claims 7 to 11, further comprising prohibiting the automatic changing of the number of food pieces (m) and the pitch (K) at which the food pieces (m) are arranged until formation of the aggregate (M) is completed.

13. A food aggregate forming apparatus for forming aggregates (M) of food pieces (m) by cutting a block of food (MF) from a leading end portion thereof and arranging a plurality of cut food pieces (m) such that the food pieces (m) at least partially overlap one another, the apparatus comprising:

    a thickness measurement means configured to measure a thickness (X) of the leading end portion of the block of food (MF) to be cut;
    a length calculation means configured to calculate a length (A) of the cut food piece (m) in an arrangement direction based on the thickness (X) measured by the thickness measurement means; and
    a pitch changing means configured to automatically change a pitch (K) at which the food pieces (m) are arranged, wherein
    the pitch changing means is configured to operate according to the length (A) calculated by the length calculation means to form each aggregate (M) such that a total length of the aggregate (M) is a preset length (E).

14. The food aggregate forming apparatus according to claim 13, wherein the block of food (MF) is cut from the leading end portion at substantially regular intervals to successively form the food pieces (m) of a substantially uniform thickness.

15. The food aggregate forming apparatus according to claim 13 or 14,
    wherein the automatic changing of the pitch (K) at which the food pieces (m) are arranged is prohibited until formation of the aggregate (M) is completed.

16. A food aggregate forming apparatus for forming aggregates (M) of food pieces (m) by cutting a block of food (MF) from a leading end portion thereof and arranging a plurality of cut food pieces (m) such that the food pieces (m) at least partially overlap one another, the apparatus comprising:

    a thickness measurement means configured to measure a thickness (X) of the leading end portion of the block of food (MF) to be cut;
    a length calculation means configured to calculate a length (A) of a cut food piece (m) in an arrangement direction based on the thickness (X) measured by the thickness measurement means;
    a quantity changing means configured to automatically change a number of food pieces (m) forming each aggregate (M); and

a pitch changing means configured to automatically change a pitch (K) at which the food pieces (m) are arranged, wherein

the quantity changing means and the pitch changing means are configured to operate according to the length (A) calculated by the length calculation means so as to reduce variations in weight of the aggregates (M) and form each aggregate (M) such that a total length of the aggregate (M) is a preset length (E).

17. The food aggregate forming apparatus according to claim 16, wherein the block of food (MF) is cut from the leading end portion at substantially regular intervals to successively form the food pieces (m) of a substantially uniform thickness.

18. The food aggregate forming apparatus according to claim 16 or 17,
    wherein the automatic changing of the number of food pieces (m) and the pitch (K) at which the food pieces (m) are arranged is prohibited until formation of the aggregate (M) is completed.

19. The food aggregate forming apparatus according to any one of claims 13 to 18, further comprising:

    a first conveyor (96W) configured to convey an item;
    a second conveyor (305) configured to convey a container (G1) for storing an item, wherein the second conveyor (305) is arranged at a conveyance termination end portion of the first conveyor (96W) in a direction intersecting a conveyance direction of the first conveyor (96W) in a plan view;
    an image capturing means (CA) configured to capture an image of the item conveyed by the first conveyor (96W);
    a control means (400) configured to correct a target position for stopping the conveyance of the container (G1) by the second conveyor (305) based on a result of image capturing by the image capturing means (CA).

20. The food aggregate forming apparatus according to claim 19, wherein the image capturing means (CA) is configured to capture an image of the item on the first conveyor (96W) and a side edge portion of the first conveyor (96W), a deviation amount of the item with respect to the side edge portion of the first conveyor (96W) is obtained based on a result of the image capturing, and the target position for stopping the conveyance of the container (G1) by the second conveyor (305) is corrected based on the deviation amount.

**Amended claims under Art. 19.1 PCT**

1. [Amended] A food aggregate forming method for forming aggregates (M) of food pieces (m) by cutting a block of food (MF) from a leading end portion thereof to successively form a plurality of food pieces (m) and by arranging the food pieces (m) such that the food pieces (m) at least partially overlap one another, the method comprising:
   automatically changing a number of food pieces (m) forming each aggregate (M) according to a thickness (X) of the leading end portion of the block of food (MF) to be cut so as to reduce variations in weight of the aggregates (M).

2. [Amended] The food aggregate forming method according to claim 1, further comprising automatically changing the number of food pieces (m) forming each aggregate (M) according to a length (A) of the food piece (m) in an arrangement direction, the length (A) being calculated based on the thickness (X).

3. [Amended] The food aggregate forming method according to claim 1, further comprising: automatically changing [[the]] a pitch (K) at which the food pieces (m) are arranged according to [[a]] the thickness (X) of the leading end portion of the block of food (MF) to be cut.

4. [Amended] The food aggregate forming method according to claim 1, further comprising:

   cutting a block of food (MF) from a leading end portion thereof;
   successively forming the food pieces (m) folded at a preset position;
   calculating a length (A) of the folded food piece (m) in an arrangement direction from a thickness (X) of the leading end portion of the block of food (MF) to be cut and a folding position of the food pieces (m); and
   automatically changing the number of food pieces (m) forming each aggregate (M) according to the length (A).

5. [Amended] The food aggregate forming method according to any one of claims 1 to 4, further comprising cutting the block of food (MF) from the leading end portion at substantially regular intervals to successively form the food pieces (m) of a substantially uniform thickness.

6. [Amended] The food aggregate forming method according to any one of claims 1 to 5, further comprising prohibiting the automatic changing of the number of food pieces (m) forming each aggregate (M) until formation of the aggregate (M) is completed.

**7.** [Amended] A food aggregate forming method for forming aggregates (M) of food pieces (m) by cutting a block of food (MF) from a leading end portion thereof to successively form a plurality of food pieces (m) and by arranging the food pieces (m) such that the food pieces (m) at least partially overlap one another, the method comprising:

automatically changing a number of food pieces (m) forming each aggregate (M) according to a thickness (X) of the leading end portion of the block of food (MF) to be cut so as to reduce variations in weight of the aggregates (M) and form each aggregate (M) such that a total length of the aggregate (M) is a preset length (E).

**8.** [Amended] The food aggregate forming method according to claim 7, further comprising automatically changing the number of food pieces (m) forming each aggregate (M) according to a length (A) of the food piece (m) in an arrangement direction, the length (A) being calculated based on the thickness (X).

**9.** [Amended] The food aggregate forming method according to claim 7, further comprising: automatically changing [[the]] a pitch (K) at which the food pieces (m) are arranged according to [[a]] the thickness (X) of the leading end portion of the block of food (MF) to be cut.

**10.** [Amended] The food aggregate forming method according to claim 7, further comprising:

cutting a block of food (MF) from a leading end portion thereof;
successively forming the food pieces (m) folded at a preset position;
calculating a length (A) of the folded food piece (m) in an arrangement direction from a thickness (X) of the leading end portion of the block of food (MF) to be cut and a folding position of the food pieces (m); and
automatically changing the number of food pieces (m) forming each aggregate (M) according to the length (A).

**11.** [Amended] The food aggregate forming method according to any one of claims 7 to 10, further comprising cutting the block of food (MF) from the leading end portion at substantially regular intervals to successively form the food pieces (m) of a substantially uniform thickness.

**12.** [Amended] The food aggregate forming method according to any one of claims 7 to 11, further comprising prohibiting the automatic changing of the number of food pieces (m) forming each aggregate (M) until formation of the aggregate (M) is completed.

**13.** [Amended] A food aggregate forming apparatus for forming aggregates (M) of food pieces (m) by cutting a block of food (MF) from a leading end portion thereof to successively form a plurality of food pieces (m) and by arranging the food pieces (m) such that the food pieces (m) at least partially overlap one another, the apparatus comprising:

a thickness measurement means configured to measure a thickness (X) of the leading end portion of the block of food (MF) to be cut;
and a quantity changing means configured to automatically change a number of food pieces (m) forming each aggregate (M), wherein
the quantity changing means is configured to operate to automatically change the number of food pieces (m) forming each aggregate (M) according to a thickness (X) of the leading end portion of the block of food (MF) to be cut so as to form each aggregate (M) such that a total length of the aggregate (M) is a preset length (E).

**14.** The food aggregate forming apparatus according to claim 13, wherein the block of food (MF) is cut from the leading end portion at substantially regular intervals to successively form the food pieces (m) of a substantially uniform thickness.

**15.** [Amended] The food aggregate forming apparatus according to claim 13 or 14, wherein the automatic changing of the number of food pieces (m) forming each aggregate (M) is prohibited until formation of the aggregate (M) is completed.

**16.** [Amended] A food aggregate forming apparatus for forming aggregates (M) of food pieces (m) by cutting a block of food (MF) from a leading end portion thereof to successively form a plurality of food pieces (m) and by arranging the food pieces (m) such that the food pieces (m) at least partially overlap one another, the apparatus comprising:

a thickness measurement means configured to measure a thickness (X) of the leading end portion of the block of food (MF) to be cut; and
a quantity changing means configured to automatically change a number of food pieces (m) forming each aggregate (M), wherein
the quantity changing means is configured to operate to automatically change the number of food pieces (m) forming each aggregate (M) according to a thickness (X) of the leading end portion of the block of food (MF) to be cut so as to reduce variations in weight of the aggregates (M) and form each aggregate (M) such that a total length of the aggregate (M) is a preset length (E).

**17.** The food aggregate forming apparatus according to claim 16, wherein the block of food (MF) is cut from the leading end portion at substantially regular intervals to successively form the food pieces (m) of a substantially uniform thickness.

**18.** [Amended] The food aggregate forming apparatus according to claim 16 or 17, wherein the automatic changing of the number of food pieces (m) forming each aggregate (M) is prohibited until formation of the aggregate (M) is completed.

**19.** The food aggregate forming apparatus according to any one of claims 13 to 18, further comprising:

a first conveyor (96W) configured to convey an item;
a second conveyor (305) configured to convey a container (G1) for storing an item, wherein the second conveyor (305) is arranged at a conveyance termination end portion of the first conveyor (96W) in a direction intersecting a conveyance direction of the first conveyor (96W) in a plan view;
an image capturing means (CA) configured to capture an image of the item conveyed by the first conveyor (96W);
a control means (400) configured to correct a target position for stopping the conveyance of the container (G1) by the second conveyor (305) based on a result of image capturing by the image capturing means (CA).

**20.** The food aggregate forming apparatus according to claim 19, wherein the image capturing means (CA) is configured to capture an image of the item on the first conveyor (96W) and a side edge portion of the first conveyor (96W), a deviation amount of the item with respect to the side edge portion of the first conveyor (96W) is obtained based on a result of the image capturing, and the target position for stopping the conveyance of the container (G1) by the second conveyor (305) is corrected based on the deviation amount.

Fig.1

Fig.2

Fig.3

Fig.4

# Fig.5

EP 4 159 041 A1

Fig.6

Fig.7

Fig.8

Fig.9

Fig.10A

Fig.10B

# Fig.11

Fig.12

Fig.13

Fig.14

Fig.15

Fig.16

Fig.17

Fig.18

Fig.19

Fig.20

Fig.21

EP 4 159 041 A1

Fig.22B

Fig.22A

Fig.23

295E          295          295S

Fig.24A

297   298   252   296   295

CP1(PS3)                    (PS2)

202   250

Fig.24B

297   298   296   252   295

202   250

S

T = S × 2

Fig.25

## Fig.26

## Fig.27

## Fig.28

## Fig.29

Fig.30

Fig.31

Fig.32

Fig.33

Fig.34

Fig.35

Fig.36

Fig.37

## Fig.38

## Fig.39

# Fig.40

| | | |
|---|---|---|
| 401 | | 424D |
| 402 | | 425 |
| 403 | | 426 |
| 404 | | 427 |
| 405 | | 428 |
| 406 | | 429 |
| 407 | | 430 |
| 408 | | 431 |
| 409 | | 432 |
| 410 | | 433 |
| 411 | | 434 |
| 412 | | 435 |
| 413 | | 436 |
| 414 | | 437 |
| 415 | 400 | 438 |
| 416 | | 439 |
| 417 | | 440 |
| 418 | | 441 |
| 419 | | 442 |
| 420 | | 443 |
| 421 | | 313D |
| 422 | | 319S |
| 423 | | 319S |
| 424 | | 323S |
| CA | | |
| TSS | | |

# Fig.41

**EP 4 159 041 A1**

```
                    ( START )
STEP1                   |
        +-----------------------------+
        | Cutting unit driving start  |
        | Supply unit swinging start  |
        |   Conveyor driving start    |
        +-----------------------------+
STEP2                   |
              /                  \
            /     Meat             \            NO
          <      piece height        >---------------------+
            \   automatic setting   /                      |
              \       ON?         /                        |
STEP3           \     YES       /                          |
        +-----------------------------+                    |
        |  [Meat block height measurement]                 |
        | Meat block height measurement value:X            |
        +-----------------------------+                    |
STEP4                   |                                  |
        +---------------------------------------------+    |
        |        [Meat piece height calculation]      |    |
        | Temporary meat piece height calculation value: A  |
        |            Folding variable: Y              |    |
        |               A = X x Y                     |    |
        | The value of Y varies according to meat piece folding position. |
        |  Y = 0.5 when meat piece is folded at the center of height. |
        +---------------------------------------------+    |
STEP5                   |                        STEP21    |
 +------------------------------+    +------------------------------+
 |  [Arrangement mode manual setting]   |    |  [Arrangement mode manual setting]   |
 | Meat piece height calculation value:A |    | Meat piece height preset value:J |
 |            and               |    |            and               |
 | Arrangement length manual preset value:E |    | Arrangement length manual preset value:E |
 | Arrangement quantity manual preset value:F |    | Arrangement quantity manual preset value:F |
 +------------------------------+    +------------------------------+
STEP6                   |                        |
              /                  \                |
            /    Arrangement        \      NO     |
          <  quantity automatic control >---------+---+
            \        ON?            /              |   |
              \                   /                |   |
STEP7           \     YES       /                  |   |
 +----------------------------------------------+  |   |
 |  [Arrangement reference value automatic setting  |  |   |
 |      performed at automatic control ON time T0] |  |   |
 | Meat piece height calculated    Arrangement quantity |  |   |
 |    value at time T0: A0          manual preset value: F |  |   |
 |           ↓                          ↓          |  |   |
 | Substituted by meat piece height   Substituted by the arrangement |  |   |
 |  reference value: G and stored   quantity reference value H and stored |  |   |
 +----------------------------------------------+  |   |
STEP8                   |                          |   |
 +----------------------------------------------+  |   |
 |   [Arrangement quantity calculation]         |  |   |
 |      Calculated value = (G/A) x H            |  |   |
 |               ↓                              |  |   |
 |   Omit the figures after the decimal         |  |   |
 |   fractions of the calculated value          |  |   |
 |               ↓                              |  |   |
 | Obtain number of arranged pieces: I (integer)|  |   |
 +----------------------------------------------+  |   |
                        |                          |   |
                      ( 1 )                      ( 2 ) ( 3 )
```

# Fig.42

①

**STEP9**
[Arrangement pitch calculation]
Arrangement pitch:K
K= (E−A) / (I−1)

**STEP10**
Drive conveyor
Move by distance equal to K

**STEP11**
Drive cutting unit
Place one meat piece on conveyor

**STEP12**
Number of arranged pieces =I? —NO→
↓YES

**STEP13**
[Calculation of conveyor moving amount P for forming inter-aggregate space]
Moving amount for forming inter-aggregate space (inter-aggregate space) : P
Conveyor effective length: L
Number of aggregates: R
P = (L − E × R) / (R − 1)

**STEP14**
Advance conveyor rear end portion to above tray rear end portion

**STEP15**
Conveyor moving distance reached preset distance? —NO→
↓YES

**STEP16**
Retract conveyor rear end portion from above tray

( RETURN )

②

**STEP17**
[Arrangement pitch calculation]
Arrangement pitch:K
K= (E−A) / (F−1)

**STEP18**
Drive conveyor
Move by distance equal to K

**STEP19**
Drive cutting unit
Place one meat piece on conveyor

**STEP20**
Number of arranged pieces =F? —NO→
↓YES

③

**STEP22**
[Arrangement pitch calculation]
Arrangement pitch:K
K= (E−A) / (F−1)

# Fig.43

Fig.44

Fig.45

# Fig.46

START

STEP1
Cutting unit driving start
Supply unit swinging start
Conveyor driving start
Storing unit operation start

STEP2
Move conveyor by moving amount
for forming inter-aggregate space
(inter-aggregate space) P

STEP3
Tray stop
position automatic control
ON?
NO

YES
STEP4
Capture image of aggregate

STEP5
[Aggregate area centroid position obtainment]
Reference position for position measurement:
Conveyor left end
Area centroid position of left aggregate: CL
Area centroid position of right aggregate: CR

STEP7
[Tray target stop position
manual setting]
Left tray target stop position: ML
Right tray target stop position: MR

STEP6
[Tray target stop position obtainment]
Reference position for position measurement: Conveyor left end
• Conveyor lateral width: CW
• Distance from conveyor lateral width center position
  to area centroid position of left aggregate: DL
  $DL = CW/2 - CL$

• Distance from conveyor lateral width center position
  to area centroid position of right aggregate: DR
  $DR = CR - CW/2$

• Correction value for left tray target stop position: HL
• Attachment pitch of tray conveyor retaining plates: TP
• Tray lateral width: TW
• Deviation distance between center position of space between
  area centroid positions of left and right aggregates and tray
  initial preset position: ZD
• Manual fine adjustment correction distance: BH
  $HL = TP - (TW/2 + DL + ZD + BH)$

• Correction value for right tray target stop position: HR
  $HR = DR + ZD + BH - TW/2$

• Left tray target stop position: ML
• Left tray initial preset stop position: SL
  $ML = SL + HL$

• Right tray target stop position: MR
• Right tray initial preset stop position: SR
  $MR = SR + HR$

①

# Fig.47

STEP8 Supply tray

STEP9 ML < MR?  — NO →

YES

STEP10 Drive tray conveyor

STEP11 [Left tray position detection]
Left tray detection position: XL

STEP12 XL = ML?  — NO →

YES

STEP13 Stop tray conveyor

STEP14 Lift left tray

STEP15 Drive tray conveyor

STEP16 [Right tray position detection]
Right tray detection position: XR

STEP17 XR = MR?  — NO →

YES

STEP18 Stop tray conveyor

STEP19 Lift right tray

STEP21 Drive tray conveyor

STEP22 [Right tray position detection]
Right tray detection position: XR

STEP23 XR = MR?  — NO →

YES

STEP24 Stop tray conveyor

STEP25 Lift right tray

STEP26 Drive tray conveyor

STEP27 [Left tray position detection]
Left tray detection position: XL

STEP28 XL = ML?  — NO →

YES

STEP29 Stop tray conveyor

STEP30 Lift left tray

STEP20 Drive and retract tray
conveyor by preset distance

( 2 )

# Fig.48

```
                              ( 2 )
        STEP31
      ┌─────────────────────────────────────┐
      │ Retract conveyor termination end portion │
      └─────────────────────────────────────┘
        STEP32
      ┌─────────────────────────────────────┐
      │   Start increasing receiving plate inner │
      │ end portion space to intermediate space P2 │
      └─────────────────────────────────────┘
        STEP33
      ┌─────────────────────────────────────┐
      │ Wait at intermediate space P2 for time Tm │
      └─────────────────────────────────────┘
            STEP34
          ┌─────────────────────────────────┐
          │ Start increasing to maximum space P3 │◄──────────┐
          └─────────────────────────────────┘             │
            STEP35                                         │
                    ◇                                      │
            Receiving                                      │
      plate inner end portion space          NO ───────────┘
        reached maximum space P3?
                    ◇
            STEP36        YES
          ┌─────────────────────────────────┐
          │ Wait at maximum space P3 for time Tg │
          └─────────────────────────────────┘
            STEP37
      ┌─────────────────────────────────────┐
      │   Start decreasing receiving plate inner │
      │  end portion space to minimum space P1 │
      └─────────────────────────────────────┘
        STEP38
      ┌─────────────────────────────────────┐
      │ Start advancing conveyor termination end portion │
      └─────────────────────────────────────┘
                 (  RETURN  )
```

# Fig.49

## INTERNATIONAL SEARCH REPORT

| | International application No. |
|---|---|
| | PCT/JP2021/020329 |

### A. CLASSIFICATION OF SUBJECT MATTER
A22C 17/00(2006.01)i; B26D 3/28(2006.01)i; B26D 7/32(2006.01)i; B65B 5/06(2006.01)i; B65G 47/30(2006.01)i; B65G 47/34(2006.01)i; B65G 47/53(2006.01)i
FI:      A22C17/00; B26D3/28 610Q; B26D7/32 A.; B65B5/06; B65G47/30 D; B65G47/34; B65G47/53 G

According to International Patent Classification (IPC) or to both national classification and IPC

### B. FIELDS SEARCHED

Minimum documentation searched (classification system followed by classification symbols)
A22C17/00; B26D3/28; B26D7/32; B65B5/06; B65G47/30; B65G47/34; B65G47/53

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 3-73294 A (THURNE ENGINEERING CO., LTD.) 28 March 1991 (1991-03-28) page 4, upper right column, line 10 to lower left column, line 15, page 5, lower left column, line 17 to page 6, upper right column, line 2, fig. 1, 4A-5 | 1-3, 5-6, 13-15 |
| Y | | 4, 7-12, 16-20 |
| Y | JP 2019-64808 A (NIPPON CAREER INDUSTRY CO., LTD.) 25 April 2019 (2019-04-25) paragraphs [0009]-[0018], fig. 1-4 | 4, 10, 19-20 |
| Y | JP 2006-78469 A (WATANABE FOODMACH CO., LTD.) 23 March 2006 (2006-03-23) paragraphs [0021], [0025], fig. 5, 7 | 7-12, 16-18 |

☒ Further documents are listed in the continuation of Box C.      ☒ See patent family annex.

| | |
|---|---|
| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 July 2021 (07.07.2021) | 20 July 2021 (20.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/020329 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | US 2018/0118388 A1 (GRASSELLI S.P.A.) 03 May 2018 (2018-05-03) paragraphs [0058], [0066], [0138]-[0146], [0179]-[0195], fig. 1-4C, 10 | 19-20 |

Form PCT/ISA/210 (continuation of second sheet) (January 2015)

| Patent Documents referred in the Report | Publication Date | Patent Family | Publication Date |
|---|---|---|---|
| JP 3-73294 A | 28 Mar. 1991 | US 5125303 A<br>column 3, line 45 to<br>column 4, line 8,<br>column 5, line 48 to<br>column 6, line 25,<br>fig. 1, 4A-5<br>EP 398603 A1 | |
| JP 2019-64808 A | 25 Apr. 2019 | (Family: none) | |
| JP 2006-78469 A | 23 Mar. 2006 | (Family: none) | |
| US 2018/0118388 A1 | 03 May 2018 | (Family: none) | |

INTERNATIONAL SEARCH REPORT
Information on patent family members

International application No.

PCT/JP2021/020329

Form PCT/ISA/210 (patent family annex) (January 2015)

**REFERENCES CITED IN THE DESCRIPTION**

**Patent documents cited in the description**

- JP 4264518 B
- JP 5875156 B
- JP 4942696 B